# EUROPEAN PATENT APPLICATION

(11) **EP 4 394 588 A1**
(43) Date of publication of application: **03.07.2024**
(21) Application number: 23195408.2
(22) Date of filing: 05.09.2023
(51) Int. Cl.: G06F 9/30

(54) **INSTRUCTIONS AND SUPPORT FOR CONDITIONAL COMPARISON AND TEST**

(30) Priority: 30.12.2022 US 202218091628
(71) Applicant: Intel Corporation, Santa Clara, CA 95054 (US)
(72) Inventor: AGRON, Jason, San Jose, CA 95112 (US); CHOU, Ching-Tsun, Palo Alto, CA 94306 (US); WINKEL, Sebastian, Los Altos, CA 94024 (US); SONDAG, Tyler, Beaverton, OR 97007 (US); SHEFFIELD, David, Portland, OR 97221 (US); YADLAPALLI, Leela Kamalesh, Cupertino, CA 95014 (US); WANG, Yipeng, Portland, OR 97229 (US)
(74) Representative: Samson & Partner Patentanwälte mbB

(57) **Abstract**

Techniques for conditional test or comparison using a single instruction are described. An example instruction includes one or more fields to identify a first source operand location, one or more fields to identify a first source operand location, and an opcode to indicate execution circuitry is to conditionally perform a comparison of data from the identified first source operand to the identified second source operand based at least in part on an evaluation of a source condition code and update a flags register, wherein a payload of the prefix is to provide most significant bits to identify at least one of the first and second source operand locations.

## Description

### BACKGROUND

In some computer architectures, prefixes are used to modify instructions. Prefixes may provide information such as overrides (such as address size, segment, or operand size), operand sizes, branch hints, etc.

### BRIEF DESCRIPTION OF DRAWINGS

Various examples in accordance with the present disclosure will be described with reference to the drawings, in which:
FIG. 1 illustrates examples of an instruction format.
FIG. 2 illustrates examples of the addressing information field.
FIG. 3 illustrates an example of a prefix.
FIGS. 4(A)-(D) illustrate examples of how the R, X, and B fields of the REX2 are used.
FIGS. 5(A)-(D) examples of a prefix.
FIG. 6 illustrates an example method to process a PUSH instruction.
FIG. 7 illustrates examples of push instruction execution.
FIG. 8 illustrates an example an example method to process a PUSH2 instruction.
FIG. 9 illustrates an example method to process a PUSH instruction.
FIG. 10 illustrates examples of pop instruction execution.
FIG. 11 illustrates an example method to process a POP2 instruction.
FIG. 12 illustrates an example method to process a POP instruction.
FIG. 13 illustrates examples of a EVEX2 prefix to support CFCMOV or CMOV.
FIG. 14(A) illustrates examples of execution of a CFCMOVcc reg, r/m instruction.
FIG. 14(B) illustrates an example execution of a CFCMOVcc r/m, reg instruction.
FIG. 14(C) illustrates examples of execution of a CFCMOVcc ndd, reg, r/m or CMOVcc ndd, reg, r/m instruction.
FIG. 15 illustrates an example method to process a CFCMOVcc instruction.
FIG. 16 illustrates an example method to process a CFCMOVcc or CMOVcc instruction.
FIG. 17(A) illustrates an example of EVEX2 for CCMP and/or CTEST where the SCC and DCC are encoded in the prefix.
FIG. 17(B) illustrates an example of EVEX2 for CCMP and/or CTEST where neither the SCC nor DCC is encoded in the prefix.
FIG. 17(C) illustrates an example of EVEX2 for CCMP and/or CTEST where the SCC is encoded in the prefix.
FIG. 17(D) illustrates an example of EVEX2 for CCMP and/or CTEST where the DCC is encoded in the prefix.
FIG. 18 illustrates examples of execution of a CCMPcc DCC, R/M, REG, SCC or CTESTcc DCC, R/M, REG, SCC instruction.
FIG. 19 illustrates an example method to process a CCMPcc instruction.
FIG. 20 illustrates an example method to process a CTESTcc instruction.
FIG. 21 illustrates examples of computing hardware to at least process one more of the instructions.
FIG. 22 illustrates an example computing system.
FIG. 23 illustrates a block diagram of an example processor and/or System on a Chip (SoC) that may have one or more cores and an integrated memory controller.
FIG. 24 is a block diagram illustrating a computing system 2400 configured to implement one or more aspects of the examples described herein.
FIG. 25A illustrates examples of a parallel processor.
FIG. 25B illustrates examples of a block diagram of a partition unit.
FIG. 25C illustrates examples of a block diagram of a processing cluster within a parallel processing unit
FIG. 25D illustrates examples of a graphics multiprocessor in which the graphics multiprocessor couples with the pipeline manager of the processing cluster.
FIGS. 26A-26C illustrate additional graphics multiprocessors, according to examples.
FIG. 27 shows a parallel compute system 2700, according to some examples.
FIGS. 28A-28B illustrate a hybrid logical/physical view of a disaggregated parallel processor, according to examples described herein.
FIG. 29(A) is a block diagram illustrating both an example in-order pipeline and an example register renaming, out-of-order issue/execution pipeline according to examples.
FIG. 29(B) is a block diagram illustrating both an example in-order architecture core and an example register renaming, out-of-order issue/execution architecture core to be included in a processor according to examples.
FIG. 30 illustrates examples of execution unit(s) circuitry, such as execution unit(s) circuitry.
FIG. 31 is a block diagram of a register architecture according to some examples.
FIG. 32 illustrates examples of a first prefix.
FIGS. 33(A)-(D) illustrate examples of how the R, X, and B fields of the first prefix are used.
FIGS. 34(A)-(B) illustrate examples of a second prefix.
FIG. 35 illustrates examples of a third prefix.
FIGS. 36A-36B illustrate thread execution logic including an array of processing elements employed in a graphics processor core according to examples described herein.
FIG. 37 illustrates an additional execution unit, according to an example.
FIG. 38 is a block diagram illustrating a graphics processor instruction formats 3800 according to some examples.
FIG. 39 is a block diagram of another example of a graphics processor.
FIG. 40A is a block diagram illustrating a graphics processor command format according to some examples.
FIG. 40B is a block diagram illustrating a graphics processor command sequence according to an example.
FIG. 41 is a block diagram illustrating the use of a software instruction converter to convert binary instructions in a source ISA to binary instructions in a target ISA according to examples.
FIG. 42 is a block diagram illustrating an IP core development system 4200 that may be used to manufacture an integrated circuit to perform operations according to some examples.

### DETAILED DESCRIPTION

In some processors evolutions usually involved prefixes. Past prefixes sought to only include minimal payload extensions, in the form of extra register identifier (ID) bits, but nothing else. Detailed herein are examples of prefixes that enhance density encoding opcode map information to improve code density (e.g., saving an entire byte, for the 0x0F escape byte). In addition, examples detailed herein use payload bits for new functionalities such as new data destination (NDD), addressing of 32 general purpose registers, and/or flags suppression (NF). These features may be a part of advanced performance extensions (APX). In some examples, APX only works in a 64-bit execution mode.

In some examples, usage of the described prefixes is defined in one or more MSR (e.g., XCR0.APX and XFD.APX). New fields in XCRO include a APX which may be state component 19. When set, this enables APX ISA via use of APX-prefixes in 64-bit mode, and the XSAVE feature set can be used to manage APX.

| **XCR0.APX** | **XFD.APX** | **Response when executing an APX instruction** |
|---|---|---|
| 0 | 0 | Fault (UD) |
| 0 | 1 | Fault (UD) - although asserting XFD bits is only possible if XCR0 bits are set |
| 1 | 0 | Normal execution |
| 1 | 1 | Fault (NM) |

In some examples, a new set of control bits will be used in a MSR (e.g., IA32 SPEC CTRL MSR) to offer per logical processor (per-LP) overrides for speculation controls on New Conditional Instructions (NCls). Example control bits in IA32 SPEC CTRL include: NCI SE DISABLE USER: When 1, disables NCI-style prediction behavior for CPL3. Any speculation enable bits in instructions are interpreted as cleared (no speculation enable) in CPL3 and NCI SE DISABLE SUPERVISOR: When 1, disables NCI-style prediction behavior for CPL0/1/2. Any speculation enable bits in instructions are interpreted as cleared (no speculation enable) in CPL0/1/2.

These features allow for the same amount of work to be done in less instructions and less loads/stores. Load/store elimination removes relatively expensive memory operations in favor of a registerized state. It also eliminates load dependency change and eliminates pressure on load and store buffers which should decrease allocation stalls. Examples of instructions that utilize the described prefixes are detailed herein.

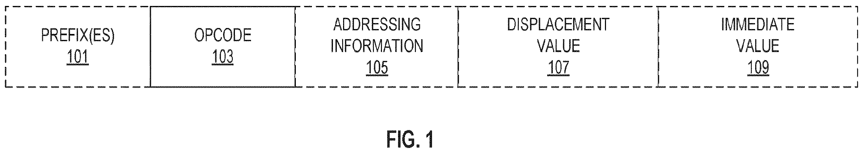

FIG. 1 illustrates examples of an instruction format. As illustrated, an instruction may include multiple components including, but not limited to, one or more fields for: one or more prefixes 101, an opcode 103, addressing information 105 (e.g., register identifiers, memory addressing information, etc.), a displacement value 107, and/or an immediate value 109. Note that some instructions utilize some or all the fields of the format whereas others may only use the field for the opcode 103. In some examples, the order illustrated is the order in which these fields are to be encoded, however, it should be appreciated that in other examples these fields may be encoded in a different order, combined, etc.

The prefix(es) field(s) 101, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 103 is used to at least partially define the operation to be performed upon a decoding of the instruction. In some examples, a primary opcode encoded in the opcode field 103 is one, two, or three bytes in length. In other examples, a primary opcode can be a different length. An additional 3-bit opcode field is sometimes encoded in another field.

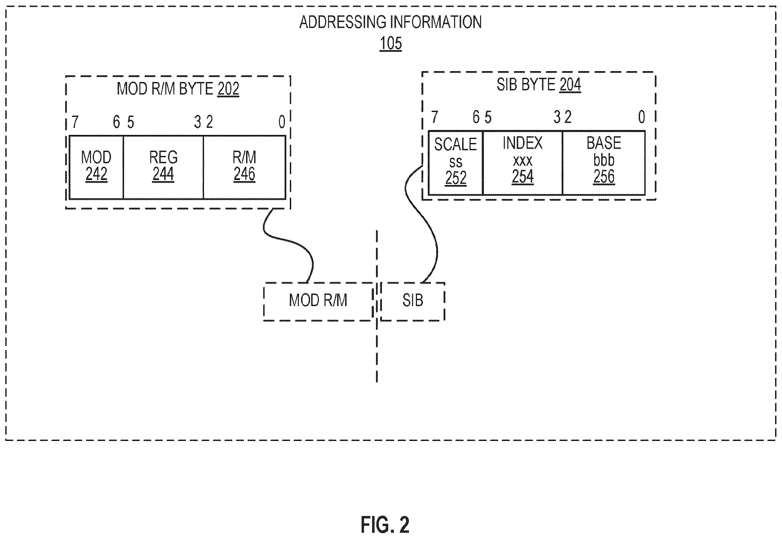

The addressing information field 105 is used to address one or more operands of the instruction, such as a location in memory or one or more registers. FIG. 2 illustrates examples of the addressing information field 105. In this illustration, an optional MOD R/M byte 202 and an optional Scale, Index, Base (SIB) byte 204 are shown. The MOD R/M byte 202 and the SIB byte 204 are used to encode up to two operands of an instruction, each of which is a direct register or effective memory address. Note that both of these fields are optional in that not all instructions include one or more of these fields. The MOD R/M byte 202 includes a MOD field 242, a register (reg) field 244, and R/M field 246.

The content of the MOD field 242 distinguishes between memory access and non-memory access modes. In some examples, when the MOD field 242 has a binary value of 11 (11b), a register-direct addressing mode is utilized, and otherwise a register-indirect addressing mode is used.

The register field 244 may encode either the destination register operand or a source register operand or may encode an opcode extension and not be used to encode any instruction operand. The content of register field 244, directly or through address generation, specifies the locations of a source or destination operand (either in a register or in memory). In some examples, the register field 244 is supplemented with an additional bit from a prefix (e.g., prefix 101) to allow for greater addressing.

The R/M field 246 may be used to encode an instruction operand that references a memory address or may be used to encode either the destination register operand or a source register operand. Note the R/M field 246 may be combined with the MOD field 242 to dictate an addressing mode in some examples.

The SIB byte 204 includes a scale field 252, an index field 254, and a base field 256 to be used in the generation of an address. The scale field 252 indicates a scaling factor. The index field 254 specifies an index register to use. In some examples, the index field 254 is supplemented with an additional bit from a prefix (e.g., prefix 101) to allow for greater addressing. The base field 256 specifies a base register to use. In some examples, the base field 256 is supplemented with an additional bit from a prefix (e.g., prefix 101) to allow for greater addressing. In practice, the content of the scale field 252 allows for the scaling of the content of the index field 254 for memory address generation (e.g., for address generation that uses 2^{scale ∗} index + base).

Some addressing forms utilize a displacement value to generate a memory address. For example, a memory address may be generated according to 2^{scale ∗} index + base + displacement, index^{∗}scale + displacement, r/m + displacement, instruction pointer (RIP/EIP) + displacement, register + displacement, etc. The displacement may be a 1-byte, 2-byte, 4-byte, etc. value. In some examples, the displacement field 107 provides this value. Additionally, in some examples, a displacement factor usage is encoded in the MOD field of the addressing information field 105 that indicates a compressed displacement scheme for which a displacement value is calculated and stored in the displacement field 107.

In some examples, the immediate value field 109 specifies an immediate value for the instruction. An immediate value may be encoded as a 1-byte value, a 2-byte value, a 4-byte value, etc.

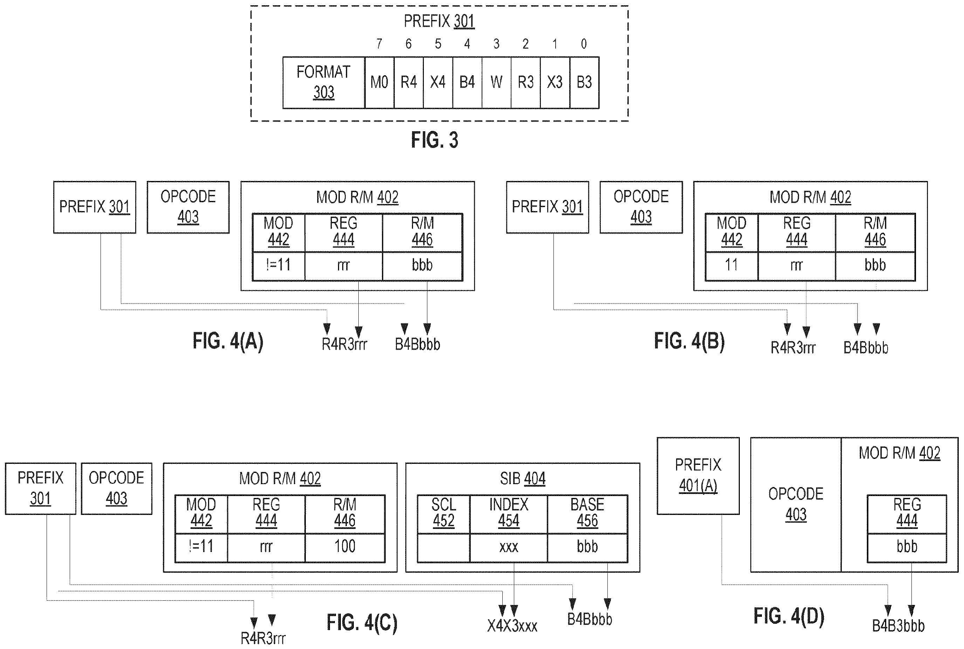

FIG. 3 illustrates an example of a prefix. In some examples, the prefix 301 supports addressing 32 general purpose registers. In some examples, this prefix is called REX2.

In some examples, one or more of instructions for increment, decrement, negation, addition, subtraction, AND, OR, XOR, shift arithmetically left, shift logically left, shift arithmetically right, shift logically right, rotate left, rotate right, multiply, divide, population count, leading zero count, total zero count, etc. support flag suppression.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, leading zero count, total zero count, unsinged integer addition of two operands with carry flag, unsinged integer addition of two operands with overflow flag, conditional move, pop, push, etc. support REX2.

As shown, REX2 has a format field 303 in a first byte and 8 bits in a second byte (e.g., a payload byte). In some examples, the format field 303 has a value of 0xD5. In some examples, 0xD5 encodes an ASCIII Adjust AX Before Division (AAD) instruction in a 32-bit mode. In those examples, in a 64-bit mode it is used as the first byte of the prefix of FIG. 3.

The payload byte includes several bits.

Bit position 0 (B3) may modify the base in the MOD R/M R/M field 4146 or the SIB byte base field 2856; or it may modify the opcode register field used for accessing general purpose registers (e.g., general purpose registers 2625).

Bit position 1 (X3) may modify the SIB byte index field 2854.

Bit position 2 (R3) may be used as an extension of the MOD R/M reg field 4144 and may be used to modify the MOD R/M reg field 4144 when that field encodes a general-purpose register, a 64-bit packed data register (e.g., an SSE register), or a control or debug register. R3 may be ignored when MOD R/M byte 2802 specifies other registers or defines an extended opcode.

Bit position 3 (W) can be used to determine an operand size, but may not solely determine operand width. As such, when W = 0, the operand size is determined by a code segment descriptor (CS.D) and when W = 1, the operand size is 64-bit.

Bit position 4 (B4) may further (along with B3) modify the base in the MOD R/M R/M field 4146 or the SIB byte base field 2856; or it may modify the opcode register field used for accessing general purpose registers (e.g., general purpose registers 2625).

Bit position 5 (X4) may further (along with X3) modify the SIB byte index field 2854.

Bit position 6 (R4) may further (along with R3) be used as an extension of the MOD R/M reg field 4144 and may be used to modify the MOD R/M reg field 4144 when that field encodes a general-purpose register, a 64-bit packed data register (e.g., an SSE register), or a control or debug register.

In some examples, bit position 7 (M0) indicates an opcode map (e.g., 0 or 1).

R3, R4, X3, X4, B3, and B4 allow for the addressing of 32 GPRs. That is an R, X or B register identifier is extended by the R3, X3, and B3 and R4, X4, and B4 bits in a REX2 prefix when and only when it encodes a GPR register. In some examples, the vector (or any other type of) registers are not encoded using those bits.

In some examples, REX2 must be the last prefix and the byte following it is interpreted as the main opcode byte in the opcode map indicated by M0. The 0x0F escape byte is neither needed nor allowed. In some examples, prefixes which may precede the REX2 prefix are LOCK (0xF0), REPE/REP/REPZ (0xF3), REPNE/REPNZ (0xF2), operand-size override (0x66), address-size override (0x67), and segment overrides.

In general, when any of the bits in REX2 R4, X4, B4, R3, X3, and B3 are not used they are ignored. For example, when there is no index register, X4 and X3 are both ignored. Similarly, when the R, X, or B register identifier encodes a vector register, the R4, X4, or B4 bit is ignored. There are, however, in some examples, one or two exceptions to this general rule: 1) an attempt to access a non-existent control register or debug register will trigger #UD and 2) instructions with opcodes 0x50-0x5F (including POP and PUSH) use R4 to encode a push-pop acceleration hint.

FIGS. 4(A)-(D) illustrate examples of how the R, X, and B fields of the REX2 are used. In some examples, the MOD R/M byte 402 and the SIB byte 404 are used to encode up to two operands of an instruction, each of which is a direct register or effective memory address. Note that both of these fields are optional in that not all instructions include one or more of these fields. The MOD R/M byte 402 includes a MOD field 442, a register (reg) field 444, and R/M field 446.

In some examples, the content of the MOD field 442 distinguishes between memory access and non-memory access modes. In some examples, when the MOD field 442 has a binary value of 11 (11b), a register-direct addressing mode is utilized, and otherwise a register-indirect addressing mode is used.

In some examples, the register field 444 may encode either the destination register operand or a source register operand or may encode an opcode extension and not be used to encode any instruction operand. The content of register field 444, directly or through address generation, specifies the locations of a source or destination operand (either in a register or in memory). In some examples, the register field 444 is supplemented with an additional bit from a prefix (e.g., prefix 2701) to allow for greater addressing.

In some examples, the R/M field 446 may be used to encode an instruction operand that references a memory address or may be used to encode either the destination register operand or a source register operand. Note the R/M field 446 may be combined with the MOD field 442 to dictate an addressing mode in some examples.

In some examples, the SIB byte 404 includes a scale field 452, an index field 454, and a base field 456 to be used in the generation of an address. The scale field 452 indicates a scaling factor. The index field 454 specifies an index register to use. In some examples, the index field 454 is supplemented with an additional bit from a prefix (e.g., prefix 2701) to allow for greater addressing. The base field 456 specifies a base register to use. In some examples, the base field 456 is supplemented with an additional bit from a prefix to allow for greater addressing. In practice, the content of the scale field 452 allows for the scaling of the content of the index field 454 for memory address generation (e.g., for address generation that uses 2^{scale ∗} index + base).

Some addressing forms utilize a displacement value to generate a memory address. For example, a memory address may be generated according to 2^{scale ∗} index + base + displacement, index^{∗}scale + displacement, r/m + displacement, instruction pointer (RIP/EIP) + displacement, register + displacement, etc. The displacement may be a 1-byte, 2-byte, 4-byte, etc. value. In some examples, a displacement field provides this value.

FIG. 4(A) illustrates R3 and R4 and B3 and B4 from the REX2 prefix 301(A) being used to extend the reg field 444 and R/M field 446 of the MOD R/M byte 402 respectively when the SIB byte 4 04 is not used for memory addressing.

FIG. 4(B) illustrates R3 and R4 and B3 and B4 from the REX2 prefix 301(A) being used to extend the reg field 444 and R/M field 446 of the MOD R/M byte 402 when the SIB byte 404 is not used (register-register addressing).

FIG. 4(C) illustrates R3, R4, X3, X4, B3, and B4 from the REX2 prefix 301(A) being used to extend the reg field 444 of the MOD R/M byte 402 and the index field 454 and base field 456 when the SIB byte 4 04 being used for memory addressing.

FIG. 4(D) illustrates B3 and B4 from the REX2 prefix 301(A) being used to extend the reg field 444 of the MOD R/M byte 402 when a register is encoded in the opcode 2703.

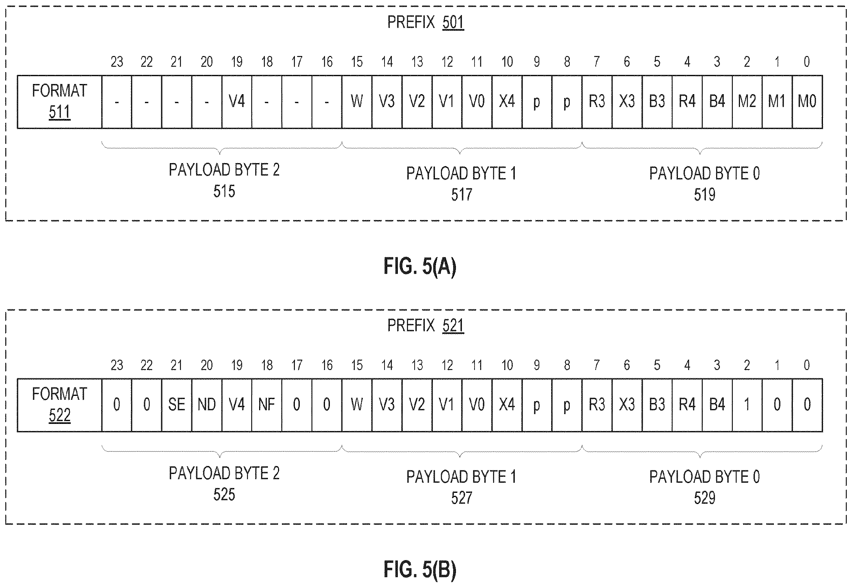

FIGS. 5(A)-(D) illustrate examples of a prefix. FIG. 5(A) illustrates a first variant of a prefix. In some examples, the prefix 501 is an example of an EVEX2 prefix. The EVEX2 prefix 501 is a four-byte prefix.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, pop, push, leading zero count, total zero count, unsinged integer addition of two operands with carry flag, unsinged integer addition of two operands with overflow flag, conditional move, etc. support EVEX2.

For these instructions there it should be noted that NDD may or may not be used depending on the settings of the prefix of those instructions. In some examples, one or more of: AESDEC128KL, AESDEC256KL, AESDECWIDE128KL, AESDECWIDE256KL, AESENC128KL, AESENC256KL, AESENCWIDE128KL, AESENCWIDE256KL, AOR, AXCHG, AXCHGADD, AXCHGAND, AXCHGDEC, AXCHGINC, AXCHGOR, AXCHGXOR, AXOR, CLWRITE, CRC32, CRC32, ENCODEKEY128, ENCODEKEY256, ENQCMD, ENQCMDS, INVEPT, INVPCID, INVVPID, MOVBE, MOVDIR64B, MOVDIRI, MOVGET, MOVGET64B, SHA1MSG1, SHA1MSG2, SHA1NEXTE, SHA256MSG1, SHA256MSG2, SHA256RNDS2, URDMSR, UWRMSR, WRSSD, WRSSQ, WRUSSD, WRUSSQ, QUCTRLZ, QUMEASZ, QUROTX, QUROTY, QUROTZ, QURST, SHA1RNDS4, KMOVB, KMOVD, KMOVQ, KMOVW, ANDN, BEXTR, BLSI, BLSMSK, BLSR, BZHI, CMPBEXADD, CMPBXADD, CMPLEXADD, CMPLXADD, CMPNBEXADD, CMPNBXADD, CMPNLEXADD, CMPNLXADD, CMPNOXADD, CMPNPXADD, CMPNSXADD, CMPNZXADD, CMPOXADD, CMPPXADD, CMPSXADD, CMPZXADD, MULX, PDEP, PEXT, SARX, SHLX, SHRX, RORX, URDMSR, and/or UWRMSR may use the EVEX2 prefix.

The extended EVEX prefix is an extension of the current 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 501 can encode 32 vector registers (e.g., 128-bit, 256-bit, and 512-bit registers) in 64-bit mode and/or 32 general purpose registers.

The EVEX2 prefix 501 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 501 is a format field 511 that has a value, in some examples, of 0x62. Subsequent bytes are referred to as payload bytes 515-519 and collectively form a 24-bit value of P[23:0] providing specific capability in the form of one or more fields (detailed herein).

Bits 0:2 (M0, M1, and M2) of a first payload byte (payload byte 0) 519 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bit 19 can be combined with bits 14:11 to encode a register in a new data destination.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 501 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | Destination or Source |
| RM | B4 | B3 | MOD R/M | GPR | Destination or Source |
| | | | R/M | | |
| BASE | B4 | B3 | MOD R/M | GPR | Memory addressing |
| | | | R/M | | |
| INDEX | X4 | X3 | SIB.index | GPR | Memory addressing |

FIG. 5(B) illustrates a second variant of a prefix. In some examples, the prefix 521 is an example of an EVEX2 prefix. The EVEX2 prefix 521 is a four-byte prefix.

The EVEX2 prefix 521 can encode at least 32 vector registers (e.g., 128-bit, 256-bit, and 512-bit registers) in 64-bit mode and/or up to 64 general purpose registers.

The EVEX2 prefix 521 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 521 is a format field 522 that has a value, in one example, of 0x62. Subsequent bytes are referred to as payload bytes 555-529 and collectively form a 24-bit value of P[23:0] providing specific capability in the form of one or more fields (detailed herein).

Bits 0:1 are set to zero and bit 2 is set to 1.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated. In some examples, instructions for increment, decrement, negation, addition, subtraction, AND, OR, shift arithmetically left, shift logically left, shift arithmetically right, shift logically right, rotate left, rotate right, multiply, divide, population count, leading zero count, total zero count, etc. support flag suppression.

Bit 19 can be combined with bits 14:11 to encode a register in a new data destination.

Bit 20 indicates a NDD in some examples. In some examples, if EVEX2.ND = 0, there is no NDD and EVEX2.[V4,V3,V2,V1,V0] must be all zero. In some examples, if EVEX2.ND = 1, there is an NDD whose register ID is encoded by EVEX2.[V4,V3,V2,V1,V0]. Although some instructions do not support NDD, the EVEX2.ND bit may be used to control whether its destination register has its upper bits (namely, bits [63:operand size]) zeroed when operand size is 8-bit or 16-bit. That is, if EVEX2.ND = 1, the upper bits are always zeroed; otherwise, they keep the old values when operand size is 8-bit or 16-bit. For these instructions, EVEX2.[V4,V3,V2,V1,V0] is all zero.

Bit 21 is used in some examples to indicate exceptions are to be suppressed.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 521 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | Destination or Source |
| RM | B4 | B3 | MOD R/M | GPR | Destination or Source |
| | | | R/M | | |
| BASE | B4 | B3 | MOD R/M | GPR | Memory addressing |
| | | | R/M | | |
| INDEX | X4 | X3 | SIB.index | GPR | Memory addressing |

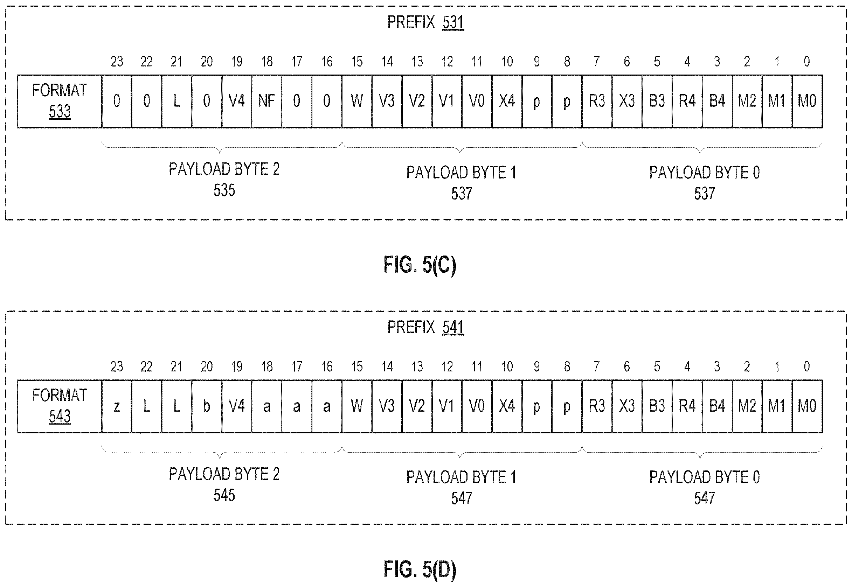

FIG. 5(C) illustrates a first variant of a prefix. In some examples, the prefix 531 is an example of an EVEX2 prefix. The EVEX2 prefix 531 is a four-byte prefix.

The extended EVEX prefix is an extension of the current 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 531 can encode 32 vector registers (e.g., 128-bit, 256-bit, and 512-bit registers) in 64-bit mode and/or 32 general purpose registers.

The EVEX2 prefix 531 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 531 is a format field 533 that has a value, in some examples, of 0x62. Subsequent bytes are referred to as payload bytes 535-539 and collectively form a 24-bit value of P[23:0] providing specific capability in the form of one or more fields (detailed herein).

Bits 0:2 (M0, M1, and M2) of a first payload byte (payload byte 0) 539 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated.

Bit 19 can be combined with bits 14:11 to encode a register in a new data destination.

Bits 20, 22, and 23 are zero.

Bit 21 is a length specifier field.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 531 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | Destination or Source |
| RM | B4 | B3 | MOD R/M | GPR | Destination or Source |
| | | | R/M | | |
| BASE | B4 | B3 | MOD R/M | GPR | Memory addressing |
| | | | R/M | | |
| INDEX | X4 | X3 | SIB.index | GPR | Memory addressing |

FIG. 5(D) illustrates a second variant of a prefix. In some examples, the prefix 541 is an example of an EVEX2 prefix. The EVEX2 prefix 541 is a four-byte prefix.

The EVEX2 prefix 541 can encode at least 32 vector registers (e.g., 128-bit, 256-bit, and 512-bit registers) in 64-bit mode and/or up to 64 general purpose registers. I

The EVEX2 prefix 541 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 541 is a format field 543 that has a value, in one example, of 0x62. Subsequent bytes are referred to as payload bytes 545-549 and collectively form a 24-bit value of P[23:0] providing specific capability in the form of one or more fields (detailed herein).

Bits 0:2 (M0, M1, and M2) of a first payload byte (payload byte 0) 539 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:18 specify the index of a register in the opmask (writemask) registers (e.g., writemask/predicate registers 2615). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

Bit 19 can be combined with bits 14:11 to encode a register in a new data destination.

Bit 20 encodes multiple functionalities, which differ across different classes of instructions and can affect the meaning of the vector length/ rounding control specifier field bits 21:22]).

Bit 23 indicates support for merging-writemasking (e.g., when set to 0) or support for zeroing and merging-writemasking (e.g., when set to 1).

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 521 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | Destination or Source |
| RM | B4 | B3 | MOD R/M | GPR | Destination or Source |
| | | | R/M | | |
| BASE | B4 | B3 | MOD R/M | GPR | Memory addressing |
| | | | R/M | | |
| INDEX | X4 | X3 | SIB.index | GPR | Memory addressing |

The table below illustrates the new prefixes and how they differ from at least one legacy format. Note that OP is an operation to be performed.

| **Legacy Format** | **APX REX2 (No-NDD) Prefix** | **APX EVEX2 (NDD) Prefix** |
|---|---|---|
| OP R/M, Reg | OP R/M, Reg | V = OP R/M, Reg |
| OP Reg, R/M | OP Reg, R/M | V = OP Reg, R/M |
| OP R/M, Imm | OP R/M, Imm | V = OP R/M, Imm |
| OP R/M | OP R/M | V = OP R/M |

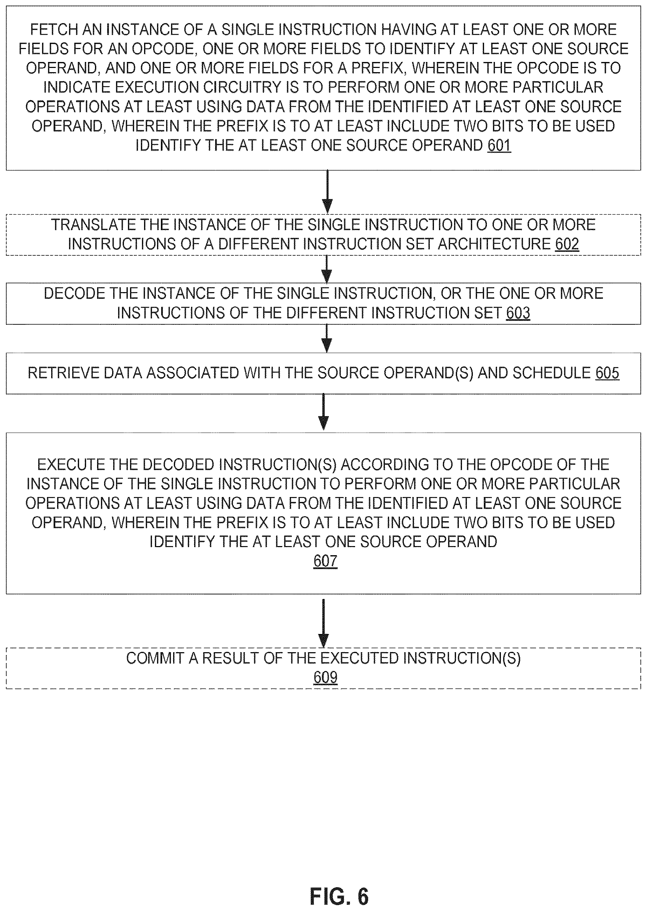

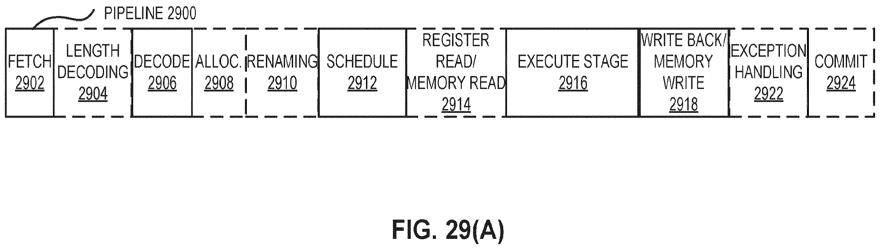

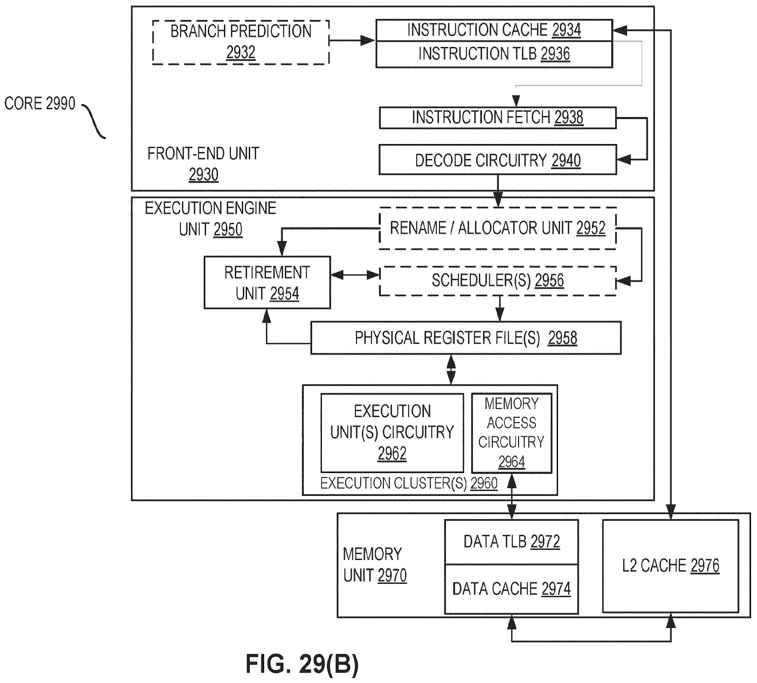

FIG. 6 illustrates an example method to process a PUSH instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 601. In some examples, the instance of the single instruction of the first instruction set architecture includes at least one or more fields for an opcode, one or more fields to identify at least one source operand, and one or more fields for a prefix, wherein the opcode is to indicate execution circuitry is to perform one or more particular operations at least using data from the identified at least one source operand, wherein the prefix is to at least include two bits to be used identify the at least one source operand. In some examples, the prefix is REX2. In some examples, the prefix is EVEX2. As such, this illustrates an overarching method of using REX2 and/or EVEX2 for an instruction including one or more of the use of NDD, flags suppression, 32 GPR addressing, etc.

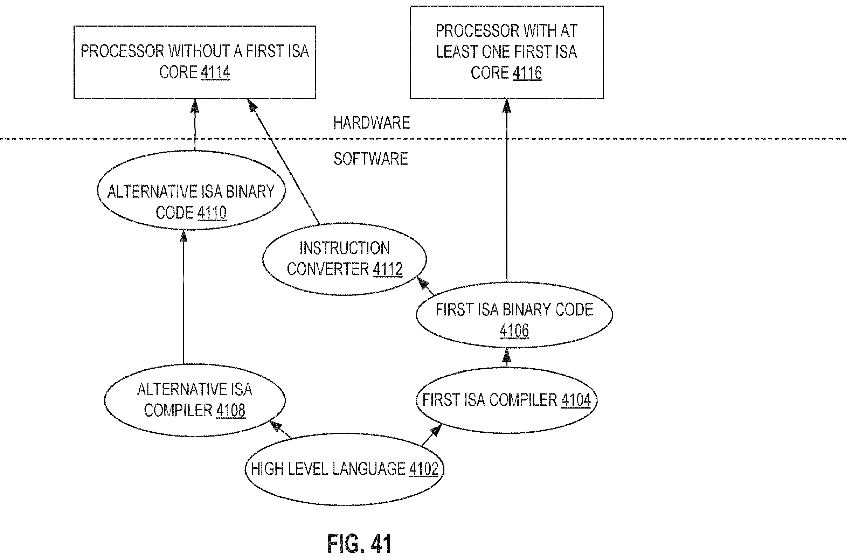

In some examples, the fetched single instruction of the first instruction set architecture is translated into one or more instructions of a second instruction set architecture at 602. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 603. For example, the translated instruction(s) is/are decoded by decoder circuitry such as decoder circuitry 2105 or decode circuitry 2940 detailed herein. In some examples, the operations of translation and decoding at 602 and 603 are merged.

Data values associated with the source operand(s) of the decoded instance of the single instruction, or the one or more instructions of the second instruction set architecture, is/are retrieved and the one or more instructions are scheduled at 605.

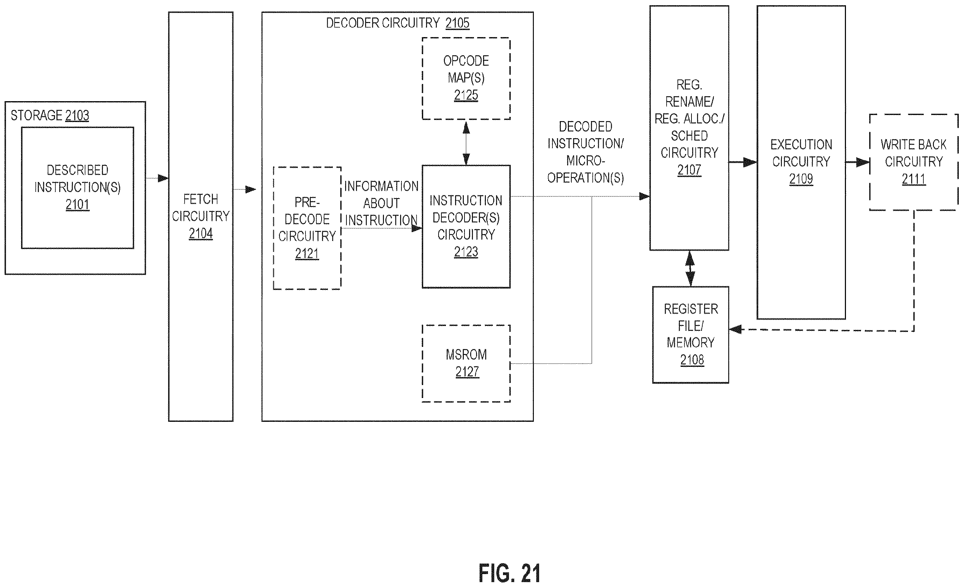

At 607, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set architecture to perform one or more particular operations at least using data from the identified at least one source operand, wherein the prefix is to at least include two bits to be used identify the at least one source operand.

In some examples, the instruction is committed or retired at 609.

An increase in the number of GPRs (e.g., going from 16 to 32) may increase the number of GPR save/restore operations around procedure calls and returns. As such, push and/or pop instructions may be needed to reduce the cost of pushing/popping GPRs to/from the stack. Some examples support one or more new types of push and/or pop instructions.

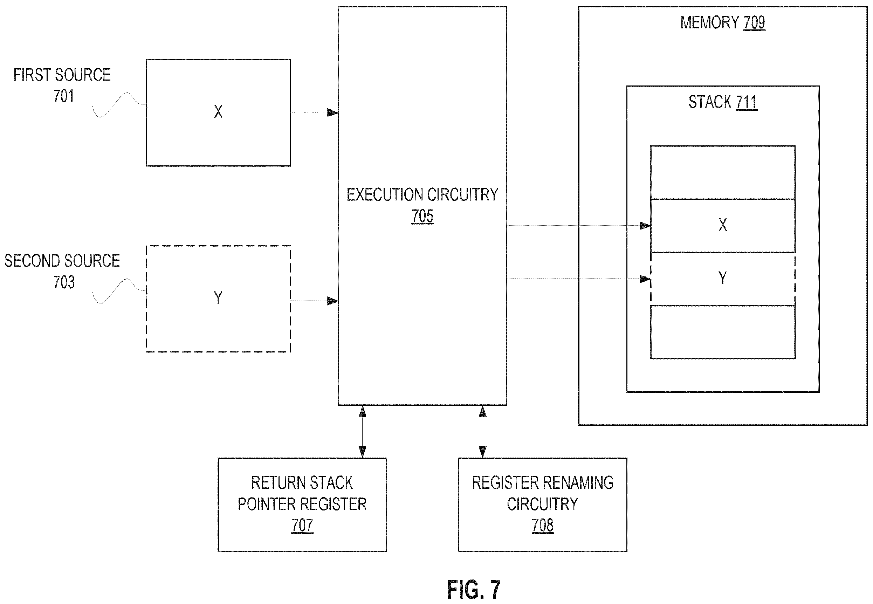

FIG. 7 illustrates examples of push instruction execution.

In some examples, the illustration depicts execution of an instruction that pushes two GPRs at a time to a stack. In some examples, this is called a PUSH2 instruction. In some examples, a PUSH2 instruction is decoded into two microoperations (uops) where the first up allocates a store buffer entry and writes data from a first source to a portion of the store buffer entry (e.g., a lower half) and the second uop does not allocate a store buffer entry and merely writes to a different portion (e.g., an upper half) the same store buffer entry. This may look like a uop sequence of:
PUSH (SRC1, RSP)
PUSH (SRC2, RSP-8)

Execution of the PUSH2 instruction will also update a return stack pointer (e.g., decrement by 16). In some examples, the data to be pushed must by 16B aligned on the stack or a general protection fault will be triggered.

In some examples, a PUSH2 instruction further includes one or more fields to provide frame management enhancements. In particular, the one or more fields allow for values to be used in the updating of the RSP. These fields may be indicated in an immediate, a register, two registers, two immediates, etc. For example, PUSH2 SRC1, SRC2, L, N includes L and N values that change the operations above to:
SUB RSP, 8^{∗}L
PUSH (SRC1)
PUSH (SRC2)
SUB RSP, 16^{∗}N

As shown, a first source 701 (such as a register) and a second source 703 (such as a register) is provided to execution circuitry 705 along with a return stack pointer 707. In some examples, the data of the sources are 64-bit in size.

In response to the PUSH2 instruction (assuming no fault), the execution circuitry 705 pushes the data from the first source 701 and the second source 703 to a stack 711 stored in memory 709. Additionally, execution circuitry 705 updates, or causes to be updated, a return stack pointer stored in a return stack pointer (RSP) register 707.

In some examples, the EVEX2 prefix is used by the PUSH2 instruction. In some examples, the EVEX2 prefix will have the following bits set pp = 0, W = 1, and ND = 1. In some examples, mod of ModR/M = 3.

An example of a format for a PUSH2 instruction is PUSH2 SRC1, SRC2. In some examples, PUSH2 is the opcode mnemonic of the instruction. In some examples, the opcode is provided by field 103, 412, or 4004. SRC1 and SRC2 are fields for locations of the source operands such as a general-purpose register. In some examples, SRC1 is provided by the B register identifiers (e.g., ModR/M reg B3 and B4) and SCR2 is provided by the V register identifiers (V0-V4) as detailed above.

In some examples, a PUSH2 instruction further includes a hint to use push pop acceleration (PPX) to indicate that it has a corresponding POP2 instruction (which would also be marked). In some examples, this is encoded in the EVEX2 prefix. For example, by setting NF to 1. This may be shown as a ".p" in the mnemonic.

Register renaming circuitry 708 maintains logical-to-physical register allocation as a part of memory renaming (MRN). In response to receiving a push/pop pair that may be optimized by memory renaming, the register renaming circuitry 708 may initiate memory renaming. Register renaming circuitry 708 may include a register alias table (RAT) for tracking the mappings between logical registers and physical registers. Register renaming circuitry 708 may rename logical registers and may remove the store/load pair from the execution path by associating the destination of the load operation with the data source of the store operation, and further converting the load operation into a load check operation for verifying the validity of the conversion at retirement time.

In some examples, the register renaming circuitry 708 may assign a dedicated MRN register to both a store operation and a dependent load operation. During execution, the store operation with an assigned MRN register may write the store data into the MRN register as well as the store-operation destination. A load operation with the same assigned MRN register may be memory renamed by the register renaming circuitry 708. Thus, the load operation may take the data directly from the assigned MRN register. Accordingly, store-to-load data dependency through a memory subsystem may be replaced by a register dependency through the assigned MRN register. Such a register dependency may be handled by conventional OOO hardware.

In some examples, a pool of MRN registers is dedicated to PUSH.p or PUSH2.p values. A POP2.p or POP.p is memory-renamed with the MRN register written by the most recent PUSH2.p or PUSH.p instruction.

A compiler will need to ensure that all PUSH2.p/PUSH.p/POP.p/POP2.p instructions marked with this hint are balanced, which means: a pop[2].p reads its data from a prior matching push[2].p (and from no other store) and a pop[2].p is said to *match* a prior push[2].p if between these two instructions in the dynamic instruction stream the number of pop[2].p instructions equals the number of push[2].p.

In some examples, the illustration depicts execution of an instruction that pushes a single GPR at a time to a stack. In some examples, this is called a PUSH instruction. Execution of the PUSH instruction will also update a return stack pointer (e.g., decrement by 8). As shown, a first source 701 (such as a register) is provided to execution circuitry 705 along with a return stack pointer 707. In some examples, the data of the source is 64-bit in size.

In response to the PUSH instruction (assuming no fault), the execution circuitry 705 pushes the data from the first source 701 to a stack 711 stored in memory 709. Additionally, execution circuitry 705 updates, or causes to be updated, a return stack pointer stored in a return stack pointer (RSP) register 707.

In some examples, the REX2 prefix is used by the PUSH instruction.

An example of a format for a PUSH instruction is PUSH SRC1. In some examples, PUSH is the opcode mnemonic of the instruction. In some examples, the opcode is provided by field 103, 412, or 4004. SRC1 is one or more fields for locations of the source operand such as a general-purpose register. In some examples, SRC1 is provided by the B register identifiers (e.g., ModR/M reg B3 and B4) or by the V register identifiers (V0-V4) as detailed above.

In some examples, a PUSH instruction further includes a hint to use PPX to indicate that it has a corresponding POP instruction (which would also be marked). In some examples, this is encoded in the REX2 prefix. For example, by setting R4 to 1. This may be shown as a ".p" in the mnemonic. Like the PPX discussion above, MRN is used for PPX. Details of how register renaming circuitry 708 performs MRN are detailed above.

Register renaming circuitry 708 maintains logical-to-physical register allocation as a part of memory renaming (MRN). In response to receiving a push/pop pair that may be optimized by memory renaming, the register renaming circuitry 708 may initiate memory renaming. Register renaming circuitry 708 may include a register alias table (RAT) for tracking the mappings between logical registers and physical registers. Register renaming circuitry 708 may rename logical registers and may remove the store/load pair from the execution path by associating the destination of the load operation with the data source of the store operation, and further converting the load operation into a load check operation for verifying the validity of the conversion at retirement time.

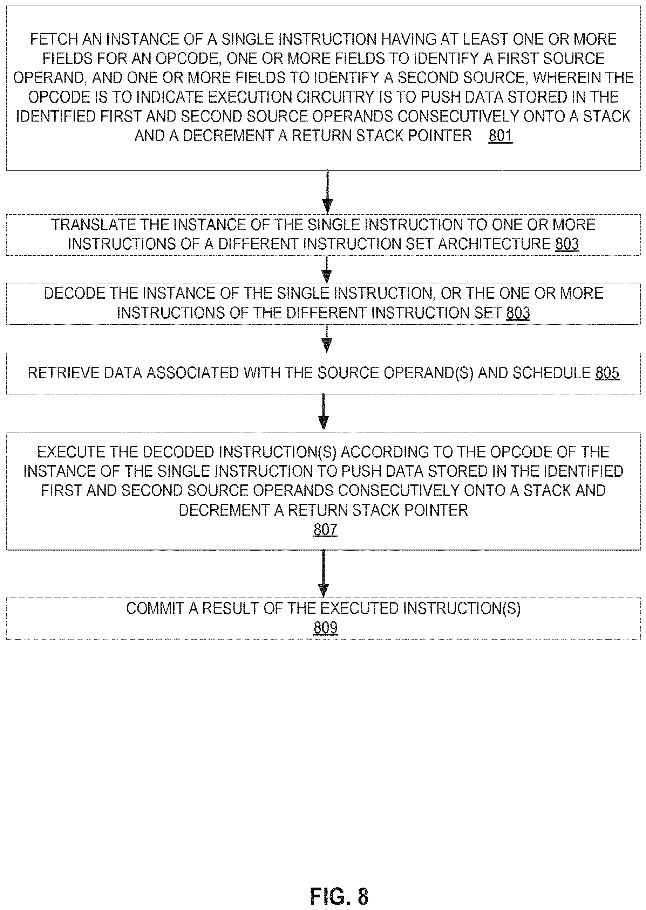

FIG. 8 illustrates an example method to process a PUSH2 instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 801. In some examples, the instance of the single instruction of the first instruction set architecture includes at least one or more fields for an opcode, one or more fields to identify a first source operand, and one or more fields to identify a second source, wherein the opcode is to indicate execution circuitry is to push data stored in the identified first and second source operands consecutively onto a stack and decrement a return stack pointer. In some examples, the instance of the single instruction includes a prefix to indicate support for 32 GPRs, a new data destination indication, and/or PPX support indication. In some examples, the prefix is EVEX2. In some examples, the instruction is PUSH2. In some examples, the instruction is PUSH2.p.

In some examples, the fetched single instruction of the first instruction set architecture is translated into one or more instructions of a second instruction set architecture at 802. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 803. For example, the translated instruction(s) is/are decoded by decoder circuitry such as decoder circuitry 2105 or decode circuitry 2940 detailed herein. In some examples, the operations of translation and decoding at 802 and 803 are merged.

Data values associated with the source operand(s) of the decoded instance of the single instruction, or the one or more instructions of the second instruction set architecture, is/are retrieved and the one or more instructions are scheduled at 805.

At 807, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set architecture to push data stored in the identified first and second source operands consecutively onto a stack and decrement a return stack pointer. In some examples, MRN is used to indicate a corresponding POP2 instruction.

In some examples, the instruction is committed or retired at 809.

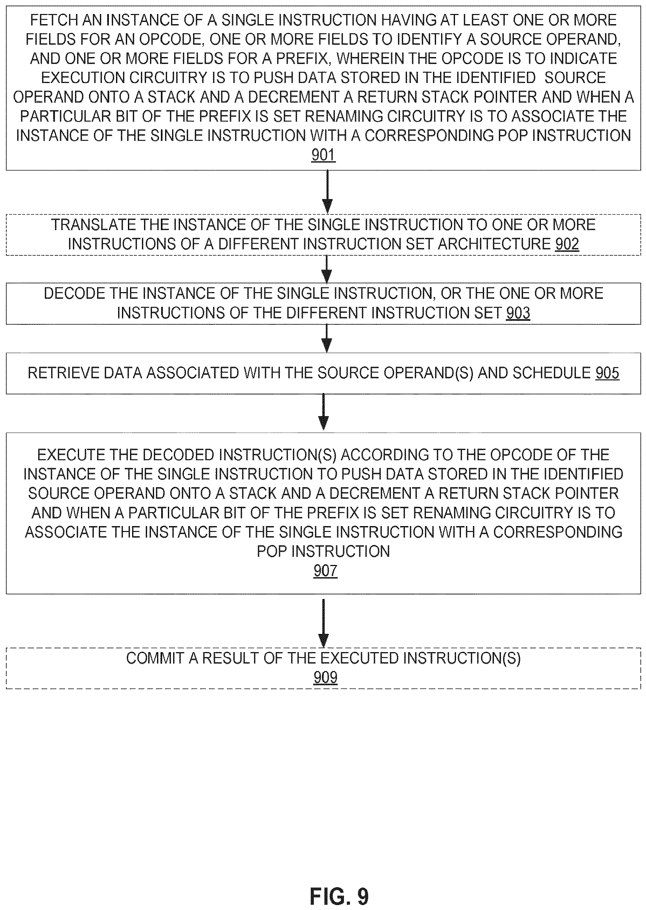

FIG. 9 illustrates an example method to process a PUSH instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 901. In some examples, the instance of the single instruction of the first instruction set architecture includes at least one or more fields for an opcode, one or more fields to identify a source operand, and one or more fields for a prefix, wherein the opcode is to indicate execution circuitry is to push data stored in the identified source operand onto a stack and decrement a return stack pointer and when a particular bit of the prefix is set renaming circuitry is to associate the instance of the single instruction with a corresponding pop instruction. In some examples, the instance of the single instruction includes a prefix to indicate support for 32 GPRs, a new data destination indication, and/or PPX support indication. In some examples, the prefix is REX2. In some examples, the instruction is PUSH. In some examples, the instruction is PUSH.p.

In some examples, the fetched single instruction of the first instruction set architecture is translated into one or more instructions of a second instruction set architecture at 902. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 903. For example, the translated instruction(s) is/are decoded by decoder circuitry such as decoder circuitry 2105 or decode circuitry 2940 detailed herein. In some examples, the operations of translation and decoding at 902 and 903 are merged.

Data values associated with the source operand(s) of the decoded instance of the single instruction, or the one or more instructions of the second instruction set architecture, is/are retrieved and the one or more instructions are scheduled at 905.

At 907, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set architecture to push data stored in the identified source operand onto a stack and decrement a return stack pointer and when a particular bit of the prefix is set renaming circuitry is to associate the instance of the single instruction with a corresponding pop instruction. In some examples, MRN is used to indicate a corresponding POP instruction.

In some examples, the instruction is committed or retired at 909.

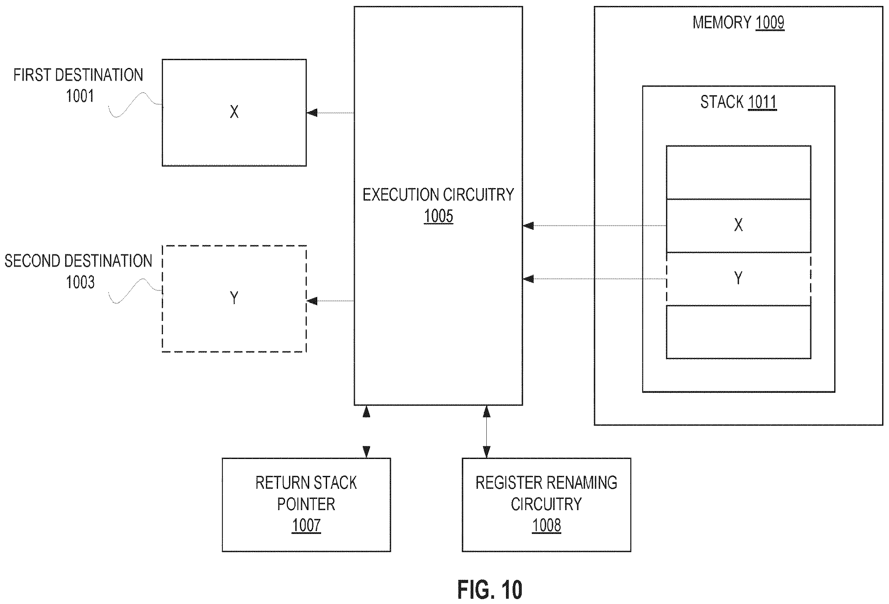

FIG. 10 illustrates examples of pop instruction execution. In some examples, the illustration depicts execution of an instruction that pops two GPRs at a time to a stack. In some examples, this is called a POP2 instruction. In some examples, a POP2 instruction is decoded into two micro-operations (uops) where the first up allocates a load buffer entry and pops data to a first destination to a portion of the load buffer entry (e.g., a lower half) and the second uop does not allocate a load buffer entry and merely pops to a different portion (e.g., an upper half) the same load buffer entry. This may look like a uop sequence of:
Pop (DST1, RSP)
Pop (DST2, RSP+8)

Execution of the POP2 instruction will also update a return stack pointer (e.g., increment by 16). In some examples, the data to be pushed must by 16B aligned on the stack or a general protection fault will be triggered.

In some examples, a POP2 instruction further includes one or more fields to provide frame management enhancements. In particular, the one or more fields allow for values to be used in the updating of the RSP. These fields may be indicated in an immediate, a register, two registers, two immediates, etc. For example, POP2 DST1, DST2, L, N includes L and N values that change the operations above to:
ADD RSP, 16^{∗}N
Pop (DST1)
Pop (DST2)
ADD RSP, 8^{∗}L

As shown, a first destination 1001 (such as a register) and a second destination 1003 (such as a register) is provided to execution circuitry 1005 along with a return stack pointer 1007. In some examples, the data of the sources are 64-bit in size.

In response to the POP2 instruction (assuming no fault), the execution circuitry 1005 pops data from a stack 1011 stored in memory 1009 to the first destination 1001 and the second destination 1003. Additionally, execution circuitry 1005 updates, or causes to be updated, a return stack pointer stored in a return stack pointer (RSP) register 1007.

In some examples, the EVEX2 prefix is used by the POP2 instruction. In some examples, the EVEX2 prefix will have the following bits set pp = 0, W = 1, and ND = 1. In some examples, mod of ModR/M = 3.

An example of a format for a POP2 instruction is POP2 DST1, DST2. In some examples, POP2 is the opcode mnemonic of the instruction. In some examples, the opcode is provided by field 103, 412, or 4004. DST1 and DST2 are fields for locations of the destination operands such as a general-purpose register. In some examples, DST1 is provided by the B register identifiers (e.g., ModR/M reg B3 and B4) and DST2 is provided by the V register identifiers (V0-V4) as detailed above.

In some examples, a POP2 instruction further includes a hint to use PPX to indicate that it has a corresponding PUSH2 instruction (which would also be marked). In some examples, this is encoded in the EVEX2 prefix. For example, by setting NF to 1. This may be shown as a ".p" in the mnemonic.

Register renaming circuitry 1008 maintains logical-to-physical register allocation as a part of memory renaming (MRN). In response to receiving a push/pop pair that may be optimized by memory renaming, the register renaming circuitry 1008 may initiate memory renaming. Register renaming circuitry 1008 may include a register alias table (RAT) for tracking the mappings between logical registers and physical registers. Register renaming circuitry 1008 may rename logical registers and may remove the store/load pair from the execution path by associating the destination of the load operation with the data source of the store operation, and further converting the load operation into a load check operation for verifying the validity of the conversion at retirement time.

In some examples, the register renaming circuitry 1008 may assign a dedicated MRN register to both a store operation and a dependent load operation. During execution, the store operation with an assigned MRN register may write the store data into the MRN register as well as the store-operation destination. A load operation with the same assigned MRN register may be memory renamed by the register renaming circuitry 1008. Thus, the load operation may take the data directly from the assigned MRN register. Accordingly, store-to-load data dependency through a memory subsystem may be replaced by a register dependency through the assigned MRN register. Such a register dependency may be handled by conventional OOO hardware.

In some examples, a pool of MRN registers is dedicated to PUSH.p or PUSH2.p values. A POP2.p or POP.p is memory-renamed with the MRN register written by the most recent PUSH2.p or PUSH.p instruction.

A compiler will need to ensure that all PUSH2.p/PUSH.p/POP.p/POP2.p instructions marked with this hint are balanced, which means: a pop[2].p reads its data from a prior matching push[2].p (and from no other store) and a pop[2].p is said to *match* a prior push[2].p if between these two instructions in the dynamic instruction stream the number of pop[2].p instructions equals the number of push[2].p.

In some examples, the illustration depicts execution of an instruction that pops a single GPR at a time to a stack. In some examples, this is called a POP instruction. Execution of the POP instruction will also update a return stack pointer (e.g., increment by 8). As shown, a first source 1001 (such as a register) is provided to execution circuitry 1005 along with a return stack pointer 1007. In some examples, the data of the source is 64-bit in size.

In response to the POP instruction (assuming no fault), the execution circuitry 1005 pops data from the stack 1011 stored in memory 1009 to the destination 1001. Additionally, execution circuitry 1005 updates, or causes to be updated, a return stack pointer stored in a return stack pointer (RSP) register 1007.

In some examples, the REX2 prefix is used by the PUSH instruction.

An example of a format for a POP instruction is POP DST1. In some examples, POP is the opcode mnemonic of the instruction. In some examples, the opcode is provided by field 103, 412, or 4004. DST1 is one or more fields for locations of the source operand such as a general-purpose register. In some examples, DST1 is provided by the B register identifiers (e.g., ModR/M reg B3 and B4) or by the V register identifiers (V0-V4) as detailed above.

In some examples, a POP instruction further includes a hint to use PPX to indicate that it has a corresponding PUSH instruction (which would also be marked). In some examples, this is encoded in the REX2 prefix. For example, by setting R4 to 1. This may be shown as a ".p" in the mnemonic. Like the PPX discussion above, MRN is used for PPX. Details of how register renaming circuitry 1008 performs MRN are detailed above.

Register renaming circuitry 1008 maintains logical-to-physical register allocation as a part of memory renaming (MRN). In response to receiving a push/pop pair that may be optimized by memory renaming, the register renaming circuitry 1008 may initiate memory renaming. Register renaming circuitry 1008 may include a register alias table (RAT) for tracking the mappings between logical registers and physical registers. Register renaming circuitry 1008 may rename logical registers and may remove the store/load pair from the execution path by associating the destination of the load operation with the data source of the store operation, and further converting the load operation into a load check operation for verifying the validity of the conversion at retirement time.

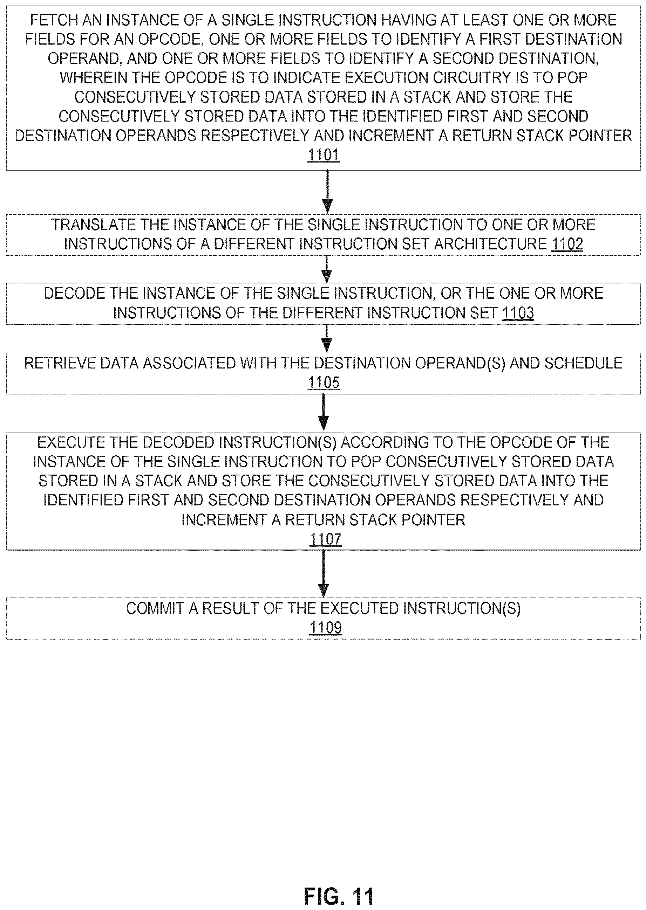

FIG. 11 illustrates an example method to process a POP2 instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 1101. In some examples, the instance of the single instruction of the first instruction set architecture includes at least one or more fields for an opcode, one or more fields to identify a first destination operand, and one or more fields to identify a second destination, wherein the opcode is to indicate execution circuitry is to pop consecutively stored data stored in a stack and store the consecutively stored data into the identified first and second destination operands respectively and increment a return stack pointer. In some examples, the instance of the single instruction includes a prefix to indicate support for 32 GPRs, a new data destination indication, and/or PPX support indication. In some examples, the prefix is EVEX2. In some examples, the instruction is POP2. In some examples, the instruction is POP2.p.

In some examples, the fetched single instruction of the first instruction set architecture is translated into one or more instructions of a second instruction set architecture at 1102. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 1103. For example, the translated instruction(s) is/are decoded by decoder circuitry such as decoder circuitry 2105 or decode circuitry 2940 detailed herein. In some examples, the operations of translation and decoding at 1102 and 1103 are merged.

Data values associated with the source operand(s) of the decoded instance of the single instruction, or the one or more instructions of the second instruction set architecture, is/are retrieved and the one or more instructions are scheduled at 1105.

At 1107, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set architecture to pop consecutively stored data stored in a stack and store the consecutively stored data into the identified first and second destination operands respectively and increment a return stack pointer. In some examples, MRN is used to indicate a corresponding PUSH2 instruction.

In some examples, the instruction is committed or retired at 1109.

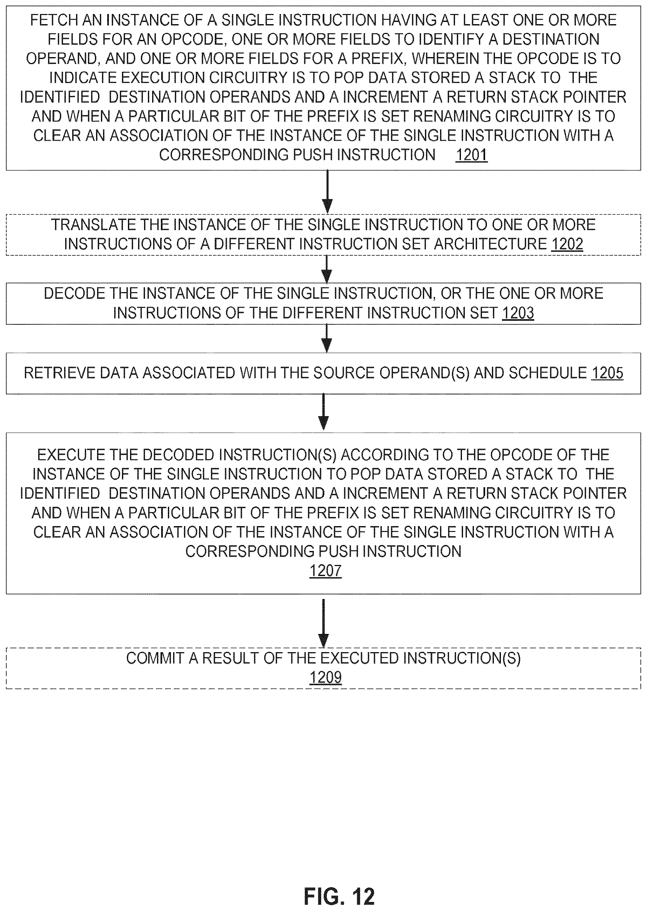

FIG. 12 illustrates an example method to process a POP instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 1201. In some examples, the instance of the single instruction of the first instruction set architecture includes at least one or more fields for an opcode, one or more fields to identify a destination operand, and one or more fields for a prefix, wherein the opcode is to indicate execution circuitry is to pop data stored a stack to the identified destination operands and a increment a return stack pointer and when a particular bit of the prefix is set renaming circuitry is to clear an association of the instance of the single instruction with a corresponding push instruction. In some examples, the instance of the single instruction includes a prefix to indicate support for 32 GPRs, a new data destination indication, and/or PPX support indication. In some examples, the prefix is REX2. In some examples, the instruction is POP. In some examples, the instruction is POP.p.

In some examples, the fetched single instruction of the first instruction set architecture is translated into one or more instructions of a second instruction set architecture at 1202. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 1203. For example, the translated instruction(s) is/are decoded by decoder circuitry such as decoder circuitry 2105 or decode circuitry 2940 detailed herein. In some examples, the operations of translation and decoding at 1202 and 1203 are merged.

Data values associated with the source operand(s) of the decoded instance of the single instruction, or the one or more instructions of the second instruction set architecture, is/are retrieved and the one or more instructions are scheduled at 1205.

At 1207, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set architecture to pop data stored a stack to the identified destination operands and a increment a return stack pointer and when a particular bit of the prefix is set renaming circuitry is to clear an association of the instance of the single instruction with a corresponding push instruction. In some examples, MRN is used to indicate a corresponding PUSH instruction.

In some examples, the instruction is committed or retired at 1209.

Branch misprediction can be a major performance limiter. In particular, data-dependent conditional branches are very hard and expensive to mitigate. In some existing systems, a conditional move (CMOV) instruction is provided. While this instruction is widely used its scope is *limited* to very simple conditionals. Additionally, some systems have limited GPRs and/or a limited ability to do arithmetic without impacting a FLAGS register.

Detailed herein are examples of instructions which allow a compiler to widely apply if-conversion to larger regions and profit from it. Additionally, more instructions are covered and a regression risk if branch turns out to be well-predicted may be minimized. The combination of more GPRs, flags suppression, and conditional ISA expands the value of IF-conversion.

In some examples, a conditionally faulting move instruction, conditional move, or both types of instructions are supported. For example, a conditionally faulting load (CFCMOV reg, mem), conditional move (CMOV), and/or a conditionally faulting store (CFCMOV mem, reg) is/are supported. Each is encoded using an EVEX2 variant.

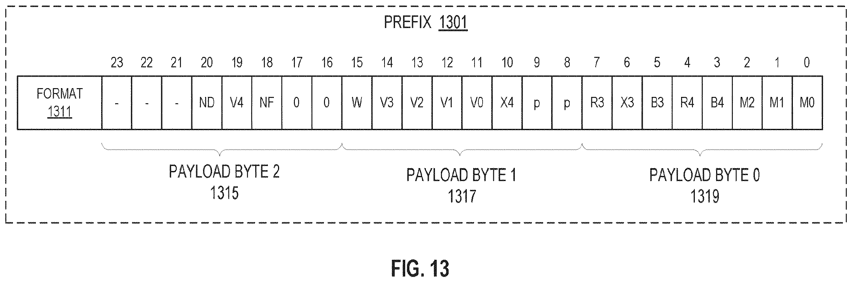

FIG. 13 illustrates examples of a EVEX2 prefix to support CFCMOV or CMOV. The EVEX2 prefix 1301 can encode 32 vector registers (e.g., 128-bit, 256-bit, and 512-bit registers) in 64-bit mode and/or 32 general purpose registers.

The EVEX2 prefix 1301 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1301 is a format field 1311 that has a value, in some examples, of 0x62. Subsequent bytes are referred to as payload bytes 1315-1319 and collectively form a 24-bit value of P[23:0] providing specific capability in the form of one or more fields (detailed herein).

Bits 0:2 (M0, M1, and M2) of a first payload byte (payload byte 0) 1319 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 (pp) provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated.

Bit 19 can be combined with bits 14:11 to encode a register in a new data destination.

Bit 20 indicates a NDD in some examples. In some examples, if EVEX2.ND = 0, there is no NDD and EVEX2.[V4,V3,V2,V1,V0] must be all zero. In some examples, if EVEX2.ND = 1, there is an NDD whose register ID is encoded by EVEX2.[V4,V3,V2,V1,V0]. Although some instructions do not support NDD, the EVEX2.ND bit may be used to control whether its destination register has its upper bits (namely, bits [63:operand size]) zeroed when operand size is 8-bit or 16-bit. That is, if EVEX2.ND = 1, the upper bits are always zeroed; otherwise, they keep the old values when operand size is 8-bit or 16-bit. For these instructions, EVEX2.[V4,V3,V2,V1,V0] is all zero.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1301 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M | GPR | 1st Source or Destination |
| | | | R/M | | |
| BASE | B4 | B3 | MOD R/M | GPR | Memory addressing |
| | | | R/M | | |
| INDEX | X4 | X3 | SIB.index | GPR | Memory addressing |

In some examples, there are several forms of EVEX2-promoted CMOVcc instructions (shown in the table) corresponding to four possible combinations of the values of EVEX2.ND and EVEX2.NF. Three of these forms have an opcode mnemonic, CFCMOVcc, where the "CF" prefix denotes "conditional faulting" and means that all memory faults are suppressed when the condition code (the "cc") evaluates to false, and the r/m operand is a memory operand. Note that in some examples, EVEX2.NF is used as a directional bit in the 2-operand case to reverse the source and destination operands.

| EVEX2.ND | EVEX.NF | Instruction Form | Example execution pseudocode | |
|---|---|---|---|---|
| 0 | 0 | CFCMOVcc reg, r/m | IF (flags satisfies cc): | |
| | | | | reg := r/m |
| | | | ELSE: | |
| | | | | // memory faults are suppressed |
| | | | | reg := 0 |
| 0 | 1 | CFCMOVcc r/m, reg | IF (flags satisfies cc): | |
| | | | | reg := r/m |
| | | | ELSEIF (r/m is a register): | |
| | | | | r/m := 0 |
| | | | ELSE: | |
| | | | | // memory faults are suppressed |
| | | | | Skip |
| 1 | 0 | CMOVcc ndd, reg, r/m | // memory faults not suppressed | |
| | | | Temp := r/m | |
| | | | IF (flags satisfies cc): | |
| | | | | ndd := temp |
| | | | ELSE: | |
| | | | | ndd := reg |
| 1 | 1 | CFCMOVcc ndd, reg, r/m | IF (flags satisfies cc): | |
| | | | | ndd := r/m |
| | | | ELSE: | |
| | | | | // memory faults are suppressed |
| | | | | ndd := reg |

If the destination of any of the four forms of CMOVcc and CFCMOVcc is a register, in some examples, the upper bits [63:operand size] of the destination register are zeroed whenever operand size < 64-bit. But if the destination is a memory location, then either operand size bits are written or there is no write at all.

REX2 versions of CMOVcc have the same legacy behavior as existing CMOVcc. In particular, the destination register is not zeroed, and memory faults are not suppressed when the condition is false. This behavior keeps legacy CMOVcc operation semantics and timing in line with current speculation/side-channel rules used for load hardening and other usages.

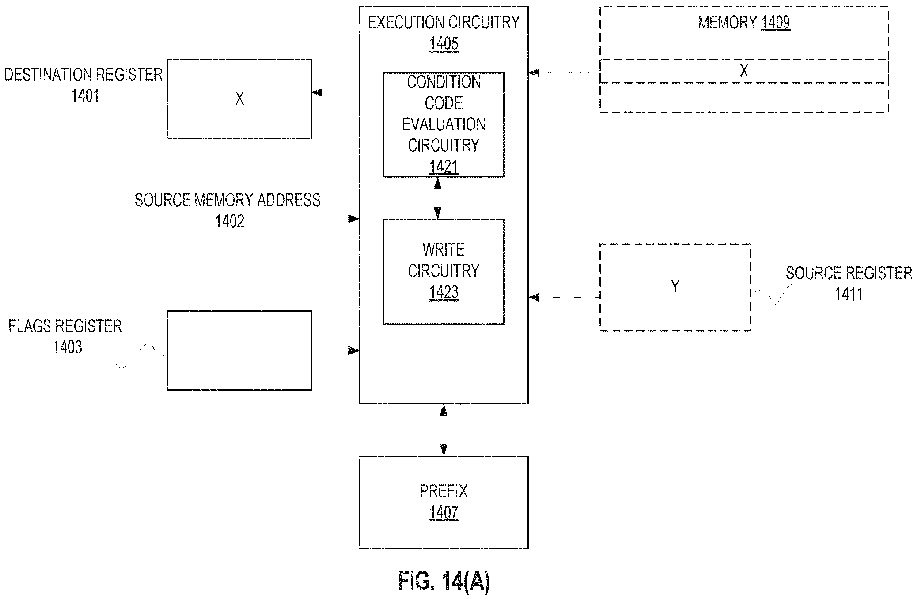

FIGS. 14(A)-(C) illustrate examples of a CMOV and/or CFCMOV instruction execution. FIG. 14(A) illustrates examples of execution of a CFCMOVcc reg, r/m instruction. In this example, the destination is a register, and the source is either memory or a register.

An execution of a C[FC]MOVcc instruction causes a move operation using write circuitry 1423 from a source (e.g., memory 1409 as indicated by source memory address 1402 or source register 1411) if status flags (e.g., carry flag (CF), overflow flag (OF), parity flag (PF), sign flag (SF), and/or zero flag (ZF)) in a FLAGS register 1403 are in a specified state (or condition) as evaluated by condition code evaluation circuitry 1421. A condition code (cc) is associated with each instruction to indicate the condition being tested for.

In some examples, when the condition is not satisfied, a move is not performed, memory faults are suppressed, and the destination is set to zero. Execution continues with the instruction following the CMOVcc instruction. When the condition is satisfied, reg is set to be the value stored in the location indicated by r/m.

A prefix 1407 is also supplied to the execution circuitry 1405 in some examples to distinguish between existing C[FC]MOVcc instructions.

An example of a format for a CFCMOVcc instruction is CFCMOVcc DST, SRC. In some examples, CFCMOVcc is the opcode mnemonic of the instruction. In some examples, the opcode is provided by field 103, 412, or 4004.

In some examples, where the destination (DST) is reg and SRC is r/m, the source (SRC is provided by one or more fields such as the B register identifiers (e.g., ModR/M R/M 4146 and bits B3 and B4 from EVEX2). In some examples, SRC is provided by one or more memory address fields including ModR/M R/M 4146 and/or SIB values. In some examples, DST is provided by ModR/M reg 4144 and bits R3 and R4 from EVEX2.

The condition code (cc) to be evaluated may be indicated by the opcode, immediate, operand, etc. Examples of conditions to evaluate may include, but are not limited to: move if above (CF =0 and ZF = 0), move if above or equal (CF = 0), move if below (CF = 1), move if below or equal (CF = 1 or ZF = 1), move if carry (CF = 1), move if carry (CF = 1), move if equal (ZF = 1), move if greater (ZF = 0 and SF = OF), move if greater or equal (SF = OF), move is less (SF != OF), move if less or equal (ZF = 1 or SF != OF), move if not above (CF = 1 or ZF = 1), move if not above or equal (CF = 1), move if not below (CF = 0), move if not below or equal (CF = 0 and ZF = 0), move if not carry (CF = 0), move if not equal (ZF = 0), move if not greater (ZF = 1 or SF != OF), move if not greater or equal (SF != OF), move if not less (SF = OF), move if not less or equal (ZF = 0 or SF = OF), move if not overflow (OF = 0), move if not parity (PF = 0), move if not sign (SF = 0), move if not zero (ZF = 0), move if overflow (OF = 1), move if parity (PF = 1), move if parity even (PF = 1), move if parity odd (PF = 0), move if sign (SF = 1), and/or move if zero (ZF = 1).

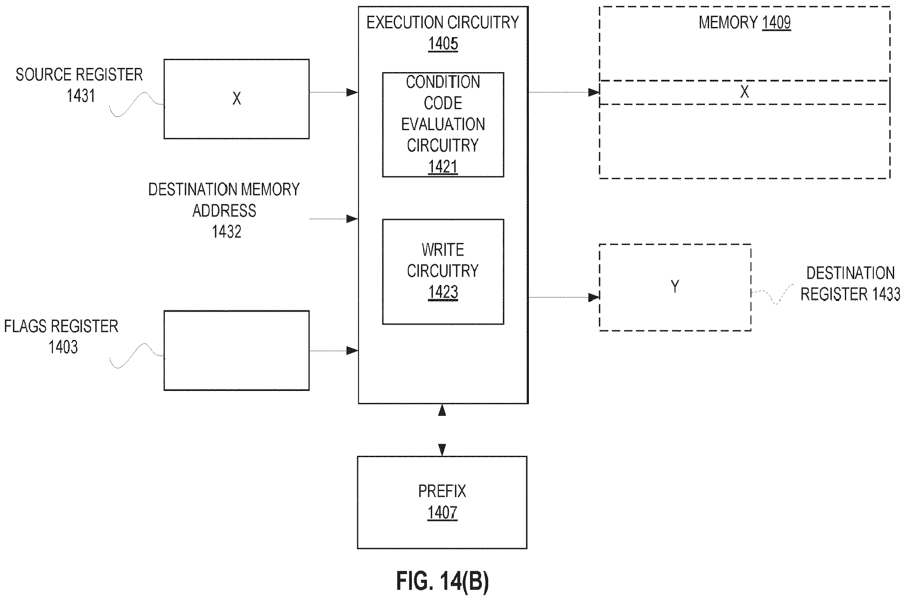

FIG. 14(B) illustrates an example execution of a CFCMOVcc r/m, reg instruction. An execution of a C[FC]MOVcc r/m, reg instruction causes a move operation using write circuitry 1423 from a source (e.g., source register 1431) to either memory 1409 as indicated by destination memory address 1432 or a destination register 1433 if status flags (e.g., carry flag (CF), overflow flag (OF), parity flag (PF), sign flag (SF), and/or zero flag (ZF)) in a FLAGS register 1403 are in a specified state (or condition) as evaluated by condition code evaluation circuitry 1421. A condition code (cc) is associated with each instruction to indicate the condition being tested for.

In some examples, when the cc is satisfied and the destination is memory, the destination memory location is set to be the value stored by the source register 1431. When the destination is a register, it is set to 0. And when the condition code is not satisfied and the destination is memory, memory faults are suppressed, and the destination does not change.

A prefix 1407 is also supplied to the execution circuitry 1405 in some examples to distinguish between existing C[FC]MOVcc instructions.

An example of a format for a CFCMOVcc instruction is CFCMOVcc DST, SRC. In some examples, CFCMOVcc is the opcode mnemonic of the instruction. In some examples, the opcode is provided by field 103, 412, or 4004.

In some examples, where DST is r/m and SRC is reg, DST is provided by one or more fields such as the B register identifiers (e.g., ModR/M R/M 4146 and bits B3 and B4 from EVEX2). In some examples, SRC is provided by one or more memory address fields including ModR/M R/M 4146 and/or SIB values. In some examples, SRC is provided by ModR/M reg 4144 and bits R3 and R4 from EVEX2.

The condition code (cc) to be evaluated may be indicated by the opcode, immediate, operand, etc. Examples of conditions to evaluate may include, but are not limited to: move if above (CF =0 and ZF = 0), move if above or equal (CF = 0), move if below (CF = 1), move if below or equal (CF = 1 or ZF = 1), move if carry (CF = 1), move if carry (CF = 1), move if equal (ZF = 1), move if greater (ZF = 0 and SF = OF), move if greater or equal (SF = OF), move is less (SF != OF), move if less or equal (ZF = 1 or SF != OF), move if not above (CF = 1 or ZF = 1), move if not above or equal (CF = 1), move if not below (CF = 0), move if not below or equal (CF = 0 and ZF = 0), move if not carry (CF = 0), move if not equal (ZF = 0), move if not greater (ZF = 1 or SF != OF), move if not greater or equal (SF != OF), move if not less (SF = OF), move if not less or equal (ZF = 0 or SF = OF), move if not overflow (OF = 0), move if not parity (PF = 0), move if not sign (SF = 0), move if not zero (ZF = 0), move if overflow (OF = 1), move if parity (PF = 1), move if parity even (PF = 1), move if parity odd (PF = 0), move if sign (SF = 1), and/or move if zero (ZF = 1).

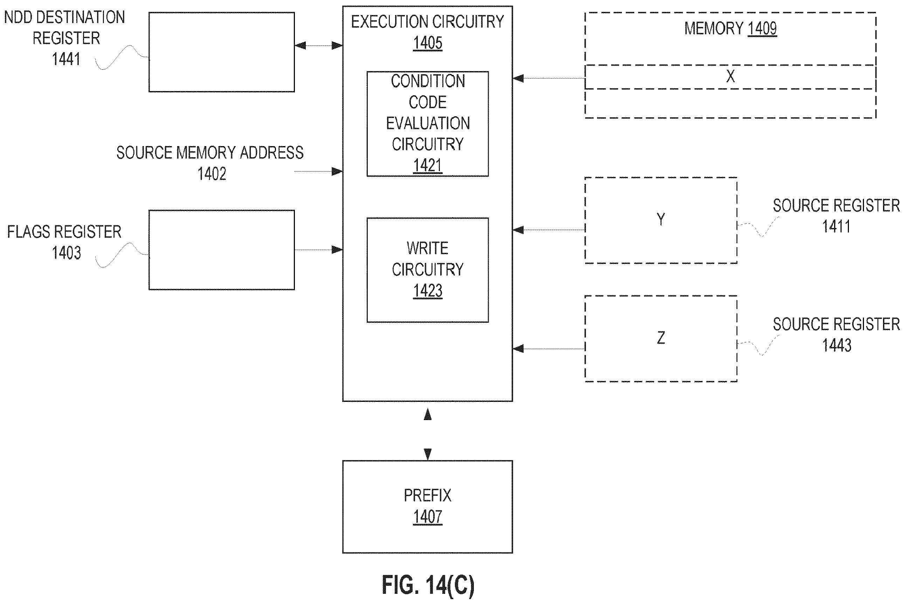

FIG. 14(C) illustrates examples of execution of a CFCMOVcc ndd, reg, r/m or CMOVcc ndd, reg, r/m instruction. In this example, the destination is a new data destination (a register) and the sources are either a memory and a register or two registers.

An execution of a CFCMOVcc ndd, reg, r/m instruction causes a move operation using write circuitry 1423 from a source (e.g., either memory 1409 as indicated by source memory address 1402 or source register 1411, or memory 1409 as indicated by source memory address 1402 or source register 1443) if status flags (e.g., carry flag (CF), overflow flag (OF), parity flag (PF), sign flag (SF), and/or zero flag (ZF)) in a FLAGS register 1403 are in a specified state (or condition) as evaluated by condition code evaluation circuitry 1421. A condition code (cc) is associated with each instruction to indicate the condition being tested for.

In some examples, when the condition is not satisfied, a move is not performed, memory faults are suppressed, and the NDD destination is set to reg. When the condition is satisfied, the NDD destination is set to be the value stored in the location indicated by r/m.

An execution of a CMOVcc ndd, reg, r/m instruction causes a move operation using write circuitry 1423 from a source (e.g., either memory 1409 as indicated by source memory address 1402 or source register 1411, or memory 1409 as indicated by source memory address 1402 or source register 1443) if status flags (e.g., carry flag (CF), overflow flag (OF), parity flag (PF), sign flag (SF), and/or zero flag (ZF)) in a FLAGS register 1403 are in a specified state (or condition) as evaluated by condition code evaluation circuitry 1421. A condition code (cc) is associated with each instruction to indicate the condition being tested for.

In some examples, memory faults are not suppressed. The value in r/m is loaded into a temporary register. When the condition is not satisfied, a move is not performed the NDD destination is set to reg. When the condition is satisfied, the NDD destination is set to be the value stored in the location indicated by r/m as stored in the temporary register.

A prefix 1407 is also supplied to the execution circuitry 1405 in some examples to distinguish between existing C[FC]MOVcc instructions.

An example of a format for a CFCMOVcc or CMOVcc instruction is CFCMOVcc NDD, SRC1, SRC2 or CMOVcc NDD, SRC1, SRC2. In some examples, CFCMOVcc or CMOVcc is the opcode mnemonic of the instruction. In some examples, the opcode is provided by field 103, 412, or 4004.

In some examples, where SRC1 is provided by reg and SRC2 is r/m, SRC2 is provided by one or more B values including ModR/M R/M 4146, B3, and B4, or memory address fields including ModR/M R/M 4146 and/or SIB values and SCR1 is provided by R (reg) values. In some examples, NDD is provided V0-V4 from EVEX2.

The condition code (cc) to be evaluated may be indicated by the opcode, immediate, operand, etc. Examples of conditions to evaluate may include, but are not limited to: move if above (CF =0 and ZF = 0), move if above or equal (CF = 0), move if below (CF = 1), move if below or equal (CF = 1 or ZF = 1), move if carry (CF = 1), move if carry (CF = 1), move if equal (ZF = 1), move if greater (ZF = 0 and SF = OF), move if greater or equal (SF = OF), move is less (SF != OF), move if less or equal (ZF = 1 or SF != OF), move if not above (CF = 1 or ZF = 1), move if not above or equal (CF = 1), move if not below (CF = 0), move if not below or equal (CF = 0 and ZF = 0), move if not carry (CF = 0), move if not equal (ZF = 0), move if not greater (ZF = 1 or SF != OF), move if not greater or equal (SF != OF), move if not less (SF = OF), move if not less or equal (ZF = 0 or SF = OF), move if not overflow (OF = 0), move if not parity (PF = 0), move if not sign (SF = 0), move if not zero (ZF = 0), move if overflow (OF = 1), move if parity (PF = 1), move if parity even (PF = 1), move if parity odd (PF = 0), move if sign (SF = 1), and/or move if zero (ZF = 1).

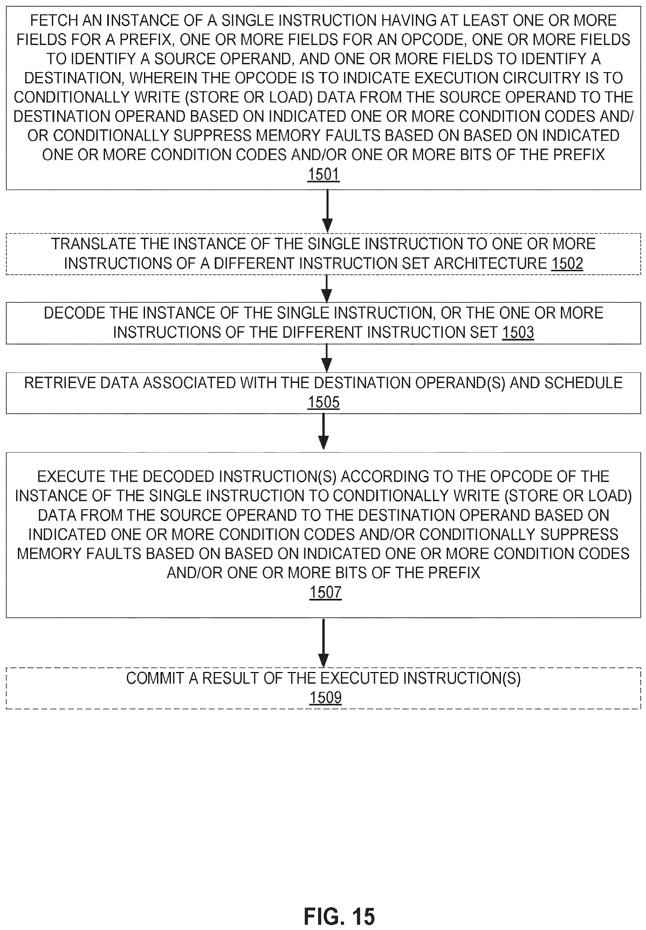

FIG. 15 illustrates an example method to process a CFCMOVcc instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 1501. In some examples, the instance of the single instruction of the first instruction set architecture includes at least one or more fields for a prefix, one or more fields for an opcode, one or more fields to identify a source operand, and one or more fields to identify a destination, wherein the opcode is to indicate execution circuitry is to conditionally write (store or load) data from the source operand to the destination operand based on indicated one or more condition codes and conditionally suppress memory faults based on based on indicated one or more condition codes and/or one or more bits of the prefix. In some examples, the source operand is a memory location. In some examples, the source operand is a register. In some examples, the destination is a memory location. In some examples, the destination is a register.

In some examples, the fetched single instruction of the first instruction set architecture is translated into one or more instructions of a second instruction set architecture at 1502. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 1503. For example, the translated instruction(s) is/are decoded by decoder circuitry such as decoder circuitry 2105 or decode circuitry 2940 detailed herein. In some examples, the operations of translation and decoding at 1502 and 1503 are merged.

Data values associated with the source operand(s) of the decoded instance of the single instruction, or the one or more instructions of the second instruction set architecture, is/are retrieved and the one or more instructions are scheduled at 1505.

At 1507, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set to conditionally write (store or load) data from the source operand to the destination operand based on indicated one or more condition codes and/or conditionally suppress memory faults based on based on indicated one or more condition codes and/or one or more bits of the prefix. Example pseudocode for execution has been detailed above.

In some examples, the instruction is committed or retired at 1509.

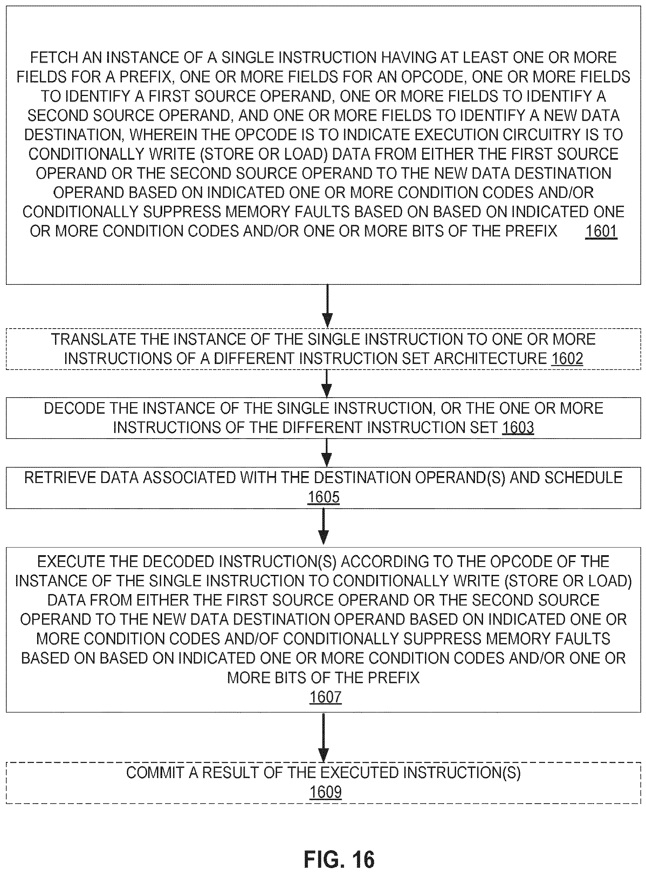

FIG. 16 illustrates an example method to process a CFCMOVcc or CMOVcc instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 1601. In some examples, the instance of the single instruction of the first instruction set architecture includes at least one or more fields for a prefix, one or more fields for an opcode, one or more fields to identify a first source operand, one or more fields to identify a second source operand, and one or more fields to identify a new data destination, wherein the opcode is to indicate execution circuitry is to conditionally write (store or load) data from either the first source operand or the second source operand to the new data destination operand based on indicated one or more condition codes and/or conditionally suppress memory faults based on based on indicated one or more condition codes and/or one or more bits of the prefix. In some examples, the source operand is a memory location. In some examples, the source operand is a register. In some examples, the destination is a memory location. In some examples, the destination is a register.

In some examples, the fetched single instruction of the first instruction set architecture is translated into one or more instructions of a second instruction set architecture at 1602. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 1603. For example, the translated instruction(s) is/are decoded by decoder circuitry such as decoder circuitry 2105 or decode circuitry 2940 detailed herein. In some examples, the operations of translation and decoding at 1602 and 1603 are merged.

Data values associated with the source operand(s) of the decoded instance of the single instruction, or the one or more instructions of the second instruction set architecture, is/are retrieved and the one or more instructions are scheduled at 1605.

At 1607, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set to conditionally write (store or load) data from either the first source operand or the second source operand to the new data destination operand based on indicated one or more condition codes and/or conditionally suppress memory faults based on based on indicated one or more condition codes and/or one or more bits of the prefix. Example pseudocode for execution has been detailed above.

In some examples, the instruction is committed or retired at 1609.

In some examples, one or more conditional compare (CCMP) and/or conditional test (CTEST) instructions are supported. CCMP and/or CTEST instructions may be used by a compiler for nested condition computations. In some examples, a CCMP and/or CTEST instruction uses ModR/M and/or immediate operations. A CCMP and/or CTEST instruction reads and tests flags (source flags) and produces flags as a result (destination flags). The test to be performed is indicated by a SCC and resulting flags are stored as destination condition codes (DCC) (either as provided or as determined by the test or compare operation. In some examples, a default DCC default is OF', SF', ZF', and CF'. As such, when a comparison or test is not performed, those are the values stored.

CCMP and/or CTEST are encoded in the EVEX2 space in some examples (examples of EVEX2 prefixes are detailed below).

In some examples, pseudocode for CCMP is:

```
 IF (SRC_FLAGS satisfies SCC):
       DST_FLAGS = compare(SRC1, SRC2)
 ELSE:
       DST_FLAGS = flags(DCC)
```

In some examples, pseudocode for CTEST is:

```
 IF (SRC_FLAGS satisfies SCC):
       DST_FLAGS = test(SRC1, SRC2)
 ELSE:
       DST_FLAGS = flags(DCC)
```

The execution of a CCMP instruction conditionally compares two operands when a source condition code (SCC) is met and sets status flags in a flags register as a result. When the SCC is not met, in some examples, CCMP inverts a proper subset of flags (OF, SF, ZF, and CF). Additionally, in some examples, PF is set to be OF' & SF' & ZF' & CF' and/or AF is set to 0. In some examples, the DCC is written to the flags register.

In some examples, the comparison is performed by subtracting the second operand from the first operand and then setting the status flags (OF, SF, ZF, AF, PF, and CF). OF and CF indicate an overflow in the signed or unsigned result, respectively. SF indicates the sign of the signed result. ZF indicates a zero result. PF is set if the least-significant byte of the result contains an even number of 1 bits. AF (auxiliary flag) is set if the subtraction operation generates a carry or a borrow out of bit 3 of the result.

In some examples, when the SCC = 0b1011 exception case can be used to force any desired truth assignment to OF, SF, ZF, and CF unconditionally.

The execution of a CTEST instruction conditionally tests two operands when a source condition code (SCC) is met and sets status flags in a flags register as a result. When the SCC is not met, in some examples CTEST at least inverts a proper subset of flags (OF, SF, ZF, and CF). Additionally, in some examples, PF is set to be OF' & SF' & ZF' & CF' and/or AF is set to 0. In some examples, the DCC is written to the flags register.

In some examples, the test is performed as a bit-wise logical AND of operands and SF, ZF, and PF are set according to the result and OF and CF are set to zero. An example of pseudocode of the test operation is:
TEMP := SRC1 AND SRC2;
SF := MSB(TEMP);
IF TEMP = 0
THEN ZF := 1;
ELSE ZF := 0;
FI:
   PF := BitwiseXNOR(TEMP[0:7]);
   CF := 0;
   OF := 0;
   (^{∗} AF is undefined ^{∗})

In some examples, when the SCC = 0b1011 exception case can be used to force any desired truth assignment to OF, SF, ZF, and CF unconditionally.

In some examples, four bits of a prefix are used to define the SCC. An example of encodings of SCC are shown in the table below:

| **Mnemonic (*cc*)** | **Condition Tested For** | **Instruction Subcode** | **Status Flags Setting** |
|---|---|---|---|
| O | Overflow | 0000 | OF = 1 |
| NO | No overflow | 0001 | OF = 0 |
| B | Below | 0010 | CF = 1 |
| NAE | Neither above nor equal | | |
| NB | Not below | 0011 | CF = 0 |
| AE | Above or equal | | |
| E | Equal | 0100 | ZF = 1 |
| Z | Zero | | |
| NE | Not equal | 0101 | ZF = 0 |
| NZ | Not zero | | |
| BE | Below or equal | 0110 | (CF OR ZF) = 1 |
| NA | Not above | | |
| NBE | Neither below nor equal | 0111 | (CF OR ZF) = 0 |
| A | Above | | |
| 5 | Sign | 1000 | SF = 1 |
| NS | No sign | 1001 | SF = 0 |
| P | Parity | 1010 | PF = 1 |
| PE | Parity even | | |
| NP | No parity | 1011 | PF = 0 |
| PO | Parity odd | | |
| L | Less | 1100 | (SF XOR OF) = 1 |
| NGE | Neither greater nor equal | | |
| NL | Not less | 1101 | (SF XOR OF) = 0 |
| GE | Greater or equal | | |
| LE | Less or equal | 1110 | ((SF XOR OF) OR ZF) = 1 |
| NG | Not greater | | |
| NLE | Neither less nor equal | 1111 | ((SF XOR OF) OR ZF) = 0 |
| G | Greater | | |

In some examples, there are special cases where if SCC = 0b1010, then SCC evaluates to true regardless of the CSPAZO value and/or if SCC = 0b1011, then SCC evaluates to false regardless of the CSPAZO value. In some examples, SCC evaluating to false does not suppress memory faults from a memory operand.

In some examples, the source and destination flags are provided by a prefix of the CCMP instruction. In other examples,

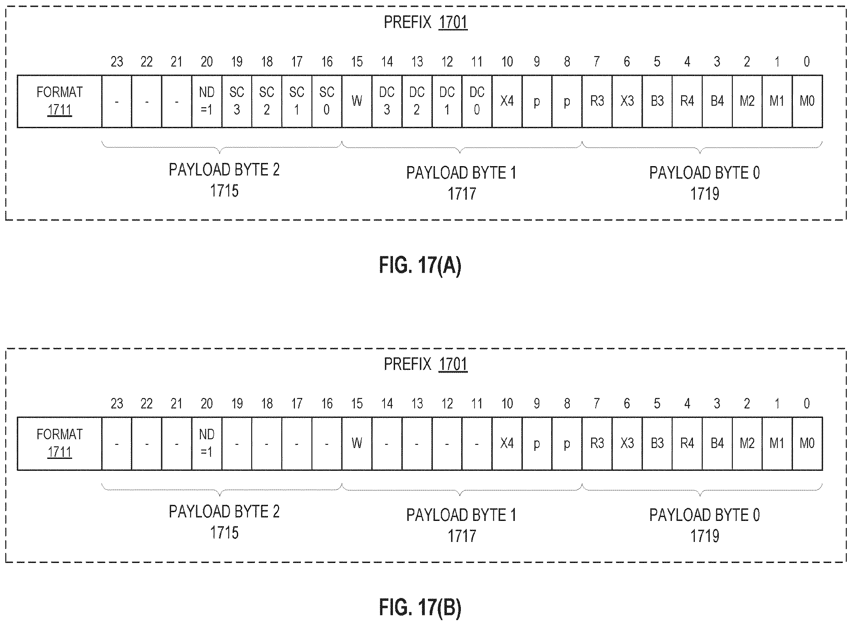

FIGS. 17(A)-(D) illustrate examples of a EVEX2 prefix to support a CCMP and/or CTEST instruction. The EVEX2 prefix 1301 can encode 32 vector registers (e.g., 128-bit, 256-bit, and 512-bit registers) in 64-bit mode and/or 32 general purpose registers.

FIG. 17(A) illustrates an example of EVEX2 for CCMP and/or CTEST where the SCC and DCC are encoded in the prefix.

The EVEX2 prefix 1701 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1701 is a format field 1711 that has a value, in some examples, of 0x62. Subsequent bytes are referred to as payload bytes 1715-1719 and collectively form a 24-bit value of P[23:0] providing specific capability in the form of one or more fields (detailed herein).

Bits 0:2 (M0, M1, and M2) of a first payload byte (payload byte 0) 1719 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 (pp) provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as DC3, DC2, DC1, and DC0, are used to encode a destination condition code.

Bit 15 (W) may serve as an opcode extension bit or operand size promotion.

Bits 19:16, shown as SC3, SC2, SC1, and SC0, are used to encode a source condition code.

Bit 20 indicates a NDD in some examples. The ND bit is required to be set to 1, so as to be consistent of the convention that the (former) V bits are being used.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1701 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

FIG. 17(B) illustrates an example of EVEX2 for CCMP and/or CTEST where neither the SCC nor DCC is encoded in the prefix. In this example, the SCC and DCC will need to be provided by other means such as a separate immediate for SCC and DCC, an immediate with SCC and DCC, an immediate for one CC and a register for the other CC, etc.

The EVEX2 prefix 1701 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1701 is a format field 1711 that has a value, in some examples, of 0x62. Subsequent bytes are referred to as payload bytes 1715-1719 and collectively form a 24-bit value of P[23:0] providing specific capability in the form of one or more fields (detailed herein).

Bits 0:2 (M0, M1, and M2) of a first payload byte (payload byte 0) 1719 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 (pp) provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bit 15 (W) may serve as an opcode extension bit or operand size promotion.

Bit 20 indicates a NDD in some examples. The ND bit is required to be set to 1, so as to be consistent of the convention that the (former) V bits are being used.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1701 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

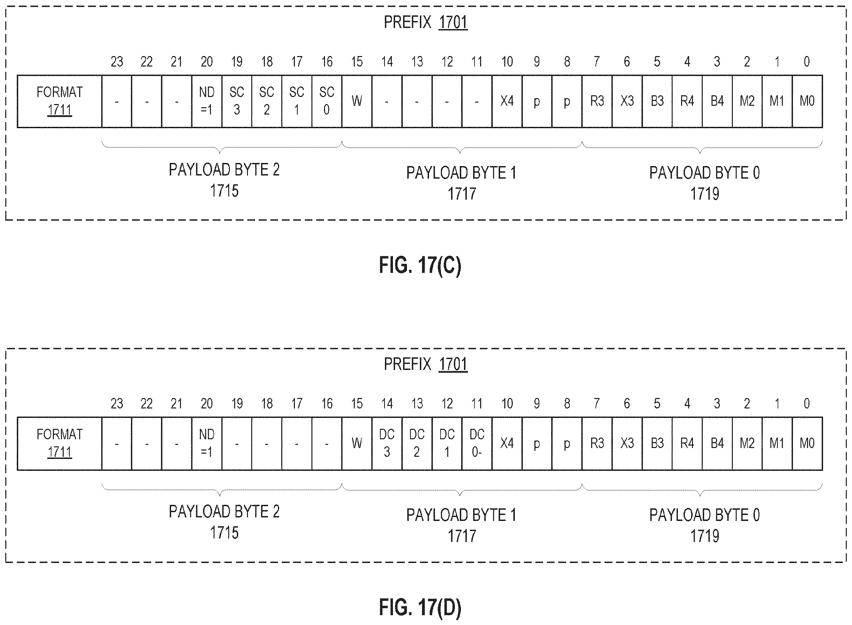

FIG. 17(C) illustrates an example of EVEX2 for CCMP and/or CTEST where the SCC is encoded in the prefix. In this example, the DCC will need to be provided by other means such as an immediate or register.

The EVEX2 prefix 1701 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1701 is a format field 1711 that has a value, in some examples, of 0x62. Subsequent bytes are referred to as payload bytes 1715-1719 and collectively form a 24-bit value of P[23:0] providing specific capability in the form of one or more fields (detailed herein).

Bits 0:2 (M0, M1, and M2) of a first payload byte (payload byte 0) 1719 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 (pp) provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bit 15 (W) may serve as an opcode extension bit or operand size promotion.

Bits 19:16, shown as SC3, SC2, SC1, and SC0, are used to encode a source condition code.

Bit 20 indicates a NDD in some examples. The ND bit is required to be set to 1, so as to be consistent of the convention that the (former) V bits are being used.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1701 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

FIG. 17(D) illustrates an example of EVEX2 for CCMP and/or CTEST where the DCC is encoded in the prefix. In this example, the SCC will need to be provided by other means such as an immediate or register.

The EVEX2 prefix 1701 may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1701 is a format field 1711 that has a value, in some examples, of 0x62. Subsequent bytes are referred to as payload bytes 1715-1719 and collectively form a 24-bit value of P[23:0] providing specific capability in the form of one or more fields (detailed herein).

Bits 0:2 (M0, M1, and M2) of a first payload byte (payload byte 0) 1719 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 (pp) provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as DC3, DC2, DC1, and DC0, are used to encode a destination condition code.

Bit 15 (W) may serve as an opcode extension bit or operand size promotion.

Bit 20 indicates a NDD in some examples. The ND bit is required to be set to 1, so as to be consistent of the convention that the (former) V bits are being used.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1701 are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

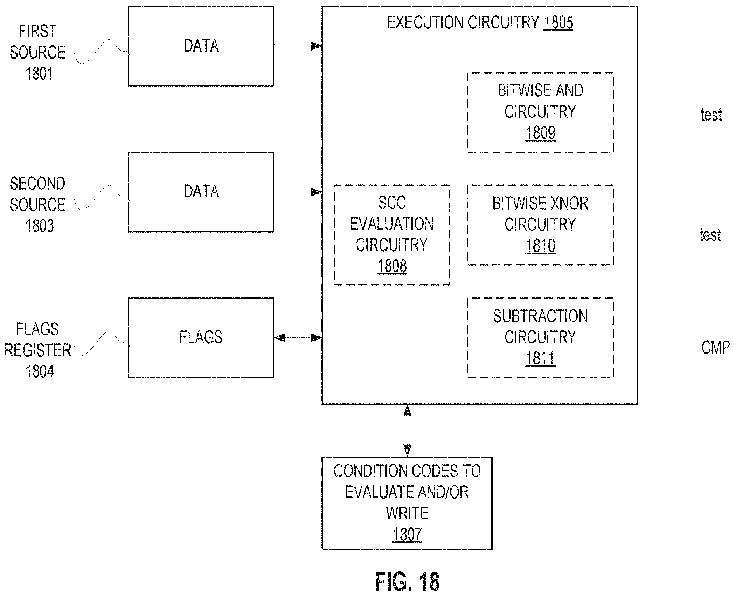

FIG. 18 illustrates examples of execution of a CCMPcc DCC, R/M, REG, SCC or CTESTcc DCC, R/M, REG, SCC instruction. In these examples, an initial DCC is provided by one of a register, immediate (or portion thereof), or a prefix. In these examples, SCC is provided by one of a register, immediate (or portion thereof), or a prefix. R/M may indicate a memory source or a register source. REG indicates a register source.

An execution of a CCMPcc DCC, R/M, REG, SCC instruction includes data from a first source 1801 (register or memory), a second source 1803 (register or memory), and flags from a flags register 1804 being provided to execution circuitry 1805. Additionally, the SCC and DCC 1807 are provided to the execution circuitry. As noted above, the SCC and/or DCC may be provided by a register, immediate (or portion thereof), or a prefix.

SCC evaluation circuitry 1808 determines if the SCC of the instruction matches what is in the flags register 1804. If it does not, then the flags register 1804 is updated with provided DCC. If it does, then a comparison of the sources is made. In some examples, subtraction circuitry 1811 is used for the comparison as noted above and flags of the flags register 1804 set accordingly.

An execution of a CTESTcc DCC, R/M, REG, SCC instruction includes data from a first source 1801 (register or memory), a second source 1803 (register or memory), and flags from a flags register 1804 being provided to execution circuitry 1805. Additionally, the SCC and DCC 1807 are provided to the execution circuitry. As noted above, the SCC and/or DCC may be provided by a register, immediate (or portion thereof), or a prefix.

SCC evaluation circuitry 1808 determines if the SCC of the instruction matches what is in the flags register 1804. If it does not, then the flags register 1804 is updated with provided DCC. If it does, then a test of the sources is made. In some examples, bitwise AND0 circuitry 1809 is used for the test as noted above and flags of the flags register 1804 set accordingly. Additionally, in some examples, bitwise XNOR circuitry 1810 is used to set the PF.

An example of a format for a CCMPcc DCC, R/M, REG, SCC or CTESTcc DCC, R/M, REG, SCC instruction is CCMPcc DCC, R/M, REG, SCC or CTESTcc DCC, R/M, REG, SCC. In some examples, CCMPcc or CTESTcc is the opcode mnemonic of the instruction. In some examples, the opcode is provided by field 103, 412, or 4004.

In some examples, where SRC1 is provided by R/M and SRC2 is provided by REG. That is a source is provided by one or more B values including ModR/M R/M 4146, B3, and B4, or memory address fields including ModR/M R/M 4146 and/or SIB values and a source is provided by R (reg) values using the prefix and/or 4144. In some examples, DCC and/or SCC are provided by a prefix such as the prefixes of FIGS. 17. In some examples, X values are used to provide DCC and/or SCC. In some examples, one or more immediates 2709 provide DCC and/or SCC.

The condition code that SCC is to be evaluated may be indicated by the opcode, immediate, operand, etc. Examples of conditions to evaluate may include, but are not limited to: move if above (CF =0 and ZF = 0), move if above or equal (CF = 0), move if below (CF = 1), move if below or equal (CF = 1 or ZF = 1), move if carry (CF = 1), move if carry (CF = 1), move if equal (ZF = 1), move if greater (ZF = 0 and SF = OF), move if greater or equal (SF = OF), move is less (SF != OF), move if less or equal (ZF = 1 or SF != OF), move if not above (CF = 1 or ZF = 1), move if not above or equal (CF = 1), move if not below (CF = 0), move if not below or equal (CF = 0 and ZF = 0), move if not carry (CF = 0), move if not equal (ZF = 0), move if not greater (ZF = 1 or SF != OF), move if not greater or equal (SF != OF), move if not less (SF = OF), move if not less or equal (ZF = 0 or SF = OF), move if not overflow (OF = 0), move if not parity (PF = 0), move if not sign (SF = 0), move if not zero (ZF = 0), move if overflow (OF = 1), move if parity (PF = 1), move if parity even (PF = 1), move if parity odd (PF = 0), move if sign (SF = 1), and/or move if zero (ZF = 1).

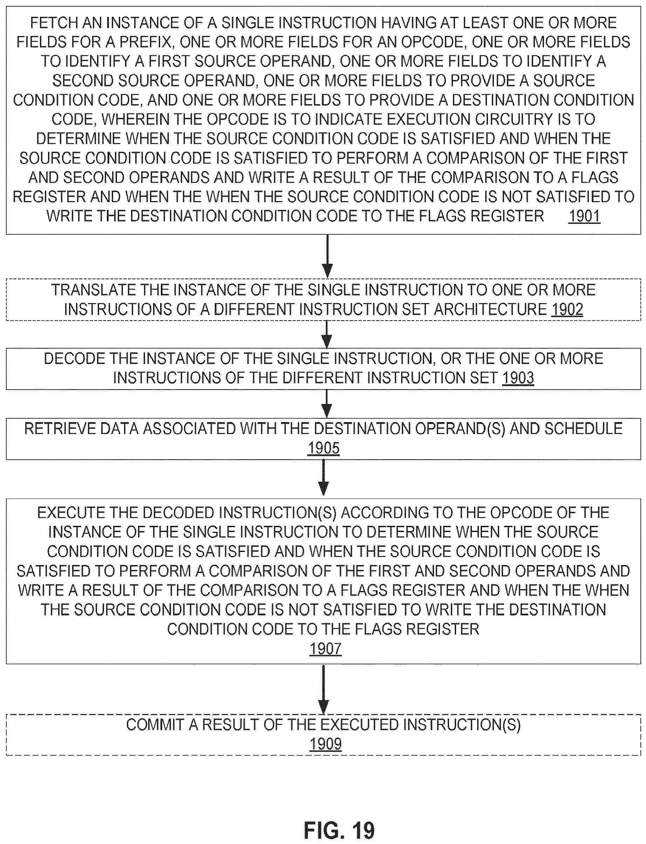

FIG. 19 illustrates an example method to process a CCMPcc instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 1901. In some examples, the instance of the single instruction of the first instruction set architecture includes at least one or more fields for a prefix, one or more fields for an opcode, one or more fields to identify a first source operand, one or more fields to identify a second source operand, one or more fields to provide a source condition code, and one or more fields to provide a destination condition code, wherein the opcode is to indicate execution circuitry is to determine when the source condition code is satisfied and when the source condition code is satisfied to perform a comparison of the first and second operands and write a result of the comparison to a flags register and when the when the source condition code is not satisfied to write the destination condition code to the flags register.

In some examples, the flags of the comparison are those of a subtraction. That is OF and CF indicate an overflow in the signed or unsigned result, respectively. SF indicates the sign of the signed result. ZF indicates a zero result. PF is set if the least-significant byte of the result contains an even number of 1 bits. AF (auxiliary flag) is set if the subtraction operation generates a carry or a borrow out of bit 3 of the result.

In some examples, the fetched single instruction of the first instruction set architecture is translated into one or more instructions of a second instruction set architecture at 1902. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 1903. For example, the translated instruction(s) is/are decoded by decoder circuitry such as decoder circuitry 2105 or decode circuitry 2940 detailed herein. In some examples, the operations of translation and decoding at 1902 and 1903 are merged.

Data values associated with the source operand(s) of the decoded instance of the single instruction, or the one or more instructions of the second instruction set architecture, is/are retrieved and the one or more instructions are scheduled at 1905.

At 1907, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set to indicate execution circuitry is to determine when the source condition code is satisfied and when the source condition code is satisfied to perform a comparison of the first and second operands and write a result of the comparison to a flags register and when the when the source condition code is not satisfied to write the destination condition code to the flags register.

In some examples, the flags of the comparison are those of a subtraction. That is OF and CF indicate an overflow in the signed or unsigned result, respectively. SF indicates the sign of the signed result. ZF indicates a zero result. PF is set if the least-significant byte of the result contains an even number of 1 bits. AF (auxiliary flag) is set if the subtraction operation generates a carry or a borrow out of bit 3 of the result. Example pseudocode for execution has been detailed above.

In some examples, the instruction is committed or retired at 1909.

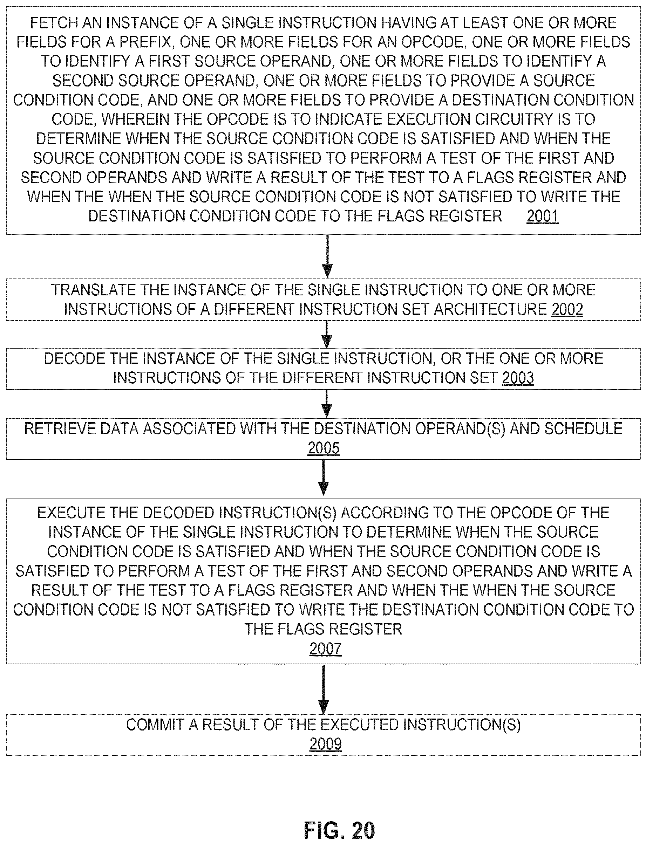

FIG. 20 illustrates an example method to process a CTESTcc instruction. In some examples, emulation or binary translation are utilized. For example, a processor core as shown in FIG. 29(B), a pipeline, and/or emulation/translation layer perform aspects of this method.

An instance of a single instruction of a first instruction set architecture is fetched at 2001. In some examples, the instance of the single instruction of the first instruction set architecture includes at least one or more fields for a prefix, one or more fields for an opcode, one or more fields to identify a first source operand, one or more fields to identify a second source operand, one or more fields to provide a source condition code, and one or more fields to provide a destination condition code, wherein the opcode is to indicate execution circuitry is to determine when the source condition code is satisfied and when the source condition code is satisfied to perform a test of the first and second operands and write a result of the test to a flags register and when the when the source condition code is not satisfied to write the destination condition code to the flags register. In some examples, the test is a logical AND. In some examples, flags are set as follows:
TEMP := SRC1 AND SRC2;
SF := MSB(TEMP);
IF TEMP = 0
THEN ZF := 1;
ELSE ZF := 0;
FI:
   PF := BitwiseXNOR(TEMP[0:7]);
   CF := 0;
   OF := 0;
   (^{∗} AF is undefined ^{∗})

In some examples, the fetched single instruction of the first instruction set architecture is translated into one or more instructions of a second instruction set architecture at 2002. This translation is performed by a translation and/or emulation layer of software in some examples. In some examples, this translation is performed by an instruction converter 4112 as shown in FIG. 41. In some examples, the translation is performed by hardware translation circuitry.

The instance of the single instruction, or the one or more translated instructions of the second instruction set architecture, is/are decoded at 2003. For example, the translated instruction(s) is/are decoded by decoder circuitry such as decoder circuitry 2105 or decode circuitry 2940 detailed herein. In some examples, the operations of translation and decoding at 2002 and 2003 are merged.

Data values associated with the source operand(s) of the decoded instance of the single instruction, or the one or more instructions of the second instruction set architecture, is/are retrieved and the one or more instructions are scheduled at 2005.

At 2007, the decoded instruction(s)is/are executed by execution circuitry (hardware) such as execution circuitry detailed above, execution circuitry 2109 shown in FIG. 21, or execution cluster(s) 2960 shown in FIG. 29(B), to perform the operation(s) indicated by the opcode of the single instruction of the first instruction set to determine when the source condition code is satisfied and when the source condition code is satisfied to perform a test of the first and second operands and write a result of the test to a flags register and when the when the source condition code is not satisfied to write the destination condition code to the flags register. Example pseudocode for execution has been detailed above.

In some examples, the instruction is committed or retired at 2009.

In some examples, the extended register state (the additional GPRs or extended GPRs (EGPRs)) may be context switched using an instruction (e.g., XSAVE instruction). In some examples, the EGPRs are only directly accessible within 64-bit mode. Outside of 64-bit mode, the EGPRs can be accessed via XSAVE ISA features, as they are part of APX's extension to the user-level XSAVE area.

APX's EGPRs, while only directly accessible in 64-bit mode, retain their value as this mode is entered/exited within the current execution context. Entering/leaving 64-bit mode via traditional (explicit) control does not directly alter the content of the EGPRs (EGPRs behave similar to r8-r15 in this regard). Additionally, entering/leaving 64-bit long mode via events, exceptions, interrupts, VM Exits, system calls, etc. does not directly alter the content of the EGPRs.

EGPR content is modified directly by APX instructions which choose to write EGPRs as destination registers, and indirectly via XRSTOR-like operations which target APX state through the use of a Requested Feature Bitmap (RFBM) with RFBM.APX=1.

APX's XSAVE-managed state purposefully includes EGPRs as a form of state encapsulation, which provides an easy path for OS/VMM enabling of APX without necessitating that kernels/VMMs be re-compiled to use APX ISA themselves (i.e. does not require manually saving/restoring EGPRs).

From an XSAVE perspective, EGPR state (r16-r31) are considered to be in \init" state if all of the registers have the value 0x0. XINUSE = 0 when this condition is met, although as with baseline x86 architecture, it's possible for all of the EPGRs to be 0x0, while XINUSE = 1. All instructions which can impact EGPR state (r16-r31), either directly or indirectly, are capable of toggling XINUSE trackers for EGPR state so that init/modified optimizations with respect to XSAVE occur properly. APX state can be made INIT only via XRSTOR* instruction.

An example of an XSAVE save state area that supports APX is shown in the table below

| **Index** | **Feature** | **User/Supervisor** | **Size (in bytes)** | **Offset** | **Cache Line Alignment Enumeration** |
|---|---|---|---|---|---|
| 0 | FP | User | 512 | 0 | 0 |
| 1 | SSE | User | | 0 | 0 |
| 2 | AVX | User | 256 | 576 | 0 |
| 3 | MPX | User | 64 | 960 | 0 |
| 4 | | User | 64 | 1024 | 0 |
| 5 | AVX 512 | User | 64 | 1088 | 0 |
| 6 | | User | 512 | 1152 | 0 |
| 7 | | User | 1024 | 1664 | 0 |
| 8 | IPT in IA32_XSS | Supervisor | 128 | 0 | 0 |
| 9 | Protection Keys | User | 8 | 2688 | 0 |
| 10 | AIA ENQ | Supervisor | 8 | 0 | 0 |
| 11 | CET_U in IA32_XSS | Supervisor | 24 | 0 | 0 |
| 12 | CET_S in IA32_XSS | Supervisor | 24 | 0 | 0 |
| 13 | HDC in IA32_XSS | Supervisor | 8 | 0 | 0 |
| 15 | Arch LBR | Supervisor | 808 | 0 | 0 |
| 14 | User Mode Interrupts | Supervisor | 64 | 0 | 0 |
| 16 | HWP | Supervisor | 8 | 0 | 0 |
| 17 | AMX (TMUL) XTICECONFIG | User | 64 | 2752 | 1 |
| 18 | AMX (TMUL) XTILEDATA | User | 8k | 2816 | 1 |
| 19 | APX User-State | User | 128 | 11008 | 0 |

In other examples, MPX is replaced with APX.

FIG. 21 illustrates examples of computing hardware to at least process one more of the instructions detailed above. The instruction may be any of the above detailed instructions, however, the hardware also supports other instructions not described. As illustrated, storage 2103 stores an instruction 2101 to be executed to be fetched by fetch circuitry 2104.

The instruction 2101 is received by decoder circuitry 2105. For example, the decoder circuitry 2105 receives this instruction from fetch circuitry. The instruction may be in any suitable format, such as those detailed herein. In some examples, the decoder circuitry 2105 includes pre-decode circuitry to determine information about the instruction such as length, prefix, etc.

The instruction information (and instruction) is provided to instruction decoder(s) circuitry 2123 to be decoded. In some examples, the decoding is into one or more uops. In some examples, the instruction decoder(s) circuitry 2123 consults one or more opcode maps 2125 as a part of the decoding process. In some examples, a microsequencer ROM (MSROM) 2127 stores multiple uop flows. The decoder circuitry 2105 also performs undefined and general protection fault checks. In some examples, the above instructions are subject to executability controls that are defined in a MSR (e.g., XCR0.APX and XFD.APX).

Decoded instructions and/or uops are provided to register renaming, register allocation, and/or scheduling circuitry 2107. In some examples, register renaming, register allocation, and/or scheduling circuitry 2107 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

Registers (register file) and/or memory 2108 store data as operands of the instruction to be operated by execution circuitry 2109. Example register types include packed data registers, general purpose registers (GPRs), and floating-point registers.

Execution circuitry 2109 executes the decoded instruction and/or uops. Example detailed execution circuitry includes execution circuitry shown herein. In some examples, the execution circuitry 2109 supports 32 GPRs, NDD, explicit flags control, the above detailed instructions, etc.

In some examples, retirement/write back circuitry 2111 architecturally commits the destination register into the registers or memory 2108 and retires the instruction. In some examples, the retirement/write back circuitry 2111 supports 32 GPRs, NDD, explicit flags control, the above detailed instructions, etc.

Some examples utilize instruction formats described herein. Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

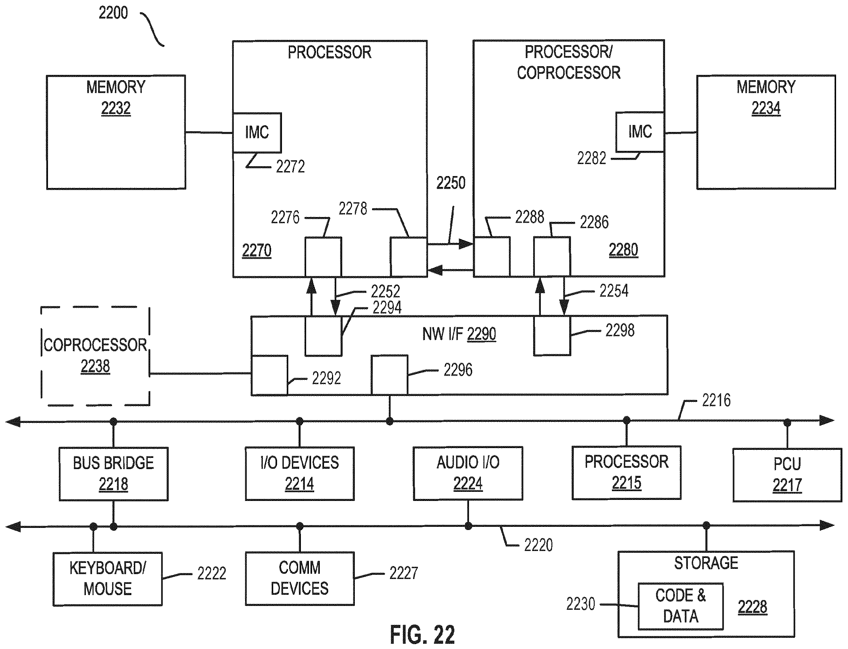

FIG. 22 illustrates an example computing system. Multiprocessor system 2200 is an interfaced system and includes a plurality of processors or cores including a first processor 2270 and a second processor 2280 coupled via an interface 2250 such as a point-to-point (P-P) interconnect, a fabric, and/or bus. In some examples, the first processor 2270 and the second processor 2280 are homogeneous. In some examples, first processor 2270 and the second processor 2280 are heterogenous. Though the example system 2200 is shown to have two processors, the system may have three or more processors, or may be a single processor system. In some examples, the computing system is a system on a chip (SoC).

Processors 2270 and 2280 are shown including integrated memory controller (IMC) circuitry 2272 and 2282, respectively. Processor 2270 also includes interface circuits 2276 and 2278; similarly, second processor 2280 includes interface circuits 2286 and 2288. Processors 2270, 2280 may exchange information via the interface 2250 using interface circuits 2278, 2288. IMCs 2272 and 2282 couple the processors 2270, 2280 to respective memories, namely a memory 2232 and a memory 2234, which may be portions of main memory locally attached to the respective processors.

Processors 2270, 2280 may each exchange information with a network interface (NW I/F) 2290 via individual interfaces 2252, 2254 using interface circuits 2276, 2294, 2286, 2298. The network interface 2290 (e.g., one or more of an interconnect, bus, and/or fabric, and in some examples is a chipset) may optionally exchange information with a coprocessor 2238 via an interface circuit 2292. In some examples, the coprocessor 2238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 2270, 2280 or outside of both processors, yet connected with the processors via an interface such as P-P interconnect, such that either or both processors' local cache information may be stored in the shared cache if a processor is placed into a low power mode.

Network interface 2290 may be coupled to a first interface 2216 via interface circuit 2296. In some examples, first interface 2216 may be an interface such as a Peripheral Component Interconnect (PCI) interconnect, a PCI Express interconnect or another I/O interconnect. In some examples, first interface 2216 is coupled to a power control unit (PCU) 2217, which may include circuitry, software, and/or firmware to perform power management operations with regard to the processors 2270, 2280 and/or co-processor 2238. PCU 2217 provides control information to a voltage regulator (not shown) to cause the voltage regulator to generate the appropriate regulated voltage. PCU 2217 also provides control information to control the operating voltage generated. In various examples, PCU 2217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 2217 is illustrated as being present as logic separate from the processor 2270 and/or processor 2280. In other cases, PCU 2217 may execute on a given one or more of cores (not shown) of processor 2270 or 2280. In some cases, PCU 2217 may be implemented as a microcontroller (dedicated or general-purpose) or other control logic configured to execute its own dedicated power management code, sometimes referred to as P-code. In yet other examples, power management operations to be performed by PCU 2217 may be implemented externally to a processor, such as by way of a separate power management integrated circuit (PMIC) or another component external to the processor. In yet other examples, power management operations to be performed by PCU 2217 may be implemented within BIOS or other system software.

Various I/O devices 2214 may be coupled to first interface 2216, along with a bus bridge 2218 which couples first interface 2216 to a second interface 2220. In some examples, one or more additional processor(s) 2215, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 2216. In some examples, second interface 2220 may be a low pin count (LPC) interface. Various devices may be coupled to second interface 2220 including, for example, a keyboard and/or mouse 2222, communication devices 2227 and storage circuitry 2228. Storage circuitry 2228 may be one or more non-transitory machine-readable storage media as described below, such as a disk drive or other mass storage device which may include instructions/code and data 2230 and may implement the storage 2103 in some examples. Further, an audio I/O 2224 may be coupled to second interface 2220. Note that other architectures than the point-to-point architecture described above are possible. For example, instead of the point-to-point architecture, a system such as multiprocessor system 2200 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

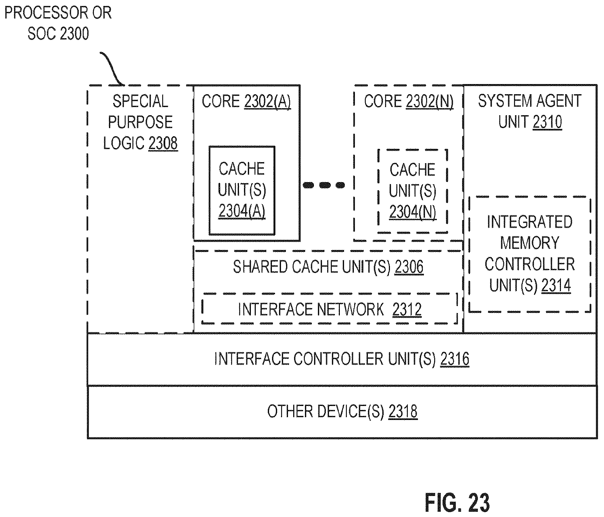

FIG. 23 illustrates a block diagram of an example processor and/or SoC 2300 that may have one or more cores and an integrated memory controller. The solid lined boxes illustrate a processor 2300 with a single core 2302(A), system agent unit circuitry 2310, and a set of one or more interface controller unit(s) circuitry 2316, while the optional addition of the dashed lined boxes illustrates an alternative processor 2300 with multiple cores 2302(A)-(N), a set of one or more integrated memory controller unit(s) circuitry 2314 in the system agent unit circuitry 2310, and special purpose logic 2308, as well as a set of one or more interface controller units circuitry 2316. Note that the processor 2300 may be one of the processors 2270 or 2280, or co-processor 2238 or 2215 of FIG. 22.

Thus, different implementations of the processor 2300 may include: 1) a CPU with the special purpose logic 2308 being integrated graphics and/or scientific (throughput) logic (which may include one or more cores, not shown), and the cores 2302(A)-(N) being one or more general purpose cores (e.g., general purpose in-order cores, general purpose out-of-order cores, or a combination of the two); 2) a coprocessor with the cores 2302(A)-(N) being a large number of special purpose cores intended primarily for graphics and/or scientific (throughput); and 3) a coprocessor with the cores 2302(A)-(N) being a large number of general purpose in-order cores. Thus, the processor 2300 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 2300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 2304(A)-(N) within the cores 2302(A)-(N), a set of one or more shared cache unit(s) circuitry 2306, and external memory (not shown) coupled to the set of integrated memory controller unit(s) circuitry 2314. The set of one or more shared cache unit(s) circuitry 2306 may include one or more mid-level caches, such as level 2 (L2), level 3 (L3), level 4 (L4), or other levels of cache, such as a last level cache (LLC), and/or combinations thereof. While in some examples interface network circuitry 2312 (e.g., a ring interconnect) interfaces the special purpose logic 2308 (e.g., integrated graphics logic), the set of shared cache unit(s) circuitry 2306, and the system agent unit circuitry 2310, alternative examples use any number of well-known techniques for interfacing such units. In some examples, coherency is maintained between one or more of the shared cache unit(s) circuitry 2306 and cores 2302(A)-(N). In some examples, interface controller units circuitry 2316 couple the cores 2302 to one or more other devices 2318 such as one or more I/O devices, storage, one or more communication devices (e.g., wireless networking, wired networking, etc.), etc.

In some examples, one or more of the cores 2302(A)-(N) are capable of multi-threading. The system agent unit circuitry 2310 includes those components coordinating and operating cores 2302(A)-(N). The system agent unit circuitry 2310 may include, for example, power control unit (PCU) circuitry and/or display unit circuitry (not shown). The PCU may be or may include logic and components needed for regulating the power state of the cores 2302(A)-(N) and/or the special purpose logic 2308 (e.g., integrated graphics logic). The display unit circuitry is for driving one or more externally connected displays.

The cores 2302(A)-(N) may be homogenous in terms of instruction set architecture (ISA). Alternatively, the cores 2302(A)-(N) may be heterogeneous in terms of ISA; that is, a subset of the cores 2302(A)-(N) may be capable of executing an ISA, while other cores may be capable of executing only a subset of that ISA or another ISA.

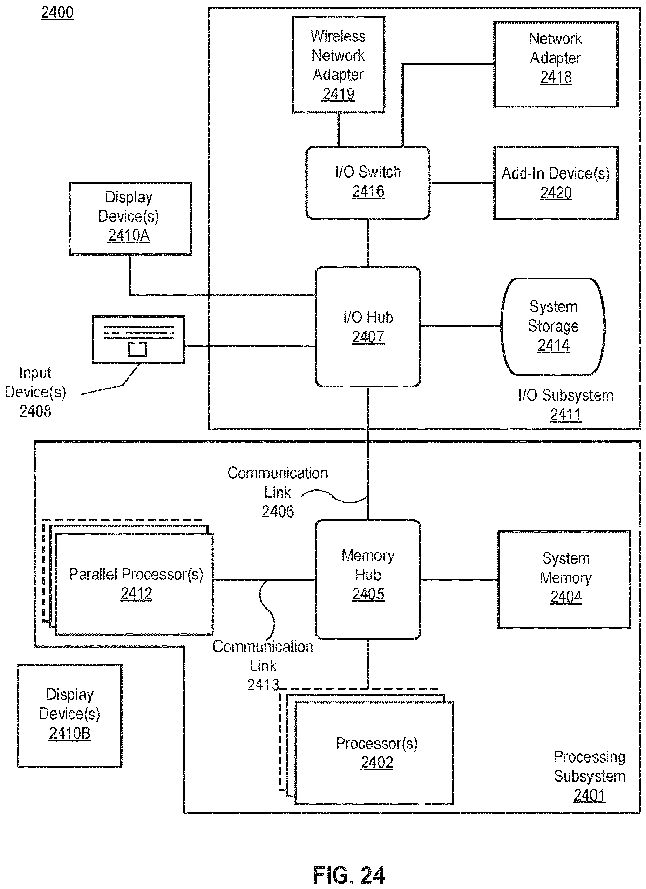

FIG. 24 is a block diagram illustrating a computing system 2400 configured to implement one or more aspects of the examples described herein. The computing system 2400 includes a processing subsystem 2401 having one or more processor(s) 2402 and a system memory 2404 communicating via an interconnection path that may include a memory hub 2405. The memory hub 2405 may be a separate component within a chipset component or may be integrated within the one or more processor(s) 2402. The memory hub 2405 couples with an I/O subsystem 2411 via a communication link 2406. The I/O subsystem 2411 includes an I/O hub 2407 that can enable the computing system 2400 to receive input from one or more input device(s) 2408. Additionally, the I/O hub 2407 can enable a display controller, which may be included in the one or more processor(s) 2402, to provide outputs to one or more display device(s) 2410A. In some examples the one or more display device(s) 2410A coupled with the I/O hub 2407 can include a local, internal, or embedded display device.

The processing subsystem 2401, for example, includes one or more parallel processor(s) 2412 coupled to memory hub 2405 via a bus or other communication link 2413. The communication link 2413 may be one of any number of standards-based communication link technologies or protocols, such as, but not limited to PCI Express, or may be a vendor specific communications interface or communications fabric. The one or more parallel processor(s) 2412 may form a computationally focused parallel or vector processing system that can include a large number of processing cores and/or processing clusters, such as a many integrated core (MIC) processor. For example, the one or more parallel processor(s) 2412 form a graphics processing subsystem that can output pixels to one of the one or more display device(s) 2410A coupled via the I/O hub 2407. The one or more parallel processor(s) 2412 can also include a display controller and display interface (not shown) to enable a direct connection to one or more display device(s) 2410B.

Within the I/O subsystem 2411, a system storage unit 2414 can connect to the I/O hub 2407 to provide a storage mechanism for the computing system 2400. An I/O switch 2416 can be used to provide an interface mechanism to enable connections between the I/O hub 2407 and other components, such as a network adapter 2418 and/or wireless network adapter 2419 that may be integrated into the platform, and various other devices that can be added via one or more add-in device(s) 2420. The add-in device(s) 2420 may also include, for example, one or more external graphics processor devices, graphics cards, and/or compute accelerators. The network adapter 2418 can be an Ethernet adapter or another wired network adapter. The wireless network adapter 2419 can include one or more of a Wi-Fi, Bluetooth, near field communication (NFC), or other network device that includes one or more wireless radios.

The computing system 2400 can include other components not explicitly shown, including USB or other port connections, optical storage drives, video capture devices, and the like, which may also be connected to the I/O hub 2407. Communication paths interconnecting the various components in FIG. 24 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 2412 may incorporate circuitry optimized for graphics and video processing, including, for example, video output circuitry, and constitutes a graphics processing unit (GPU). Alternatively or additionally, the one or more parallel processor(s) 2412 can incorporate circuitry optimized for general purpose processing, while preserving the underlying computational architecture, described in greater detail herein. Components of the computing system 2400 may be integrated with one or more other system elements on a single integrated circuit. For example, the one or more parallel processor(s) 2412, memory hub 2405, processor(s) 2402, and I/O hub 2407 can be integrated into a system on chip (SoC) integrated circuit. Alternatively, the components of the computing system 2400 can be integrated into a single package to form a system in package (SIP) configuration. In some examples at least a portion of the components of the computing system 2400 can be integrated into a multi-chip module (MCM), which can be interconnected with other multi-chip modules into a modular computing system.

It will be appreciated that the computing system 2400 shown herein is illustrative and that variations and modifications are possible. The connection topology, including the number and arrangement of bridges, the number of processor(s) 2402, and the number of parallel processor(s) 2412, may be modified as desired. For instance, system memory 2404 can be connected to the processor(s) 2402 directly rather than through a bridge, while other devices communicate with system memory 2404 via the memory hub 2405 and the processor(s) 2402. In other alternative topologies, the parallel processor(s) 2412 are connected to the I/O hub 2407 or directly to one of the one or more processor(s) 2402, rather than to the memory hub 2405. In other examples, the I/O hub 2407 and memory hub 2405 may be integrated into a single chip. It is also possible that two or more sets of processor(s) 2402 are attached via multiple sockets, which can couple with two or more instances of the parallel processor(s) 2412.

Some of the particular components shown herein are optional and may not be included in all implementations of the computing system 2400. For example, any number of add-in cards or peripherals may be supported, or some components may be eliminated. Furthermore, some architectures may use different terminology for components similar to those illustrated in FIG. 24. For example, the memory hub 2405 may be referred to as a Northbridge in some architectures, while the I/O hub 2407 may be referred to as a Southbridge.

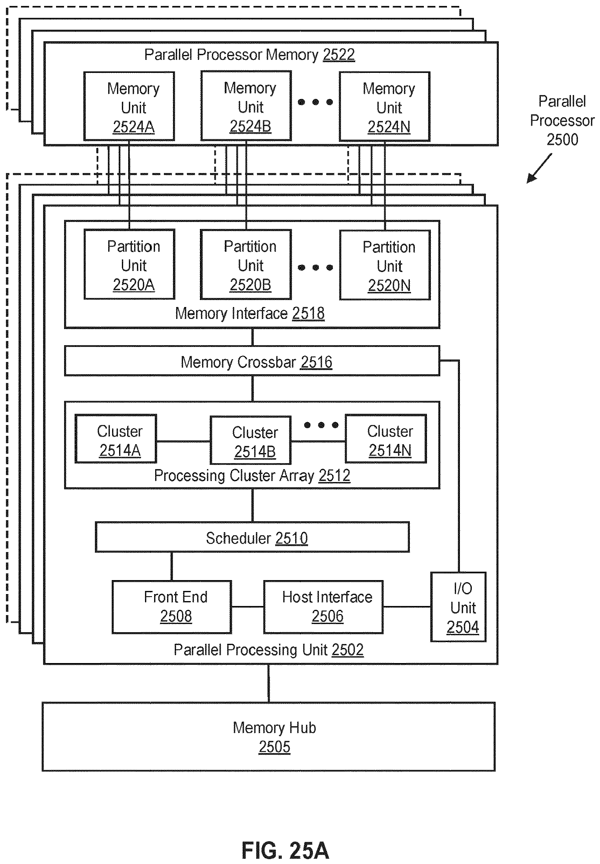

FIG. 25A illustrates examples of a parallel processor 2500. The parallel processor 2500 may be a GPU, GPGPU or the like as described herein. The various components of the parallel processor 2500 may be implemented using one or more integrated circuit devices, such as programmable processors, application specific integrated circuits (ASICs), or field programmable gate arrays (FPGA). The illustrated parallel processor 2500 may be one or more of the parallel processor(s) 2412 shown in FIG. 24.

The parallel processor 2500 includes a parallel processing unit 2502. The parallel processing unit includes an I/O unit 2504 that enables communication with other devices, including other instances of the parallel processing unit 2502. The I/O unit 2504 may be directly connected to other devices. For instance, the I/O unit 2504 connects with other devices via the use of a hub or switch interface, such as memory hub 2405. The connections between the memory hub 2405 and the I/O unit 2504 form a communication link 2413. Within the parallel processing unit 2502, the I/O unit 2504 connects with a host interface 2506 and a memory crossbar 2516, where the host interface 2506 receives commands directed to performing processing operations and the memory crossbar 2516 receives commands directed to performing memory operations.

When the host interface 2506 receives a command buffer via the I/O unit 2504, the host interface 2506 can direct work operations to perform those commands to a front end 2508. In some examples the front end 2508 couples with a scheduler 2510, which is configured to distribute commands or other work items to a processing cluster array 2512. The scheduler 2510 ensures that the processing cluster array 2512 is properly configured and in a valid state before tasks are distributed to the processing clusters of the processing cluster array 2512. The scheduler 2510 may be implemented via firmware logic executing on a microcontroller. The microcontroller implemented scheduler 2510 is configurable to perform complex scheduling and work distribution operations at coarse and fine granularity, enabling rapid preemption and context switching of threads executing on the processing cluster array 2512. Preferably, the host software can prove workloads for scheduling on the processing cluster array 2512 via one of multiple graphics processing doorbells. In other examples, polling for new workloads or interrupts can be used to identify or indicate availability of work to perform. The workloads can then be automatically distributed across the processing cluster array 2512 by the scheduler 2510 logic within the scheduler microcontroller.

The processing cluster array 2512 can include up to "N" processing clusters (e.g., cluster 2514A, cluster 2514B, through cluster 2514N). Each cluster 2514A-2514N of the processing cluster array 2512 can execute a large number of concurrent threads. The scheduler 2510 can allocate work to the clusters 2514A-2514N of the processing cluster array 2512 using various scheduling and/or work distribution algorithms, which may vary depending on the workload arising for each type of program or computation. The scheduling can be handled dynamically by the scheduler 2510 or can be assisted in part by compiler logic during compilation of program logic configured for execution by the processing cluster array 2512. Optionally, different clusters 2514A-2514N of the processing cluster array 2512 can be allocated for processing different types of programs or for performing different types of computations.

The processing cluster array 2512 can be configured to perform various types of parallel processing operations. For example, the processing cluster array 2512 is configured to perform general-purpose parallel compute operations. For example, the processing cluster array 2512 can include logic to execute processing tasks including filtering of video and/or audio data, performing modeling operations, including physics operations, and performing data transformations.

The processing cluster array 2512 is configured to perform parallel graphics processing operations. In such examples in which the parallel processor 2500 is configured to perform graphics processing operations, the processing cluster array 2512 can include additional logic to support the execution of such graphics processing operations, including, but not limited to texture sampling logic to perform texture operations, as well as tessellation logic and other vertex processing logic. Additionally, the processing cluster array 2512 can be configured to execute graphics processing related shader programs such as, but not limited to vertex shaders, tessellation shaders, geometry shaders, and pixel shaders. The parallel processing unit 2502 can transfer data from system memory via the I/O unit 2504 for processing. During processing the transferred data can be stored to on-chip memory (e.g., parallel processor memory 2522) during processing, then written back to system memory.

In examples in which the parallel processing unit 2502 is used to perform graphics processing, the scheduler 2510 may be configured to divide the processing workload into approximately equal sized tasks, to better enable distribution of the graphics processing operations to multiple clusters 2514A-2514N of the processing cluster array 2512. In some of these examples, portions of the processing cluster array 2512 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 2514A-2514N may be stored in buffers to allow the intermediate data to be transmitted between clusters 2514A-2514N for further processing.

During operation, the processing cluster array 2512 can receive processing tasks to be executed via the scheduler 2510, which receives commands defining processing tasks from front end 2508. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 2510 may be configured to fetch the indices corresponding to the tasks or may receive the indices from the front end 2508. The front end 2508 can be configured to ensure the processing cluster array 2512 is configured to a valid state before the workload specified by incoming command buffers (e.g., batch-buffers, push buffers, etc.) is initiated.

Each of the one or more instances of the parallel processing unit 2502 can couple with parallel processor memory 2522. The parallel processor memory 2522 can be accessed via the memory crossbar 2516, which can receive memory requests from the processing cluster array 2512 as well as the I/O unit 2504. The memory crossbar 2516 can access the parallel processor memory 2522 via a memory interface 2518. The memory interface 2518 can include multiple partition units (e.g., partition unit 2520A, partition unit 2520B, through partition unit 2520N) that can each couple to a portion (e.g., memory unit) of parallel processor memory 2522. The number of partition units 2520A-2520N may be configured to be equal to the number of memory units, such that a first partition unit 2520A has a corresponding first memory unit 2524A, a second partition unit 2520B has a corresponding second memory unit 2524B, and an Nth partition unit 2520N has a corresponding Nth memory unit 2524N. In other examples, the number of partition units 2520A-2520N may not be equal to the number of memory devices.

The memory units 2524A-2524N can include various types of memory devices, including dynamic random-access memory (DRAM) or graphics random access memory, such as synchronous graphics random access memory (SGRAM), including graphics double data rate (GDDR) memory. Optionally, the memory units 2524A-2524N may also include 3D stacked memory, including but not limited to high bandwidth memory (HBM). Persons skilled in the art will appreciate that the specific implementation of the memory units 2524A-2524N can vary and can be selected from one of various conventional designs. Render targets, such as frame buffers or texture maps may be stored across the memory units 2524A-2524N, allowing partition units 2520A-2520N to write portions of each render target in parallel to efficiently use the available bandwidth of parallel processor memory 2522. In some examples, a local instance of the parallel processor memory 2522 may be excluded in favor of a unified memory design that utilizes system memory in conjunction with local cache memory.

Optionally, any one of the clusters 2514A-2514N of the processing cluster array 2512 has the ability to process data that will be written to any of the memory units 2524A-2524N within parallel processor memory 2522. The memory crossbar 2516 can be configured to transfer the output of each cluster 2514A-2514N to any partition unit 2520A-2520N or to another cluster 2514A-2514N, which can perform additional processing operations on the output. Each cluster 2514A-2514N can communicate with the memory interface 2518 through the memory crossbar 2516 to read from or write to various external memory devices. In one of the examples with the memory crossbar 2516 the memory crossbar 2516 has a connection to the memory interface 2518 to communicate with the I/O unit 2504, as well as a connection to a local instance of the parallel processor memory 2522, enabling the processing units within the different processing clusters 2514A-2514N to communicate with system memory or other memory that is not local to the parallel processing unit 2502. Generally, the memory crossbar 2516 may, for example, be able to use virtual channels to separate traffic streams between the clusters 2514A-2514N and the partition units 2520A-2520N.

While a single instance of the parallel processing unit 2502 is illustrated within the parallel processor 2500, any number of instances of the parallel processing unit 2502 can be included. For example, multiple instances of the parallel processing unit 2502 can be provided on a single add-in card, or multiple add-in cards can be interconnected. For example, the parallel processor 2500 can be an add-in device, such as add-in device 2420 of FIG. 24, which may be a graphics card such as a discrete graphics card that includes one or more GPUs, one or more memory devices, and device-to-device or network or fabric interfaces. The different instances of the parallel processing unit 2502 can be configured to inter-operate even if the different instances have different numbers of processing cores, different amounts of local parallel processor memory, and/or other configuration differences. Optionally, some instances of the parallel processing unit 2502 can include higher precision floating point units relative to other instances. Systems incorporating one or more instances of the parallel processing unit 2502 or the parallel processor 2500 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 2502 can be partitioned into multiple instances. Those multiple instances can be configured to execute workloads associated with different clients in an isolated manner, enabling a pre-determined quality of service to be provided for each client. For example, each cluster 2514A-2514N can be compartmentalized and isolated from other clusters, allowing the processing cluster array 2512 to be divided into multiple compute partitions or instances. In such configuration, workloads that execute on an isolated partition are protected from faults or errors associated with a different workload that executes on a different partition. The partition units 2520A-2520N can be configured to enable a dedicated and/or isolated path to memory for the clusters 2514A-2514N associated with the respective compute partitions. This datapath isolation enables the compute resources within a partition can communicate with one or more assigned memory units 2524A-2524N without being subjected to inference by the activities of other partitions.

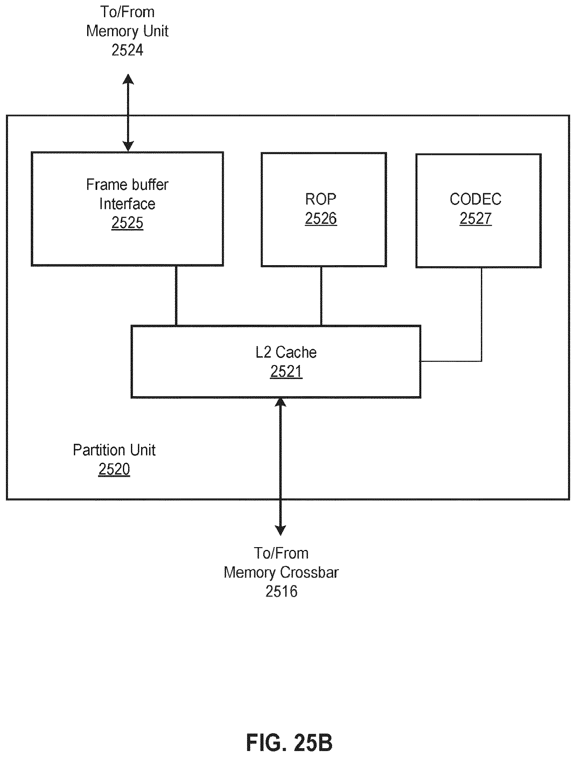

FIG. 25B is a block diagram of a partition unit 2520. The partition unit 2520 may be an instance of one of the partition units 2520A-2520N of FIG. 25A. As illustrated, the partition unit 2520 includes an L2 cache 2521, a frame buffer interface 2525, and a ROP 2526 (raster operations unit). The L2 cache 2521 is a read/write cache that is configured to perform load and store operations received from the memory crossbar 2516 and ROP 2526. Read misses and urgent write-back requests are output by L2 cache 2521 to frame buffer interface 2525 for processing. Updates can also be sent to the frame buffer via the frame buffer interface 2525 for processing. In some examples the frame buffer interface 2525 interfaces with one of the memory units in parallel processor memory, such as the memory units 2524A-2524N of FIG. 25A (e.g., within parallel processor memory 2522). The partition unit 2520 may additionally or alternatively also interface with one of the memory units in parallel processor memory via a memory controller (not shown).

In graphics applications, the ROP 2526 is a processing unit that performs raster operations such as stencil, z test, blending, and the like. The ROP 2526 then outputs processed graphics data that is stored in graphics memory. In some examples the ROP 2526 includes or couples with a CODEC 2527 that includes compression logic to compress depth or color data that is written to memory or the L2 cache 2521 and decompress depth or color data that is read from memory or the L2 cache 2521. The compression logic can be lossless compression logic that makes use of one or more of multiple compression algorithms. The type of compression that is performed by the CODEC 2527 can vary based on the statistical characteristics of the data to be compressed. For example, in some examples, delta color compression is performed on depth and color data on a per-tile basis. In some examples the CODEC 2527 includes compression and decompression logic that can compress and decompress compute data associated with machine learning operations. The CODEC 2527 can, for example, compress sparse matrix data for sparse machine learning operations. The CODEC 2527 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 2526 may be included within each processing cluster (e.g., cluster 2514A-2514N of FIG. 25A) instead of within the partition unit 2520. In such example, read and write requests for pixel data are transmitted over the memory crossbar 2516 instead of pixel fragment data. The processed graphics data may be displayed on a display device, such as one of the one or more display device(s) 2410A-2410B of FIG. 24, routed for further processing by the processor(s) 2402, or routed for further processing by one of the processing entities within the parallel processor 2500 of FIG. 25A.

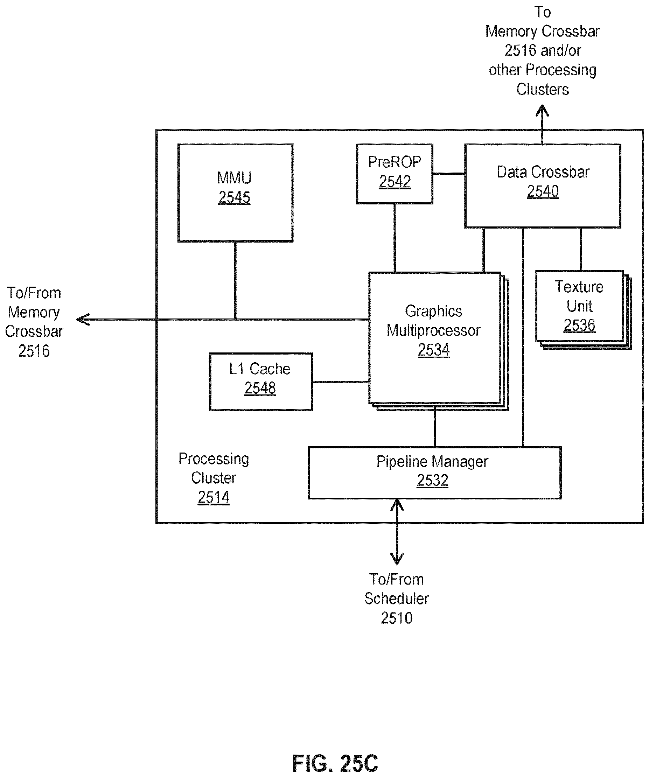

FIG. 25C is a block diagram of a processing cluster 2514 within a parallel processing unit. For example, the processing cluster is an instance of one of the processing clusters 2514A-2514N of FIG. 25A. The processing cluster 2514 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 2514 can be controlled via a pipeline manager 2532 that distributes processing tasks to SIMT parallel processors. The pipeline manager 2532 receives instructions from the scheduler 2510 of FIG. 25A and manages execution of those instructions via a graphics multiprocessor 2534 and/or a texture unit 2536. The illustrated graphics multiprocessor 2534 is an exemplary instance of a SIMT parallel processor. However, various types of SIMT parallel processors of differing architectures may be included within the processing cluster 2514. One or more instances of the graphics multiprocessor 2534 can be included within a processing cluster 2514. The graphics multiprocessor 2534 can process data and a data crossbar 2540 can be used to distribute the processed data to one of multiple possible destinations, including other shader units. The pipeline manager 2532 can facilitate the distribution of processed data by specifying destinations for processed data to be distributed via the data crossbar 2540.

Each graphics multiprocessor 2534 within the processing cluster 2514 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 2514 constitute a thread. A set of threads executing across the set of parallel processing engines is a thread group. A thread group executes the same program on different input data. Each thread within a thread group can be assigned to a different processing engine within a graphics multiprocessor 2534. A thread group may include fewer threads than the number of processing engines within the graphics multiprocessor 2534. When a thread group includes fewer threads than the number of processing engines, one or more of the processing engines may be idle during cycles in which that thread group is being processed. A thread group may also include more threads than the number of processing engines within the graphics multiprocessor 2534. When the thread group includes more threads than the number of processing engines within the graphics multiprocessor 2534, processing can be performed over consecutive clock cycles. Optionally, multiple thread groups can be executed concurrently on the graphics multiprocessor 2534.

The graphics multiprocessor 2534 may include an internal cache memory to perform load and store operations. Optionally, the graphics multiprocessor 2534 can forego an internal cache and use a cache memory (e.g., level 1 (L1) cache 2548) within the processing cluster 2514. Each graphics multiprocessor 2534 also has access to level 2 (L2) caches within the partition units (e.g., partition units 2520A-2520N of FIG. 25A) that are shared among all processing clusters 2514 and may be used to transfer data between threads. The graphics multiprocessor 2534 may also access off-chip global memory, which can include one or more of local parallel processor memory and/or system memory. Any memory external to the parallel processing unit 2502 may be used as global memory. Embodiments in which the processing cluster 2514 includes multiple instances of the graphics multiprocessor 2534 can share common instructions and data, which may be stored in the L1 cache 2548.

Each processing cluster 2514 may include an MMU 2545 (memory management unit) that is configured to map virtual addresses into physical addresses. In other examples, one or more instances of the MMU 2545 may reside within the memory interface 2518 of FIG. 25A. The MMU 2545 includes a set of page table entries (PTEs) used to map a virtual address to a physical address of a tile and optionally a cache line index. The MMU 2545 may include address translation lookaside buffers (TLB) or caches that may reside within the graphics multiprocessor 2534 or the L1 cache 2548 of processing cluster 2514. The physical address is processed to distribute surface data access locality to allow efficient request interleaving among partition units. The cache line index may be used to determine whether a request for a cache line is a hit or miss.

In graphics and computing applications, a processing cluster 2514 may be configured such that each graphics multiprocessor 2534 is coupled to a texture unit 2536 for performing texture mapping operations, e.g., determining texture sample positions, reading texture data, and filtering the texture data. Texture data is read from an internal texture L1 cache (not shown) or in some examples from the L1 cache within graphics multiprocessor 2534 and is fetched from an L2 cache, local parallel processor memory, or system memory, as needed. Each graphics multiprocessor 2534 outputs processed tasks to the data crossbar 2540 to provide the processed task to another processing cluster 2514 for further processing or to store the processed task in an L2 cache, local parallel processor memory, or system memory via the memory crossbar 2516. A preROP 2542 (pre-raster operations unit) is configured to receive data from graphics multiprocessor 2534, direct data to ROP units, which may be located with partition units as described herein (e.g., partition units 2520A-2520N of FIG. 25A). The preROP 2542 unit can perform optimizations for color blending, organize pixel color data, and perform address translations.

It will be appreciated that the core architecture described herein is illustrative and that variations and modifications are possible. Any number of processing units, e.g., graphics multiprocessor 2534, texture units 2536, preROPs 2542, etc., may be included within a processing cluster 2514. Further, while only one processing cluster 2514 is shown, a parallel processing unit as described herein may include any number of instances of the processing cluster 2514. Optionally, each processing cluster 2514 can be configured to operate independently of other processing clusters 2514 using separate and distinct processing units, L1 caches, L2 caches, etc.

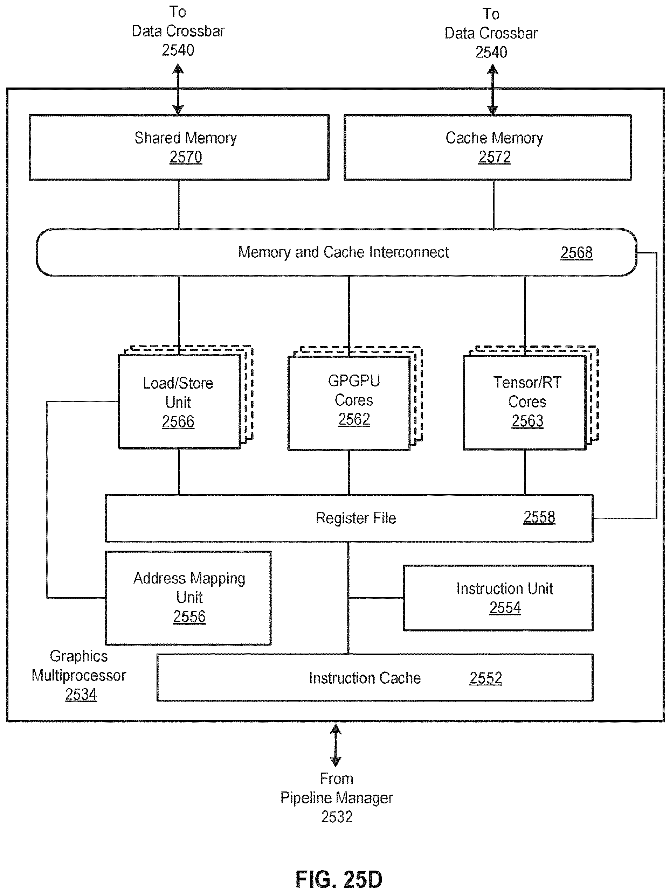

FIG. 25D shows an example of the graphics multiprocessor 2534 in which the graphics multiprocessor 2534 couples with the pipeline manager 2532 of the processing cluster 2514. The graphics multiprocessor 2534 has an execution pipeline including but not limited to an instruction cache 2552, an instruction unit 2554, an address mapping unit 2556, a register file 2558, one or more general purpose graphics processing unit (GPGPU) cores 2562, and one or more load/store units 2566. The GPGPU cores 2562 and load/store units 2566 are coupled with cache memory 2572 and shared memory 2570 via a memory and cache interconnect 2568. The graphics multiprocessor 2534 may additionally include tensor and/or ray-tracing cores 2563 that include hardware logic to accelerate matrix and/or ray-tracing operations.

The instruction cache 2552 may receive a stream of instructions to execute from the pipeline manager 2532. The instructions are cached in the instruction cache 2552 and dispatched for execution by the instruction unit 2554. The instruction unit 2554 can dispatch instructions as thread groups (e.g., warps), with each thread of the thread group assigned to a different execution unit within GPGPU core 2562. An instruction can access any of a local, shared, or global address space by specifying an address within a unified address space. The address mapping unit 2556 can be used to translate addresses in the unified address space into a distinct memory address that can be accessed by the load/store units 2566.

The register file 2558 provides a set of registers for the functional units of the graphics multiprocessor 2534. The register file 2558 provides temporary storage for operands connected to the data paths of the functional units (e.g., GPGPU cores 2562, load/store units 2566) of the graphics multiprocessor 2534. The register file 2558 may be divided between each of the functional units such that each functional unit is allocated a dedicated portion of the register file 2558. For example, the register file 2558 may be divided between the different warps being executed by the graphics multiprocessor 2534.

The GPGPU cores 2562 can each include floating point units (FPUs) and/or integer arithmetic logic units (ALUs) that are used to execute instructions of the graphics multiprocessor 2534. In some implementations, the GPGPU cores 2562 can include hardware logic that may otherwise reside within the tensor and/or ray-tracing cores 2563. The GPGPU cores 2562 can be similar in architecture or can differ in architecture. For example and in some examples, a first portion of the GPGPU cores 2562 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 2534 can additionally include one or more fixed function or special function units to perform specific functions such as copy rectangle or pixel blending operations. One or more of the GPGPU cores can also include fixed or special function logic.

The GPGPU cores 2562 may include SIMD logic capable of performing a single instruction on multiple sets of data. Optionally, GPGPU cores 2562 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 2568 is an interconnect network that connects each of the functional units of the graphics multiprocessor 2534 to the register file 2558 and to the shared memory 2570. For example, the memory and cache interconnect 2568 is a crossbar interconnect that allows the load/store unit 2566 to implement load and store operations between the shared memory 2570 and the register file 2558. The register file 2558 can operate at the same frequency as the GPGPU cores 2562, thus data transfer between the GPGPU cores 2562 and the register file 2558 is very low latency. The shared memory 2570 can be used to enable communication between threads that execute on the functional units within the graphics multiprocessor 2534. The cache memory 2572 can be used as a data cache for example, to cache texture data communicated between the functional units and the texture unit 2536. The shared memory 2570 can also be used as a program managed cached. The shared memory 2570 and the cache memory 2572 can couple with the data crossbar 2540 to enable communication with other components of the processing cluster. Threads executing on the GPGPU cores 2562 can programmatically store data within the shared memory in addition to the automatically cached data that is stored within the cache memory 2572.

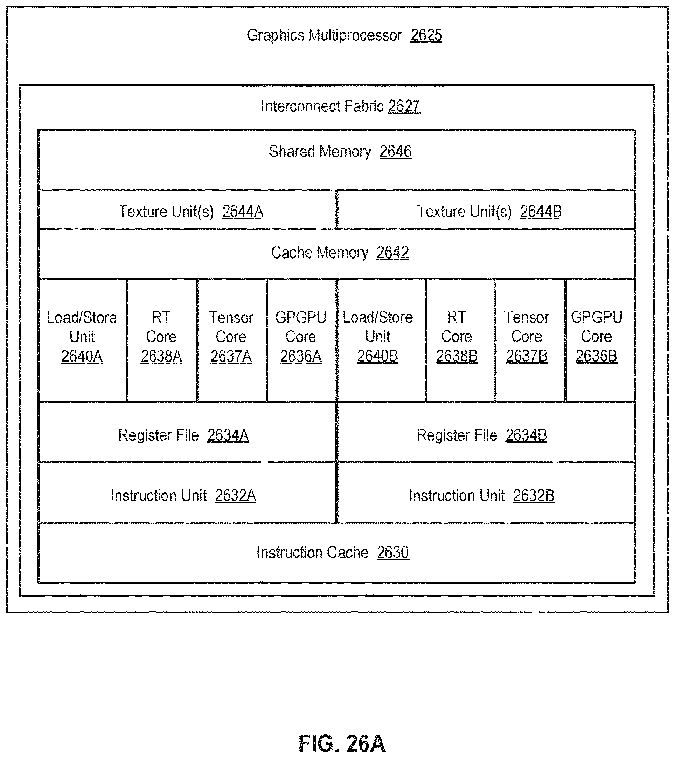

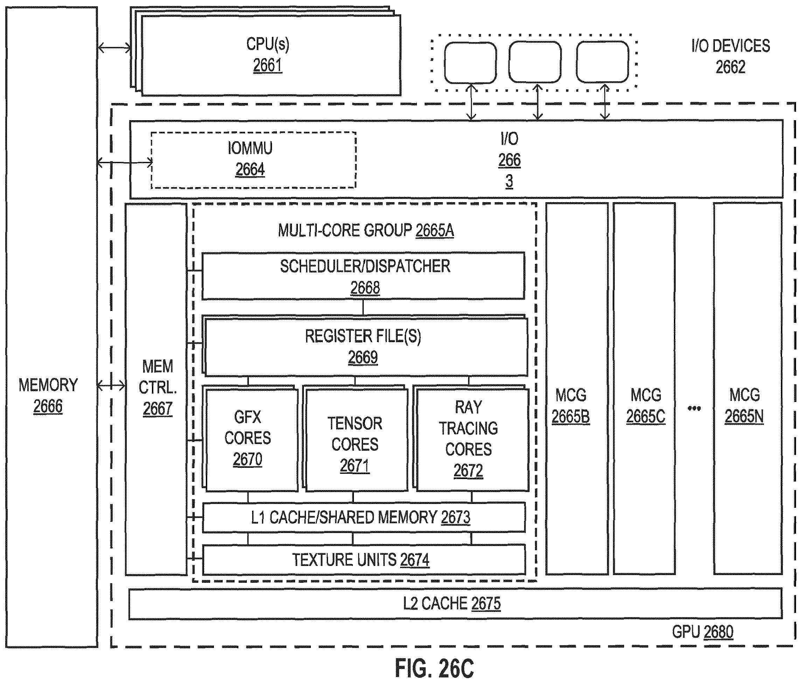

FIGS. 26A-26C illustrate additional graphics multiprocessors, according to examples. FIG. 26A-26B illustrate graphics multiprocessors 2625, 2650, which are related to the graphics multiprocessor 2534 of FIG. 25C and may be used in place of one of those. Therefore, the disclosure of any features in combination with the graphics multiprocessor 2534 herein also discloses a corresponding combination with the graphics multiprocessor(s) 2625, 2650, but is not limited to such. FIG. 26C illustrates a graphics processing unit (GPU) 2680 which includes dedicated sets of graphics processing resources arranged into multi-core groups 2665A-2665N, which correspond to the graphics multiprocessors 2625, 2650. The illustrated graphics multiprocessors 2625, 2650 and the multi-core groups 2665A-2665N can be streaming multiprocessors (SM) capable of simultaneous execution of a large number of execution threads.

The graphics multiprocessor 2625 of FIG. 26A includes multiple additional instances of execution resource units relative to the graphics multiprocessor 2534 of FIG. 25D. For example, the graphics multiprocessor 2625 can include multiple instances of the instruction unit 2632A-2632B, register file 2634A-2634B, and texture unit(s) 2644A-2644B. The graphics multiprocessor 2625 also includes multiple sets of graphics or compute execution units (e.g., GPGPU core 2636A-2636B, tensor core 2637A-2637B, ray-tracing core 2638A-2638B) and multiple sets of load/store units 2640A-2640B. The execution resource units have a common instruction cache 2630, texture and/or data cache memory 2642, and shared memory 2646.

The various components can communicate via an interconnect fabric 2627. The interconnect fabric 2627 may include one or more crossbar switches to enable communication between the various components of the graphics multiprocessor 2625. The interconnect fabric 2627 may be a separate, high-speed network fabric layer upon which each component of the graphics multiprocessor 2625 is stacked. The components of the graphics multiprocessor 2625 communicate with remote components via the interconnect fabric 2627. For example, the cores 2636A-2636B, 2637A-2637B, and 2638A-2638B can each communicate with shared memory 2646 via the interconnect fabric 2627. The interconnect fabric 2627 can arbitrate communication within the graphics multiprocessor 2625 to ensure a fair bandwidth allocation between components.

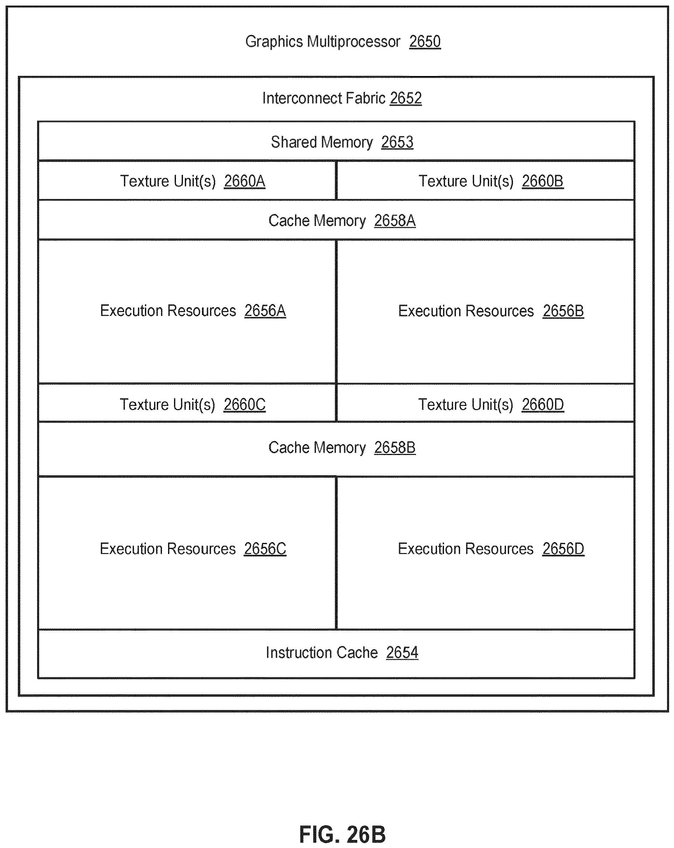

The graphics multiprocessor 2650 of FIG. 26B includes multiple sets of execution resources 2656A-2656D, where each set of execution resource includes multiple instruction units, register files, GPGPU cores, and load store units, as illustrated in FIG. 25D and FIG. 26A. The execution resources 2656A-2656D can work in concert with texture unit(s) 2660A-2660D for texture operations, while sharing an instruction cache 2654, and shared memory 2653. For example, the execution resources 2656A-2656D can share an instruction cache 2654 and shared memory 2653, as well as multiple instances of a texture and/or data cache memory 2658A-2658B. The various components can communicate via an interconnect fabric 2652 similar to the interconnect fabric 2627 of FIG. 26A.

Persons skilled in the art will understand that the architecture described in FIG. 1, 25A-25D, and 26A-26B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 2502 of FIG. 25A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 26C illustrates a graphics processing unit (GPU) 2680 which includes dedicated sets of graphics processing resources arranged into multi-core groups 2665A-2665N. While the details of only a single multi-core group 2665A are provided, it will be appreciated that the other multi-core groups 2665B-2665N may be equipped with the same or similar sets of graphics processing resources. Details described with respect to the multi-core groups 2665A-2665N may also apply to any graphics multiprocessor 2534, 2625, 2650 described herein.

As illustrated, a multi-core group 2665A may include a set of graphics cores 2670, a set of tensor cores 2671, and a set of ray tracing cores 2672. A scheduler/dispatcher 2668 schedules and dispatches the graphics threads for execution on the various cores 2670, 2671, 2672. A set of register files 2669 store operand values used by the cores 2670, 2671, 2672 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 2673 store graphics data such as texture data, vertex data, pixel data, ray data, bounding volume data, etc., locally within each multi-core group 2665A. One or more texture units 2674 can also be used to perform texturing operations, such as texture mapping and sampling. A Level 2 (L2) cache 2675 shared by all or a subset of the multi-core groups 2665A-2665N stores graphics data and/or instructions for multiple concurrent graphics threads. As illustrated, the L2 cache 2675 may be shared across a plurality of multi-core groups 2665A-2665N. One or more memory controllers 2667 couple the GPU 2680 to a memory 2666 which may be a system memory (e.g., DRAM) and/or a dedicated graphics memory (e.g., GDDR6 memory).

Input/output (I/O) circuitry 2663 couples the GPU 2680 to one or more I/O devices 2662 such as digital signal processors (DSPs), network controllers, or user input devices. An on-chip interconnect may be used to couple the I/O devices 2662 to the GPU 2680 and memory 2666. One or more I/O memory management units (IOMMUs) 2664 of the I/O circuitry 2663 couple the I/O devices 2662 directly to the system memory 2666. Optionally, the IOMMU 2664 manages multiple sets of page tables to map virtual addresses to physical addresses in system memory 2666. The I/O devices 2662, CPU(s) 2661, and GPU(s) 2680 may then share the same virtual address space.

In one implementation of the IOMMU 2664, the IOMMU 2664 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 2666). The base addresses of each of the first and second sets of page tables may be stored in control registers and swapped out on a context switch (e.g., so that the new context is provided with access to the relevant set of page tables). While not illustrated in FIG. 26C, each of the cores 2670, 2671, 2672 and/or multi-core groups 2665A-2665N may include translation lookaside buffers (TLBs) to cache guest virtual to guest physical translations, guest physical to host physical translations, and guest virtual to host physical translations.

The CPU(s) 2661, GPUs 2680, and I/O devices 2662 may be integrated on a single semiconductor chip and/or chip package. The illustrated memory 2666 may be integrated on the same chip or may be coupled to the memory controllers 2667 via an off-chip interface. In one implementation, the memory 2666 comprises GDDR6 memory which shares the same virtual address space as other physical system-level memories, although the underlying principles described herein are not limited to this specific implementation.

The tensor cores 2671 may include a plurality of execution units specifically designed to perform matrix operations, which are the fundamental compute operation used to perform deep learning operations. For example, simultaneous matrix multiplication operations may be used for neural network training and inferencing. The tensor cores 2671 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 2671. The training of neural networks, in particular, requires a significant number of matrix dot product operations. In order to process an inner-product formulation of an N × N × N matrix multiply, the tensor cores 2671 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 2671 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 2671 support a sparse mode of operation for matrices in which the vast majority of values are zero. The tensor cores 2671 include support for sparse input matrices that are encoded in a sparse matrix representation (e.g., coordinate list encoding (COO), compressed sparse row (CSR), compress sparse column (CSC), etc.). The tensor cores 2671 also include support for compressed sparse matrix representations in the event that the sparse matrix representation may be further compressed. Compressed, encoded, and/or compressed and encoded matrix data, along with associated compression and/or encoding metadata, can be read by the tensor cores 2671 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 2671, output matrix C may be output in a compressed format, a sparse encoding, or a compressed sparse encoding.

The ray tracing cores 2672 may accelerate ray tracing operations for both real-time ray tracing and non-real-time ray tracing implementations. In particular, the ray tracing cores 2672 may include ray traversal/intersection circuitry for performing ray traversal using bounding volume hierarchies (BVHs) and identifying intersections between rays and primitives enclosed within the BVH volumes. The ray tracing cores 2672 may also include circuitry for performing depth testing and culling (e.g., using a Z buffer or similar arrangement). In one implementation, the ray tracing cores 2672 perform traversal and intersection operations in concert with the image denoising techniques described herein, at least a portion of which may be executed on the tensor cores 2671. For example, the tensor cores 2671 may implement a deep learning neural network to perform denoising of frames generated by the ray tracing cores 2672. However, the CPU(s) 2661, graphics cores 2670, and/or ray tracing cores 2672 may also implement all or a portion of the denoising and/or deep learning algorithms.

In addition, as described above, a distributed approach to denoising may be employed in which the GPU 2680 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 2672 may process all BVH traversal and/or ray-primitive intersections, saving the graphics cores 2670 from being overloaded with thousands of instructions per ray. For example, each ray tracing core 2672 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 2665A can simply launch a ray probe, and the ray tracing cores 2672 independently perform ray traversal and intersection and return hit data (e.g., a hit, no hit, multiple hits, etc.) to the thread context. The other cores 2670, 2671 are freed to perform other graphics or compute work while the ray tracing cores 2672 perform the traversal and intersection operations.

Optionally, each ray tracing core 2672 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 2670 and tensor cores 2671) are freed to perform other forms of graphics work.

In some examples described below, a hybrid rasterization/ray tracing approach is used in which work is distributed between the graphics cores 2670 and ray tracing cores 2672.

The ray tracing cores 2672 (and/or other cores 2670, 2671) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 2672, graphics cores 2670 and tensor cores 2671 is Vulkan API (e.g., Vulkan version 1.1.85 and later). Note, however, that the underlying principles described herein are not limited to any particular ray tracing ISA.

In general, the various cores 2672, 2671, 2670 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction -This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 2672 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 2672 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 2672 can also be used to perform computations that are not directly analogous to ray tracing. For example, mesh projection, mesh refinement, and volume sampling computations can be accelerated using the ray tracing cores 2672. Generic coordinate space calculations, such as nearest neighbor calculations can also be performed. For example, the set of points near a given point can be discovered by defining a bounding box in the coordinate space around the point. BVH and ray probe logic within the ray tracing cores 2672 can then be used to determine the set of point intersections within the bounding box. The intersections constitute the origin point and the nearest neighbors to that origin point. Computations that are performed using the ray tracing cores 2672 can be performed in parallel with computations performed on the graphics cores 2672 and tensor cores 2671. A shader compiler can be configured to compile a compute shader or other general-purpose graphics processing program into low level primitives that can be parallelized across the graphics cores 2670, tensor cores 2671, and ray tracing cores 2672.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

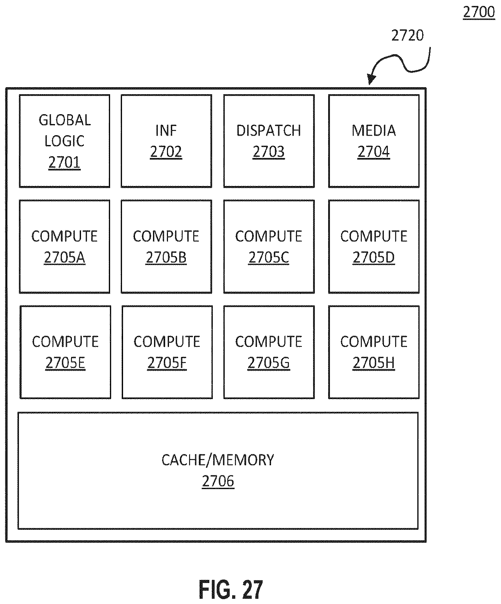

FIG. 27 shows a parallel compute system 2700, according to some examples. In some examples the parallel compute system 2700 includes a parallel processor 2720, which can be a graphics processor or compute accelerator as described herein. The parallel processor 2720 includes a global logic unit 2701, an interface 2702, a thread dispatcher 2703, a media unit 2704, a set of compute units 2705A-2705H, and a cache/memory units 2706. The global logic unit 2701, in some examples, includes global functionality for the parallel processor 2720, including device configuration registers, global schedulers, power management logic, and the like. The interface 2702 can include a front-end interface for the parallel processor 2720. The thread dispatcher 2703 can receive workloads from the interface 2702 and dispatch threads for the workload to the compute units 2705A-2705H. If the workload includes any media operations, at least a portion of those operations can be performed by the media unit 2704. The media unit can also offload some operations to the compute units 2705A-2705H. The cache/memory units 2706 can include cache memory (e.g., L3 cache) and local memory (e.g., HBM, GDDR) for the parallel processor 2720.

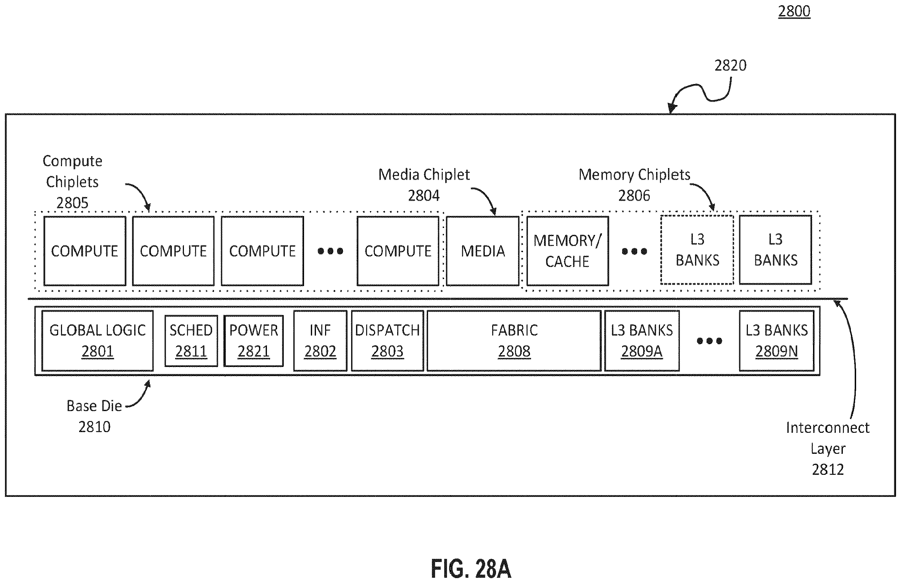

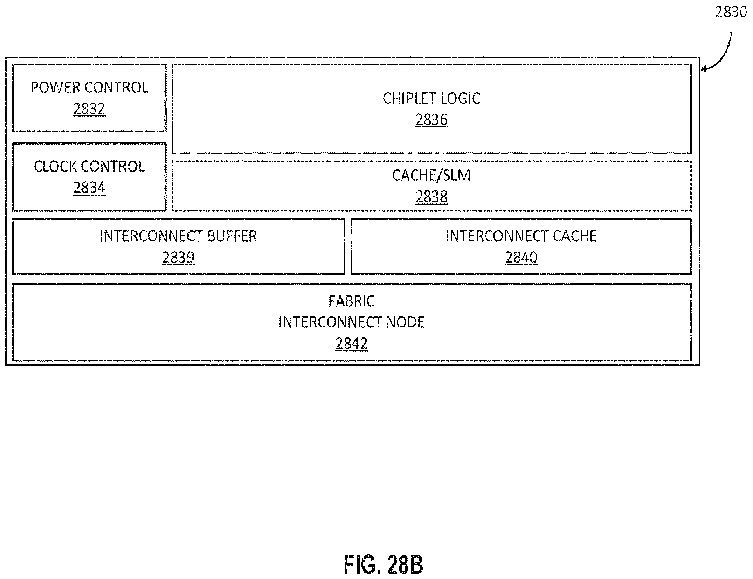

FIGS. 28A-28B illustrate a hybrid logical/physical view of a disaggregated parallel processor, according to examples described herein. FIG. 28A illustrates a disaggregated parallel compute system 2800. FIG. 28B illustrates a chiplet 2830 of the disaggregated parallel compute system 2800.

As shown in FIG. 28A, a disaggregated compute system 2800 can include a parallel processor 2820 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 2805, a media chiplet 2804, and memory chiplets 2806. Each chiplet can be separately manufactured using different process technologies. For example, compute chiplets 2805 may be manufactured using the smallest or most advanced process technology available at the time of fabrication, while memory chiplets 2806 or other chiplets (e.g., I/O, networking, etc.) may be manufactured using a larger or less advanced process technologies.

The various chiplets can be bonded to a base die 2810 and configured to communicate with each other and logic within the base die 2810 via an interconnect layer 2812. In some examples, the base die 2810 can include global logic 2801, which can include scheduler 2811 and power management 2821 logic units, an interface 2802, a dispatch unit 2803, and an interconnect fabric module 2808 coupled with or integrated with one or more L3 cache banks 2809A-2809N. The interconnect fabric 2808 can be an inter-chiplet fabric that is integrated into the base die 2810. Logic chiplets can use the fabric 2808 to relay messages between the various chiplets. Additionally, L3 cache banks 2809A-2809N in the base die and/or L3 cache banks within the memory chiplets 2806 can cache data read from and transmitted to DRAM chiplets within the memory chiplets 2806 and to system memory of a host.

In some examples the global logic 2801 is a microcontroller that can execute firmware to perform scheduler 2811 and power management 2821 functionality for the parallel processor 2820. The microcontroller that executes the global logic can be tailored for the target use case of the parallel processor 2820. The scheduler 2811 can perform global scheduling operations for the parallel processor 2820. The power management 2821 functionality can be used to enable or disable individual chiplets within the parallel processor when those chiplets are not in use.

The various chiplets of the parallel processor 2820 can be designed to perform specific functionality that, in existing designs, would be integrated into a single die. A set of compute chiplets 2805 can include clusters of compute units (e.g., execution units, streaming multiprocessors, etc.) that include programmable logic to execute compute or graphics shader instructions. A media chiplet 2804 can include hardware logic to accelerate media encode and decode operations. Memory chiplets 2806 can include volatile memory (e.g., DRAM) and one or more SRAM cache memory banks (e.g., L3 banks).

As shown in FIG. 28B, each chiplet 2830 can include common components and application specific components. Chiplet logic 2836 within the chiplet 2830 can include the specific components of the chiplet, such as an array of streaming multiprocessors, compute units, or execution units described herein. The chiplet logic 2836 can couple with an optional cache or shared local memory 2838 or can include a cache or shared local memory within the chiplet logic 2836. The chiplet 2830 can include a fabric interconnect node 2842 that receives commands via the inter-chiplet fabric. Commands and data received via the fabric interconnect node 2842 can be stored temporarily within an interconnect buffer 2839. Data transmitted to and received from the fabric interconnect node 2842 can be stored in an interconnect cache 2840. Power control 2832 and clock control 2834 logic can also be included within the chiplet. The power control 2832 and clock control 2834 logic can receive configuration commands via the fabric can configure dynamic voltage and frequency scaling for the chiplet 2830. In some examples, each chiplet can have an independent clock domain and power domain and can be clock gated and power gated independently of other chiplets.

At least a portion of the components within the illustrated chiplet 2830 can also be included within logic embedded within the base die 2810 of FIG. 28A. For example, logic within the base die that communicates with the fabric can include a version of the fabric interconnect node 2842. Base die logic that can be independently clock or power gated can include a version of the power control 2832 and/or clock control 2834 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Core Architectures - In-order and out-of-order core block diagram.

FIG. 29(A) is a block diagram illustrating both an example in-order pipeline and an example register renaming, out-of-order issue/execution pipeline according to examples. FIG. 29(B) is a block diagram illustrating both an example in-order architecture core and an example register renaming, out-of-order issue/execution architecture core to be included in a processor according to examples. The solid lined boxes in FIGS. 29(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 29(A), a processor pipeline 2900 includes a fetch stage 2902, an optional length decoding stage 2904, a decode stage 2906, an optional allocation (Alloc) stage 2908, an optional renaming stage 2910, a schedule (also known as a dispatch or issue) stage 2912, an optional register read/memory read stage 2914, an execute stage 2916, a write back/memory write stage 2918, an optional exception handling stage 2922, and an optional commit stage 2924. One or more operations can be performed in each of these processor pipeline stages. For example, during the fetch stage 2902, one or more instructions are fetched from instruction memory, and during the decode stage 2906, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 2906 and the register read/memory read stage 2914 may be combined into one pipeline stage. In some examples, during the execute stage 2916, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 29(B) may implement the pipeline 2900 as follows: 1) the instruction fetch circuitry 2938 performs the fetch and length decoding stages 2902 and 2904; 2) the decode circuitry 2940 performs the decode stage 2906; 3) the rename/allocator unit circuitry 2952 performs the allocation stage 2908 and renaming stage 2910; 4) the scheduler(s) circuitry 2956 performs the schedule stage 2912; 5) the physical register file(s) circuitry 2958 and the memory unit circuitry 2970 perform the register read/memory read stage 2914; the execution cluster(s) 2960 perform the execute stage 2916; 6) the memory unit circuitry 2970 and the physical register file(s) circuitry 2958 perform the write back/memory write stage 2918; 7) various circuitry may be involved in the exception handling stage 2922; and 8) the retirement unit circuitry 2954 and the physical register file(s) circuitry 2958 perform the commit stage 2924.

FIG. 29(B) shows a processor core 2990 including front-end unit circuitry 2930 coupled to execution engine unit circuitry 2950, and both are coupled to memory unit circuitry 2970. The core 2990 may be a reduced instruction set architecture computing (RISC) core, a complex instruction set architecture computing (CISC) core, a very long instruction word (VLIW) core, or a hybrid or alternative core type. As yet another option, the core 2990 may be a special-purpose core, such as, for example, a network or communication core, compression engine, coprocessor core, general purpose computing graphics processing unit (GPGPU) core, graphics core, or the like.

The front-end unit circuitry 2930 may include branch prediction circuitry 2932 coupled to instruction cache circuitry 2934, which is coupled to an instruction translation lookaside buffer (TLB) 2936, which is coupled to instruction fetch circuitry 2938, which is coupled to decode circuitry 2940. In some examples, the instruction cache circuitry 2934 is included in the memory unit circuitry 2970 rather than the front-end circuitry 2930. The decode circuitry 2940 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 2940 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 2940 may be implemented using various different mechanisms. Examples of suitable mechanisms include, but are not limited to, look-up tables, hardware implementations, programmable logic arrays (PLAs), microcode read only memories (ROMs), etc. In some examples, the core 2990 includes a microcode ROM (not shown) or other medium that stores microcode for certain macroinstructions (e.g., in decode circuitry 2940 or otherwise within the front-end circuitry 2930). In some examples, the decode circuitry 2940 includes a micro-operation (micro-op) or operation cache (not shown) to hold/cache decoded operations, micro-tags, or micro-operations generated during the decode or other stages of the processor pipeline 2900. The decode circuitry 2940 may be coupled to rename/allocator unit circuitry 2952 in the execution engine circuitry 2950.

The execution engine circuitry 2950 includes the rename/allocator unit circuitry 2952 coupled to retirement unit circuitry 2954 and a set of one or more scheduler(s) circuitry 2956. The scheduler(s) circuitry 2956 represents any number of different schedulers, including reservations stations, central instruction window, etc. In some examples, the scheduler(s) circuitry 2956 can include arithmetic logic unit (ALU) scheduler/scheduling circuitry, ALU queues, address generation unit (AGU) scheduler/scheduling circuitry, AGU queues, etc. The scheduler(s) circuitry 2956 is coupled to the physical register file(s) circuitry 2958. Each of the physical register file(s) circuitry 2958 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 2958 includes vector registers unit circuitry, writemask registers unit circuitry, and scalar register unit circuitry. These register units may provide architectural vector registers, vector mask registers, general-purpose registers, etc. The physical register file(s) circuitry 2958 is coupled to the retirement unit circuitry 2954 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2954 and the physical register file(s) circuitry 2958 are coupled to the execution cluster(s) 2960. The execution cluster(s) 2960 includes a set of one or more execution unit(s) circuitry 2962 and a set of one or more memory access circuitry 2964. The execution unit(s) circuitry 2962 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2956, physical register file(s) circuitry 2958, and execution cluster(s) 2960 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2964). It should also be understood that where separate pipelines are used, one or more of these pipelines may be out-of-order issue/execution and the rest in-order.

In some examples, the execution engine unit circuitry 2950 may perform load store unit (LSU) address/data pipelining to an Advanced Microcontroller Bus (AMB) interface (not shown), and address phase and writeback, data phase load, store, and branches.

The set of memory access circuitry 2964 is coupled to the memory unit circuitry 2970, which includes data TLB circuitry 2972 coupled to data cache circuitry 2974 coupled to level 2 (L2) cache circuitry 2976. In some examples, the memory access circuitry 2964 may include load unit circuitry, store address unit circuitry, and store data unit circuitry, each of which is coupled to the data TLB circuitry 2972 in the memory unit circuitry 2970. The instruction cache circuitry 2934 is further coupled to the level 2 (L2) cache circuitry 2976 in the memory unit circuitry 2970. In some examples, the instruction cache 2934 and the data cache 2974 are combined into a single instruction and data cache (not shown) in L2 cache circuitry 2976, level 3 (L3) cache circuitry (not shown), and/or main memory. The L2 cache circuitry 2976 is coupled to one or more other levels of cache and eventually to a main memory.

The core 2990 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 2990 includes logic to support a packed data instruction set architecture extension (e.g., AVX1, AVX2), thereby allowing the operations used by many multimedia applications to be performed using packed data.

### Example Execution Unit(s) Circuitry.

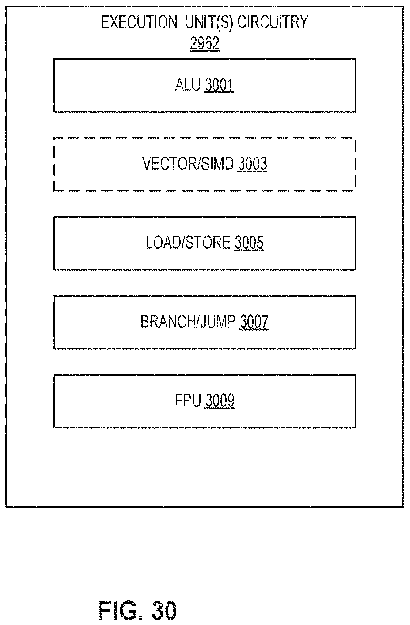

FIG. 30 illustrates examples of execution unit(s) circuitry, such as execution unit(s) circuitry 2962 of FIG. 29(B). As illustrated, execution unit(s) circuity 2962 may include one or more ALU circuits 3001, optional vector/single instruction multiple data (SIMD) circuits 3003, load/store circuits 3005, branch/jump circuits 3007, and/or Floating-point unit (FPU) circuits 3009. ALU circuits 3001 perform integer arithmetic and/or Boolean operations. Vector/SIMD circuits 3003 perform vector/SIMD operations on packed data (such as SIMD/vector registers). Load/store circuits 3005 execute load and store instructions to load data from memory into registers or store from registers to memory. Load/store circuits 3005 may also generate addresses. Branch/jump circuits 3007 cause a branch or jump to a memory address depending on the instruction. FPU circuits 3009 perform floating-point arithmetic. The width of the execution unit(s) circuitry 2962 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

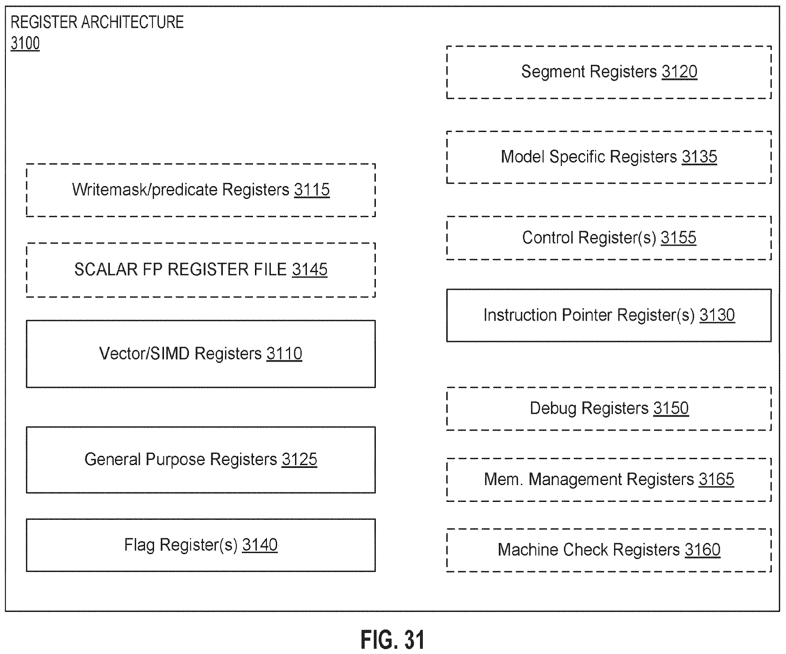

FIG. 31 is a block diagram of a register architecture 3100 according to some examples. As illustrated, the register architecture 3100 includes vector/SIMD registers 3110 that vary from 128-bit to 1,024 bits width. In some examples, the vector/SIMD registers 3110 are physically 512-bits and, depending upon the mapping, only some of the lower bits are used. For example, in some examples, the vector/SIMD registers 3110 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 3100 includes writemask/predicate registers 3115. For example, in some examples, there are 8 writemask/predicate registers (sometimes called k0 through k7) that are each 16-bit, 32-bit, 64-bit, or 128-bit in size. Writemask/predicate registers 3115 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 3115 corresponds to a data element position of the destination. In other examples, the writemask/predicate registers 3115 are scalable and consists of a set number of enable bits for a given vector element (e.g., 8 enable bits per 64-bit vector element).

The register architecture 3100 includes a plurality of general-purpose registers 3125. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 3100 includes scalar floating-point (FP) register file 3145 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 3140 (e.g., EFLAGS, RFLAGS, etc.) store status and control information for arithmetic, compare, and system operations. For example, the one or more flag registers 3140 may store condition code information such as carry, parity, auxiliary carry, zero, sign, and overflow. In some examples, the one or more flag registers 3140 are called program status and control registers.

Segment registers 3120 contain segment points for use in accessing memory. In some examples, these registers are referenced by the names CS, DS, SS, ES, FS, and GS.

Model specific registers or machine specific registers (MSRs) 3135 control and report on processor performance. Most MSRs 3135 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 3160 consist of control, status, and error reporting MSRs that are used to detect and report on hardware errors. Control register(s) 3155 (e.g., CR0-CR4) determine the operating mode of a processor (e.g., processor 2270, 2280, 2238, 2215, and/or 2300) and the characteristics of a currently executing task. In some examples, MSRs 3135 are a subset of control registers 3155.

One or more instruction pointer register(s) 3130 store an instruction pointer value. Debug registers 3150 control and allow for the monitoring of a processor or core's debugging operations.

Memory (mem) management registers 3165 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 3100 may, for example, be used in register file / memory 2108, or physical registerfile(s) circuitry 2958.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

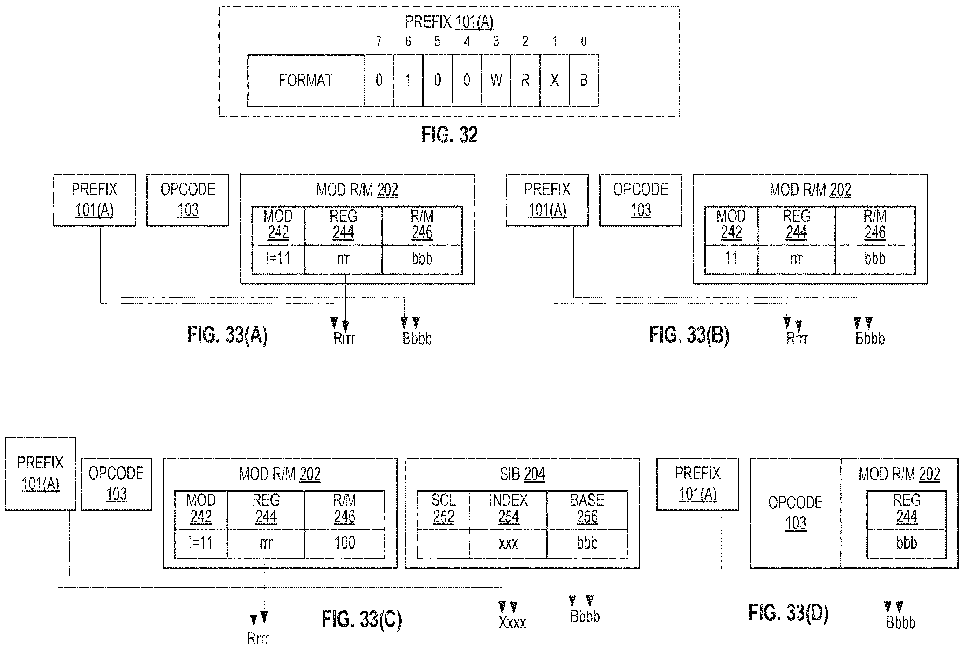

FIG. 32 illustrates examples of a first prefix 101(A). In some examples, the first prefix 101(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 101(A) may specify up to three registers using 3-bit fields depending on the format: 1) using the reg field 244 and the R/M field 246 of the MOD R/M byte 202; 2) using the MOD R/M byte 202 with the SIB byte 204 including using the reg field 244 and the base field 256 and index field 254; or 3) using the register field of an opcode.

In the first prefix 101(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 244 and MOD R/M R/M field 246 alone can each only address 8 registers.

In the first prefix 101(A), bit position 2 (R) may be an extension of the MOD R/M reg field 244 and may be used to modify the MOD R/M reg field 244 when that field encodes a general-purpose register, a 64-bit packed data register (e.g., a SSE register), or a control or debug register. R is ignored when MOD R/M byte 202 specifies other registers or defines an extended opcode.

### Bit position 1 (X) may modify the SIB byte index field 254.

Bit position 0 (B) may modify the base in the MOD R/M R/M field 246 or the SIB byte base field 256; or it may modify the opcode register field used for accessing general purpose registers (e.g., general purpose registers 3125).

FIGS. 33(A)-(D) illustrate examples of how the R, X, and B fields of the first prefix 101(A) are used. FIG. 33(A) illustrates R and B from the first prefix 101(A) being used to extend the reg field 244 and R/M field 246 of the MOD R/M byte 202 when the SIB byte 2 04 is not used for memory addressing. FIG. 33(B) illustrates R and B from the first prefix 101(A) being used to extend the reg field 244 and R/M field 246 of the MOD R/M byte 202 when the SIB byte 2 04 is not used (register-register addressing). FIG. 33(C) illustrates R, X, and B from the first prefix 101(A) being used to extend the reg field 244 of the MOD R/M byte 202 and the index field 254 and base field 256 when the SIB byte 2 04 being used for memory addressing. FIG. 33(D) illustrates B from the first prefix 101(A) being used to extend the reg field 244 of the MOD R/M byte 202 when a register is encoded in the opcode 103.

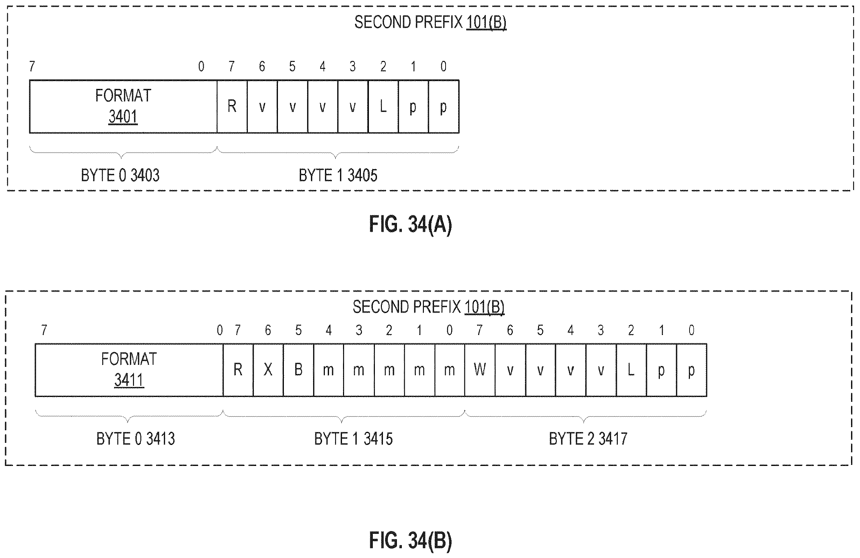

FIGS. 34(A)-(B) illustrate examples of a second prefix 101(B). In some examples, the second prefix 101(B) is an example of a VEX prefix. The second prefix 101(B) encoding allows instructions to have more than two operands, and allows SIMD vector registers (e.g., vector/SIMD registers 3110) to be longer than 64-bits (e.g., 128-bit and 256-bit). The use of the second prefix 101(B) provides for three-operand (or more) syntax. For example, previous two-operand instructions performed operations such as A = A + B, which overwrites a source operand. The use of the second prefix 101(B) enables operands to perform nondestructive operations such as A = B + C.

In some examples, the second prefix 101(B) comes in two forms - a two-byte form and a three-byte form. The two-byte second prefix 101(B) is used mainly for 128-bit, scalar, and some 256-bit instructions; while the three-byte second prefix 101(B) provides a compact replacement of the first prefix 101(A) and 3-byte opcode instructions.

FIG. 34(A) illustrates examples of a two-byte form of the second prefix 101(B). In some examples, a format field 3401 (byte 0 3403) contains the value C5H. In some examples, byte 1 3405 includes an "R" value in bit[7]. This value is the complement of the "R" value of the first prefix 101(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 246 to encode the instruction operand that references a memory address or encode either the destination register operand or a source register operand.

Instructions that use this prefix may use the MOD R/M reg field 244 to encode either the destination register operand or a source register operand, or to be treated as an opcode extension and not used to encode any instruction operand.

For instruction syntax that support four operands, vvvv, the MOD R/M R/M field 246 and the MOD R/M reg field 244 encode three of the four operands. Bits[7:4] of the immediate value field 109 are then used to encode the third source register operand.

FIG. 34(B) illustrates examples of a three-byte form of the second prefix 101(B). In some examples, a format field 3411 (byte 0 3413) contains the value C4H. Byte 1 3415 includes in bits[7:5] "R," "X," and "B" which are the complements of the same values of the first prefix 101(A). Bits[4:0] of byte 1 3415 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 3417 is used similar to W of the first prefix 101(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 246 to encode the instruction operand that references a memory address or encode either the destination register operand or a source register operand.

Instructions that use this prefix may use the MOD R/M reg field 244 to encode either the destination register operand or a source register operand, or to be treated as an opcode extension and not used to encode any instruction operand.

For instruction syntax that support four operands, vvvv, the MOD R/M R/M field 246, and the MOD R/M reg field 244 encode three of the four operands. Bits[7:4] of the immediate value field 109 are then used to encode the third source register operand.

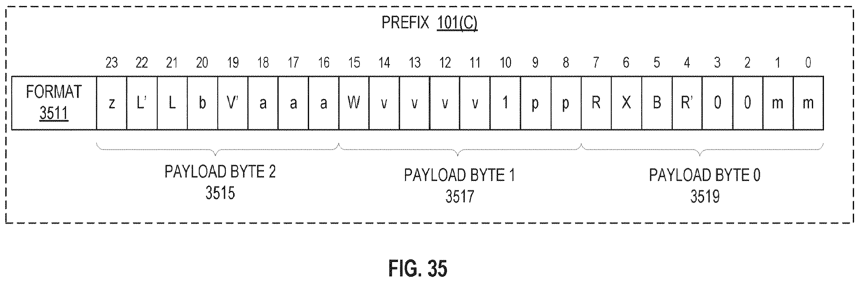

FIG. 35 illustrates examples of a third prefix 101(C). In some examples, the third prefix 101(C) is an example of an EVEX prefix. The third prefix 101(C) is a four-byte prefix.

The third prefix 101(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 31) or predication utilize this prefix. Opmask register allow for conditional processing or selection control. Opmask instructions, whose source/destination operands are opmask registers and treat the content of an opmask register as a single value, are encoded using the second prefix 101(B).

The third prefix 101(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 101(C) is a format field 3511 that has a value, in some examples, of 62H. Subsequent bytes are referred to as payload bytes 3515-3519 and collectively form a 24-bit value of P[23:0] providing specific capability in the form of one or more fields (detailed herein).

In some examples, P[1:0] of payload byte 3519 are identical to the low two mm bits. P[3:2] are reserved in some examples. Bit P[4] (R') allows access to the high 16 vector register set when combined with P[7] and the MOD R/M reg field 244. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 244 and MOD R/M R/M field 246. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 101(A) and second prefix 111(B) and may serve as an opcode extension bit or operand size promotion.

P[18:16] specify the index of a register in the opmask (writemask) registers (e.g., writemask/predicate registers 3115). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmaskfield's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 101(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

### Graphics Execution Units

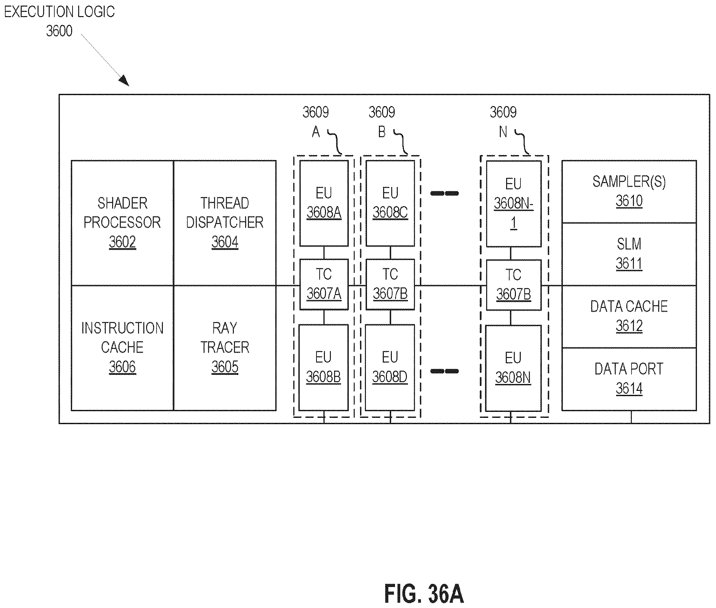

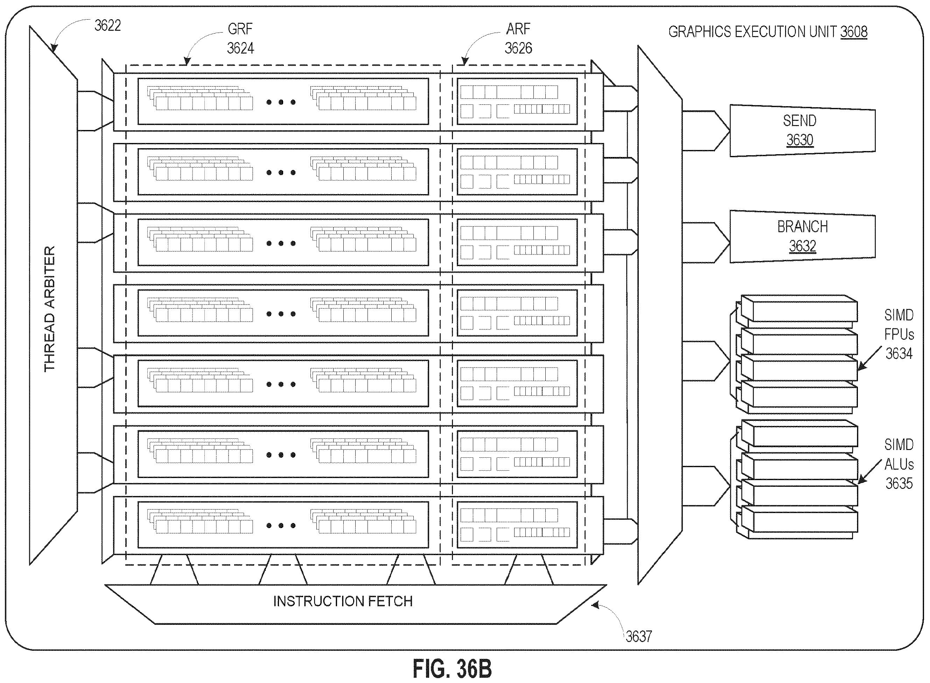

FIGS. 36A-36B illustrate thread execution logic 3600 including an array of processing elements employed in a graphics processor core according to examples described herein. Elements of FIGS. 36A-36B having the same reference numbers (or names) as the elements of any other figure herein can operate or function in any manner similar to that described elsewhere herein, but are not limited to such. FIG. 36A is representative of an execution unit within a general-purpose graphics processor, while FIG. 36B is representative of an execution unit that may be used within a compute accelerator.

As illustrated in FIG. 36A, in some examples thread execution logic 3600 includes a shader processor 3602, a thread dispatcher 3604, instruction cache 3606, a scalable execution unit array including a plurality of execution units 3608A-3608N, a sampler 3610, shared local memory 3611, a data cache 3612, and a data port 3614. In some examples the scalable execution unit array can dynamically scale by enabling or disabling one or more execution units (e.g., any of execution units 3608A, 3608B, 3608C, 3608D, through 3608N-1 and 3608N) based on the computational requirements of a workload. In some examples the included components are interconnected via an interconnect fabric that links to each of the components. In some examples, thread execution logic 3600 includes one or more connections to memory, such as system memory or cache memory, through one or more of instruction cache 3606, data port 3614, sampler 3610, and execution units 3608A-3608N. In some examples, each execution unit (e.g. 3608A) is a stand-alone programmable general-purpose computational unit that is capable of executing multiple simultaneous hardware threads while processing multiple data elements in parallel for each thread. In various examples, the array of execution units 3608A-3608N is scalable to include any number individual execution units.

In some examples, the execution units 3608A-3608N are primarily used to execute shader programs. A shader processor 3602 can process the various shader programs and dispatch execution threads associated with the shader programs via a thread dispatcher 3604. In some examples the thread dispatcher includes logic to arbitrate thread initiation requests from the graphics and media pipelines and instantiate the requested threads on one or more execution unit in the execution units 3608A-3608N. For example, a geometry pipeline can dispatch vertex, tessellation, or geometry shaders to the thread execution logic for processing. In some examples, thread dispatcher 3604 can also process runtime thread spawning requests from the executing shader programs.

In some examples, the execution units 3608A-3608N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 3608A-3608N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 3608A-3608N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 3608A-3608N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 3608A-3608N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 3609A-3609N having thread control logic (3607A-3607N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 3609A-3609N includes at least two execution units. For example, fused execution unit 3609A includes a first EU 3608A, second EU 3608B, and thread control logic 3607A that is common to the first EU 3608A and the second EU 3608B. The thread control logic 3607A controls threads executed on the fused graphics execution unit 3609A, allowing each EU within the fused execution units 3609A-3609N to execute using a common instruction pointer register.

One or more internal instruction caches (e.g., 3606) are included in the thread execution logic 3600 to cache thread instructions for the execution units. In some examples, one or more data caches (e.g., 3612) are included to cache thread data during thread execution. Threads executing on the execution logic 3600 can also store explicitly managed data in the shared local memory 3611. In some examples, a sampler 3610 is included to provide texture sampling for 3D operations and media sampling for media operations. In some examples, sampler 3610 includes specialized texture or media sampling functionality to process texture or media data during the sampling process before providing the sampled data to an execution unit.

During execution, the graphics and media pipelines send thread initiation requests to thread execution logic 3600 via thread spawning and dispatch logic. Once a group of geometric objects has been processed and rasterized into pixel data, pixel processor logic (e.g., pixel shader logic, fragment shader logic, etc.) within the shader processor 3602 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 3602 then executes an application programming interface (API)-supplied pixel or fragment shader program. To execute the shader program, the shader processor 3602 dispatches threads to an execution unit (e.g., 3608A) via thread dispatcher 3604. In some examples, shader processor 3602 uses texture sampling logic in the sampler 3610 to access texture data in texture maps stored in memory. Arithmetic operations on the texture data and the input geometry data compute pixel color data for each geometric fragment, or discards one or more pixels from further processing.

In some examples, the data port 3614 provides a memory access mechanism for the thread execution logic 3600 to output processed data to memory for further processing on a graphics processor output pipeline. In some examples, the data port 3614 includes or couples to one or more cache memories (e.g., data cache 3612) to cache data for memory access via the data port.

In some examples, the execution logic 3600 can also include a ray tracer 3605 that can provide ray tracing acceleration functionality. The ray tracer 3605 can support a ray tracing instruction set that includes instructions/functions for ray generation.

FIG. 36B illustrates exemplary internal details of an execution unit 3608, according to examples. A graphics execution unit 3608 can include an instruction fetch unit 3637, a general register file array (GRF) 3624, an architectural register file array (ARF) 3626, a thread arbiter 3622, a send unit 3630, a branch unit 3632, a set of SIMD floating point units (FPUs) 3634, and in some examples a set of dedicated integer SIMD ALUs 3635. The GRF 3624 and ARF 3626 includes the set of general register files and architecture register files associated with each simultaneous hardware thread that may be active in the graphics execution unit 3608. In some examples, per thread architectural state is maintained in the ARF 3626, while data used during thread execution is stored in the GRF 3624. The execution state of each thread, including the instruction pointers for each thread, can be held in thread-specific registers in the ARF 3626.

In some examples the graphics execution unit 3608 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 3608 is not limited to the number of hardware threads, and multiple logical threads can be assigned to each hardware thread.

In some examples, the graphics execution unit 3608 can co-issue multiple instructions, which may each be different instructions. The thread arbiter 3622 of the graphics execution unit thread 3608 can dispatch the instructions to one of the send unit 3630, branch unit 3632, or SIMD FPU(s) 3634 for execution. Each execution thread can access 128 general-purpose registers within the GRF 3624, where each register can store 32 bytes, accessible as a SIMD 8-element vector of 32-bit data elements. In some examples, each execution unit thread has access to 4 Kbytes within the GRF 3624, although examples are not so limited, and greater or fewer register resources may be provided in other examples. In some examples the graphics execution unit 3608 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 3624 can store a total of 28 Kbytes. Where 16 threads may access 4Kbytes, the GRF 3624 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 3630. In some examples, branch instructions are dispatched to a dedicated branch unit 3632 to facilitate SIMD divergence and eventual convergence.

In some examples the graphics execution unit 3608 includes one or more SIMD floating point units (FPU(s)) 3634 to perform floating-point operations. In some examples, the FPU(s) 3634 also support integer computation. In some examples the FPU(s) 3634 can SIMD execute up to *M* number of 32-bit floating-point (or integer) operations, or SIMD execute up to 2*M* 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 3635 are also present, and may be specifically optimized to perform operations associated with machine learning computations.

In some examples, arrays of multiple instances of the graphics execution unit 3608 can be instantiated in a graphics sub-core grouping (e.g., a sub-slice). For scalability, product architects can choose the exact number of execution units per sub-core grouping. In some examples the execution unit 3608 can execute instructions across a plurality of execution channels. In a further example, each thread executed on the graphics execution unit 3608 is executed on a different channel.

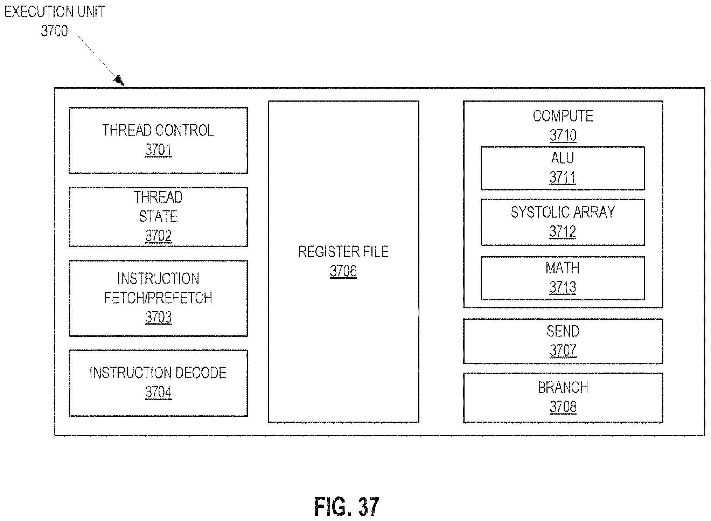

FIG. 37 illustrates an additional execution unit 3700, according to an example. In some examples, the execution unit 3700 includes a thread control unit 3701, a thread state unit 3702, an instruction fetch/prefetch unit 3703, and an instruction decode unit 3704. The execution unit 3700 additionally includes a register file 3706 that stores registers that can be assigned to hardware threads within the execution unit. The execution unit 3700 additionally includes a send unit 3707 and a branch unit 3708. In some examples, the send unit 3707 and branch unit 3708 can operate similarly as the send unit 3630 and a branch unit 3632 of the graphics execution unit 3608 of FIG. 36B.

The execution unit 3700 also includes a compute unit 3710 that includes multiple different types of functional units. In some examples the compute unit 3710 includes an ALU unit 3711 that includes an array of arithmetic logic units. The ALU unit 3711 can be configured to perform 64-bit, 32-bit, and 16-bit integer and floating point operations. Integer and floating point operations may be performed simultaneously. The compute unit 3710 can also include a systolic array 3712, and a math unit 3713. The systolic array 3712 includes a *W* wide and *D* deep network of data processing units that can be used to perform vector or other data-parallel operations in a systolic manner. In some examples the systolic array 3712 can be configured to perform matrix operations, such as matrix dot product operations. In some examples the systolic array 3712 support 16-bit floating point operations, as well as 8-bit and 4-bit integer operations. In some examples the systolic array 3712 can be configured to accelerate machine learning operations. In such examples, the systolic array 3712 can be configured with support for the bfloat 16-bit floating point format. In some examples, a math unit 3713 can be included to perform a specific subset of mathematical operations in an efficient and lower-power manner than then ALU unit 3711. The math unit 3713 can include a variant of math logic that may be found in shared function logic of a graphics processing engine provided by other examples (e.g., math logic 422 of the shared function logic 420 of FIG. 4). In some examples the math unit 3713 can be configured to perform 32-bit and 64-bit floating point operations.

The thread control unit 3701 includes logic to control the execution of threads within the execution unit. The thread control unit 3701 can include thread arbitration logic to start, stop, and preempt execution of threads within the execution unit 3700. The thread state unit 3702 can be used to store thread state for threads assigned to execute on the execution unit 3700. Storing the thread state within the execution unit 3700 enables the rapid pre-emption of threads when those threads become blocked or idle. The instruction fetch/prefetch unit 3703 can fetch instructions from an instruction cache of higher level execution logic (e.g., instruction cache 3606 as in FIG. 36A). The instruction fetch/prefetch unit 3703 can also issue prefetch requests for instructions to be loaded into the instruction cache based on an analysis of currently executing threads. The instruction decode unit 3704 can be used to decode instructions to be executed by the compute units. In some examples, the instruction decode unit 3704 can be used as a secondary decoder to decode complex instructions into constituent micro-operations.

The execution unit 3700 additionally includes a register file 3706 that can be used by hardware threads executing on the execution unit 3700. Registers in the register file 3706 can be divided across the logic used to execute multiple simultaneous threads within the compute unit 3710 of the execution unit 3700. The number of logical threads that may be executed by the graphics execution unit 3700 is not limited to the number of hardware threads, and multiple logical threads can be assigned to each hardware thread. The size of the register file 3706 can vary across examples based on the number of supported hardware threads. In some examples, register renaming may be used to dynamically allocate registers to hardware threads.

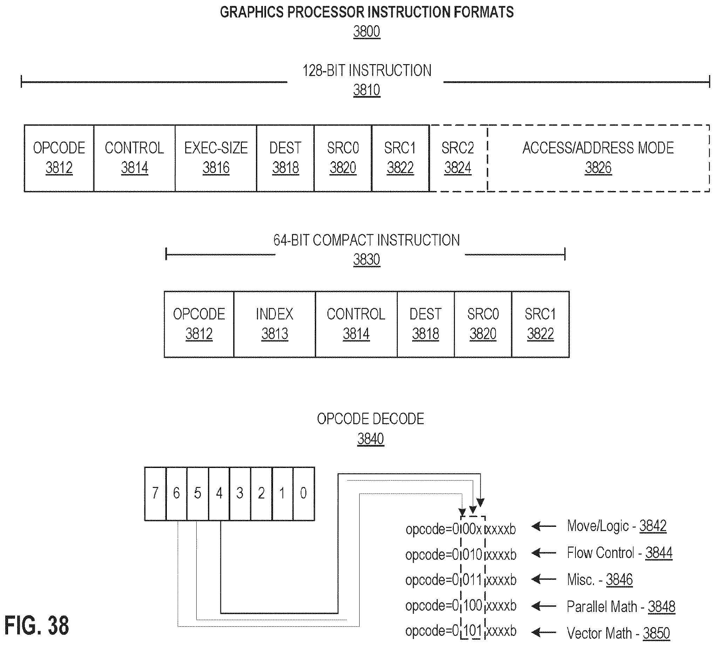

FIG. 38 is a block diagram illustrating a graphics processor instruction formats 3800 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 3800 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 3810. A 64-bit compacted instruction format 3830 is available for some instructions based on the selected instruction, instruction options, and number of operands. The native 128-bit instruction format 3810 provides access to all instruction options, while some options and operations are restricted in the 64-bit format 3830. The native instructions available in the 64-bit format 3830 vary by example. In some examples, the instruction is compacted in part using a set of index values in an index field 3813. The execution unit hardware references a set of compaction tables based on the index values and uses the compaction table outputs to reconstruct a native instruction in the 128-bit instruction format 3810. Other sizes and formats of instruction can be used.

For each format, instruction opcode 3812 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 3814 enables control over certain execution options, such as channels selection (e.g., predication) and data channel order (e.g., swizzle). For instructions in the 128-bit instruction format 3810 an exec-size field 3816 limits the number of data channels that will be executed in parallel. In some examples, exec-size field 3816 is not available for use in the 64-bit compact instruction format 3830.

Some execution unit instructions have up to three operands including two source operands, src0 3820, src1 3822, and one destination 3818. In some examples, the execution units support dual destination instructions, where one of the destinations is implied. Data manipulation instructions can have a third source operand (e.g., SRC2 3824), where the instruction opcode 3812 determines the number of source operands. An instruction's last source operand can be an immediate (e.g., hard-coded) value passed with the instruction.

In some examples, the 128-bit instruction format 3810 includes an access/address mode field 3826 specifying, for example, whether direct register addressing mode or indirect register addressing mode is used. When direct register addressing mode is used, the register address of one or more operands is directly provided by bits in the instruction.

In some examples, the 128-bit instruction format 3810 includes an access/address mode field 3826, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 3826 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 3812 bit-fields to simplify Opcode decode 3840. For an 8-bit opcode, bits 4, 5, and 6 allow the execution unit to determine the type of opcode. The precise opcode grouping shown is merely an example. In some examples, a move and logic opcode group 3842 includes data movement and logic instructions (e.g., move (mov), compare (cmp)). In some examples, move and logic group 3842 shares the five most significant bits (MSB), where move (mov) instructions are in the form of 0000xxxxb and logic instructions are in the form of 0001xxxxb. A flow control instruction group 3844 (e.g., call, jump (jmp)) includes instructions in the form of 0010xxxxb (e.g., 0x20). A miscellaneous instruction group 3846 includes a mix of instructions, including synchronization instructions (e.g., wait, send) in the form of 0011xxxxb (e.g., 0x30). A parallel math instruction group 3848 includes component-wise arithmetic instructions (e.g., add, multiply (mul)) in the form of 0100xxxxb (e.g., 0x40). The parallel math group 3848 performs the arithmetic operations in parallel across data channels. The vector math group 3850 includes arithmetic instructions (e.g., dp4) in the form of 0101xxxxb (e.g., 0x50). The vector math group performs arithmetic such as dot product calculations on vector operands. The illustrated opcode decode 3840, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

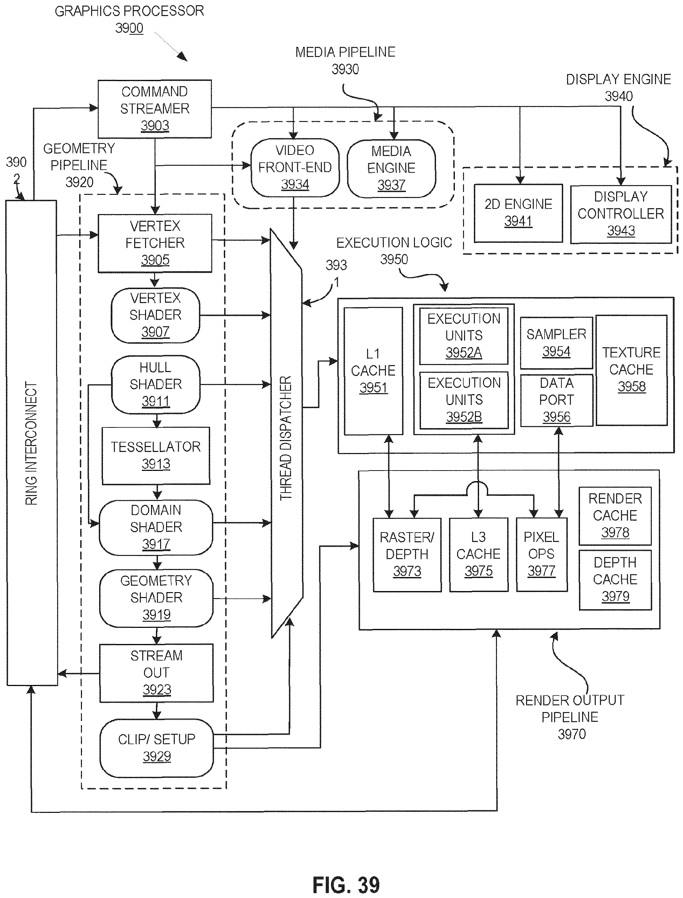

FIG. 39 is a block diagram of another example of a graphics processor 3900. Elements of FIG. 39 having the same reference numbers (or names) as the elements of any other figure herein can operate or function in any manner similar to that described elsewhere herein, but are not limited to such.

In some examples, graphics processor 3900 includes a geometry pipeline 3920, a media pipeline 3930, a display engine 3940, thread execution logic 3950, and a render output pipeline 3970. In some examples, graphics processor 3900 is a graphics processor within a multicore processing system that includes one or more general-purpose processing cores. The graphics processor is controlled by register writes to one or more control registers (not shown) or via commands issued to graphics processor 3900 via a ring interconnect 3902. In some examples, ring interconnect 3902 couples graphics processor 3900 to other processing components, such as other graphics processors or general-purpose processors. Commands from ring interconnect 3902 are interpreted by a command streamer 3903, which supplies instructions to individual components of the geometry pipeline 3920 or the media pipeline 3930.

In some examples, command streamer 3903 directs the operation of a vertex fetcher 3905 that reads vertex data from memory and executes vertex-processing commands provided by command streamer 3903. In some examples, vertex fetcher 3905 provides vertex data to a vertex shader 3907, which performs coordinate space transformation and lighting operations to each vertex. In some examples, vertex fetcher 3905 and vertex shader 3907 execute vertex-processing instructions by dispatching execution threads to execution units 3952A-3952B via a thread dispatcher 3931.

In some examples, execution units 3952A-3952B are an array of vector processors having an instruction set for performing graphics and media operations. In some examples, execution units 3952A-3952B have an attached L1 cache 3951 that is specific for each array or shared between the arrays. The cache can be configured as a data cache, an instruction cache, or a single cache that is partitioned to contain data and instructions in different partitions.

In some examples, geometry pipeline 3920 includes tessellation components to perform hardware-accelerated tessellation of 3D objects. In some examples, a programmable hull shader 3911 configures the tessellation operations. A programmable domain shader 3917 provides back-end evaluation of tessellation output. A tessellator 3913 operates at the direction of hull shader 3911 and contains special purpose logic to generate a set of detailed geometric objects based on a coarse geometric model that is provided as input to geometry pipeline 3920. In some examples, if tessellation is not used, tessellation components (e.g., hull shader 3911, tessellator 3913, and domain shader 3917) can be bypassed.

In some examples, complete geometric objects can be processed by a geometry shader 3919 via one or more threads dispatched to execution units 3952A-3952B, or can proceed directly to the clipper 3929. In some examples, the geometry shader operates on entire geometric objects, rather than vertices or patches of vertices as in previous stages of the graphics pipeline. If the tessellation is disabled the geometry shader 3919 receives input from the vertex shader 3907. In some examples, geometry shader 3919 is programmable by a geometry shader program to perform geometry tessellation if the tessellation units are disabled.

Before rasterization, a clipper 3929 processes vertex data. The clipper 3929 may be a fixed function clipper or a programmable clipper having clipping and geometry shader functions. In some examples, a rasterizer and depth test component 3973 in the render output pipeline 3970 dispatches pixel shaders to convert the geometric objects into per pixel representations. In some examples, pixel shader logic is included in thread execution logic 3950. In some examples, an application can bypass the rasterizer and depth test component 3973 and access un-rasterized vertex data via a stream out unit 3923.

The graphics processor 3900 has an interconnect bus, interconnect fabric, or some other interconnect mechanism that allows data and message passing amongst the major components of the processor. In some examples, execution units 3952A-3952B and associated logic units (e.g., L1 cache 3951, sampler 3954, texture cache 3958, etc.) interconnect via a data port 3956 to perform memory access and communicate with render output pipeline components of the processor. In some examples, sampler 3954, caches 3951, 3958 and execution units 3952A-3952B each have separate memory access paths. In some examples the texture cache 3958 can also be configured as a sampler cache.

In some examples, render output pipeline 3970 contains a rasterizer and depth test component 3973 that converts vertex-based objects into an associated pixel-based representation. In some examples, the rasterizer logic includes a windower/masker unit to perform fixed function triangle and line rasterization. An associated render cache 3978 and depth cache 3979 are also available in some examples. A pixel operations component 3977 performs pixel-based operations on the data, though in some instances, pixel operations associated with 2D operations (e.g. bit block image transfers with blending) are performed by the 2D engine 3941, or substituted at display time by the display controller 3943 using overlay display planes. In some examples, a shared L3 cache 3975 is available to all graphics components, allowing the sharing of data without the use of main system memory.

In some examples, graphics processor media pipeline 3930 includes a media engine 3937 and a video front-end 3934. In some examples, video front-end 3934 receives pipeline commands from the command streamer 3903. In some examples, media pipeline 3930 includes a separate command streamer. In some examples, video front-end 3934 processes media commands before sending the command to the media engine 3937. In some examples, media engine 3937 includes thread spawning functionality to spawn threads for dispatch to thread execution logic 3950 via thread dispatcher 3931.

In some examples, graphics processor 3900 includes a display engine 3940. In some examples, display engine 3940 is external to processor 3900 and couples with the graphics processor via the ring interconnect 3902, or some other interconnect bus or fabric. In some examples, display engine 3940 includes a 2D engine 3941 and a display controller 3943. In some examples, display engine 3940 contains special purpose logic capable of operating independently of the 3D pipeline. In some examples, display controller 3943 couples with a display device (not shown), which may be a system integrated display device, as in a laptop computer, or an external display device attached via a display device connector.

In some examples, the geometry pipeline 3920 and media pipeline 3930 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

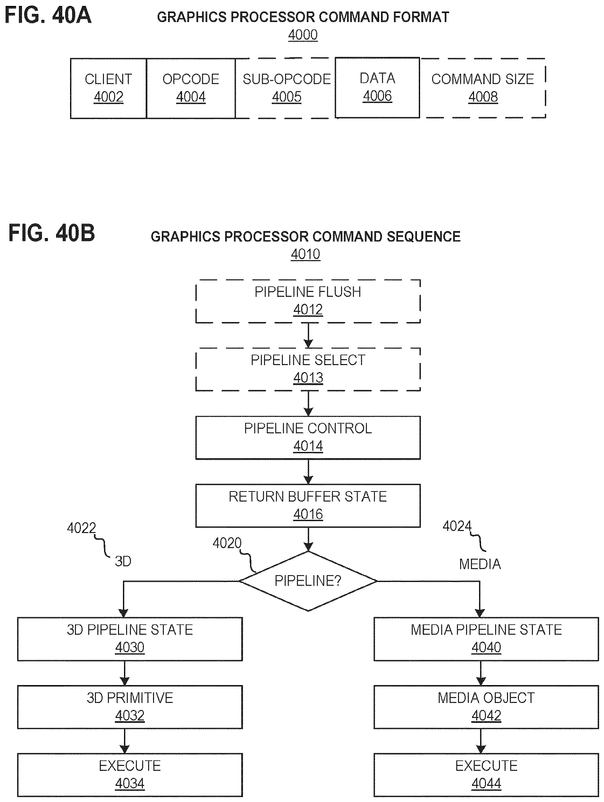

FIG. 40A is a block diagram illustrating a graphics processor command format 4000 according to some examples. FIG. 40B is a block diagram illustrating a graphics processor command sequence 4010 according to an example. The solid lined boxes in FIG. 40A illustrate the components that are generally included in a graphics command while the dashed lines include components that are optional or that are only included in a sub-set of the graphics commands. The exemplary graphics processor command format 4000 of FIG. 40A includes data fields to identify a client 4002, a command operation code (opcode) 4004, and data 4006 for the command. A sub-opcode 4005 and a command size 4008 are also included in some commands.

In some examples, client 4002 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 4004 and, if present, sub-opcode 4005 to determine the operation to perform. The client unit performs the command using information in data field 4006. For some commands an explicit command size 4008 is expected to specify the size of the command. In some examples, the command parser automatically determines the size of at least some of the commands based on the command opcode. In some examples commands are aligned via multiples of a double word. Other command formats can be used.

The flow diagram in FIG. 40B illustrates an exemplary graphics processor command sequence 4010. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 4010 may begin with a pipeline flush command 4012 to cause any active graphics pipeline to complete the currently pending commands for the pipeline. In some examples, the 3D pipeline 4022 and the media pipeline 4024 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 4012 can be used for pipeline synchronization or before placing the graphics processor into a low power state.

In some examples, a pipeline select command 4013 is used when a command sequence requires the graphics processor to explicitly switch between pipelines. In some examples, a pipeline select command 4013 is required only once within an execution context before issuing pipeline commands unless the context is to issue commands for both pipelines. In some examples, a pipeline flush command 4012 is required immediately before a pipeline switch via the pipeline select command 4013.

In some examples, a pipeline control command 4014 configures a graphics pipeline for operation and is used to program the 3D pipeline 4022 and the media pipeline 4024. In some examples, pipeline control command 4014 configures the pipeline state for the active pipeline. In some examples, the pipeline control command 4014 is used for pipeline synchronization and to clear data from one or more cache memories within the active pipeline before processing a batch of commands.

In some examples, return buffer state commands 4016 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 4016 includes selecting the size and number of return buffers to use for a set of pipeline operations.

The remaining commands in the command sequence differ based on the active pipeline for operations. Based on a pipeline determination 4020, the command sequence is tailored to the 3D pipeline 4022 beginning with the 3D pipeline state 4030 or the media pipeline 4024 beginning at the media pipeline state 4040.

The commands to configure the 3D pipeline state 4030 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 4030 commands are also able to selectively disable or bypass certain pipeline elements if those elements will not be used.

In some examples, 3D primitive 4032 command is used to submit 3D primitives to be processed by the 3D pipeline. Commands and associated parameters that are passed to the graphics processor via the 3D primitive 4032 command are forwarded to the vertex fetch function in the graphics pipeline. The vertex fetch function uses the 3D primitive 4032 command data to generate vertex data structures. The vertex data structures are stored in one or more return buffers. In some examples, 3D primitive 4032 command is used to perform vertex operations on 3D primitives via vertex shaders. To process vertex shaders, 3D pipeline 4022 dispatches shader execution threads to graphics processor execution units.

In some examples, 3D pipeline 4022 is triggered via an execute 4034 command or event. In some examples, a register write triggers command execution. In some examples execution is triggered via a 'go' or'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 4010 follows the media pipeline 4024 path when performing media operations. In general, the specific use and manner of programming for the media pipeline 4024 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 4024 is configured in a similar manner as the 3D pipeline 4022. A set of commands to configure the media pipeline state 4040 are dispatched or placed into a command queue before the media object commands 4042. In some examples, commands for the media pipeline state 4040 include data to configure the media pipeline elements that will be used to process the media objects. This includes data to configure the video decode and video encode logic within the media pipeline, such as encode or decode format. In some examples, commands for the media pipeline state 4040 also support the use of one or more pointers to "indirect" state elements that contain a batch of state settings.

In some examples, media object commands 4042 supply pointers to media objects for processing by the media pipeline. The media objects include memory buffers containing video data to be processed. In some examples, all media pipeline states must be valid before issuing a media object command 4042. Once the pipeline state is configured and media object commands 4042 are queued, the media pipeline 4024 is triggered via an execute command 4044 or an equivalent execute event (e.g., register write). Output from media pipeline 4024 may then be post processed by operations provided by the 3D pipeline 4022 or the media pipeline 4024. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 41 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 41 shows a program in a high-level language 4102 may be compiled using a first ISA compiler 4104 to generate first ISA binary code 4106 that may be natively executed by a processor with at least one first ISA core 4116. The processor with at least one first ISA core 4116 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 4104 represents a compiler that is operable to generate first ISA binary code 4106 (e.g., object code) that can, with or without additional linkage processing, be executed on the processor with at least one first ISA core 4116. Similarly, FIG. 41 shows the program in the high-level language 4102 may be compiled using an alternative ISA compiler 4108 to generate alternative ISA binary code 4110 that may be natively executed by a processor without a first ISA core 4114. The instruction converter 4112 is used to convert the first ISA binary code 4106 into code that may be natively executed by the processor without a first ISA core 4114. This converted code is not necessarily to be the same as the alternative ISA binary code 4110; however, the converted code will accomplish the general operation and be made up of instructions from the alternative ISA. Thus, the instruction converter 4112 represents software, firmware, hardware, or a combination thereof that, through emulation, simulation or any other process, allows a processor or other electronic device that does not have a first ISA processor or core to execute the first ISA binary code 4106.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

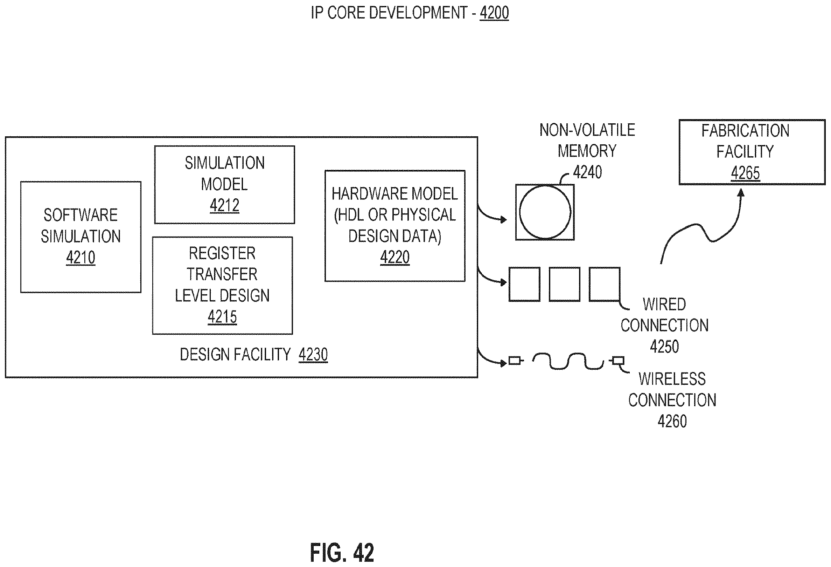

FIG. 42 is a block diagram illustrating an IP core development system 4200 that may be used to manufacture an integrated circuit to perform operations according to some examples. The IP core development system 4200 may be used to generate modular, re-usable designs that can be incorporated into a larger design or used to construct an entire integrated circuit (e.g., an SOC integrated circuit). A design facility 4230 can generate a software simulation 4210 of an IP core design in a high-level programming language (e.g., C/C++). The software simulation 4210 can be used to design, test, and verify the behavior of the IP core using a simulation model 4212. The simulation model 4212 may include functional, behavioral, and/or timing simulations. A register transfer level (RTL) design 4215 can then be created or synthesized from the simulation model 4212. The RTL design 4215 is an abstraction of the behavior of the integrated circuit that models the flow of digital signals between hardware registers, including the associated logic performed using the modeled digital signals. In addition to an RTL design 4215, lower-level designs at the logic level or transistor level may also be created, designed, or synthesized. Thus, the particular details of the initial design and simulation may vary.

The RTL design 4215 or equivalent may be further synthesized by the design facility into a hardware model 4220, which may be in a hardware description language (HDL), or some other representation of physical design data. The HDL may be further simulated or tested to verify the IP core design. The IP core design can be stored for delivery to a 3^{rd} party fabrication facility 4265 using non-volatile memory 4240 (e.g., hard disk, flash memory, or any non-volatile storage medium). Alternatively, the IP core design may be transmitted (e.g., via the Internet) over a wired connection 4250 or wireless connection 4260. The fabrication facility 4265 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   decoder circuitry to decode an instance of a single instruction, the single instruction to at least include a prefix and an opcode to indicate execution circuitry is to do perform a particular operation, wherein the prefix comprises at least two bytes and a second of the two bytes of the prefix is to provide most significant bits for at least register identifier; and
   execution circuitry to execute the decoded instance of the single according to the opcode to perform the particular operation.
2. The apparatus of example 1, wherein a first byte of the prefix is 0xD5.
3. The apparatus of any of examples 1-2, wherein the prefix is to be used in a 64-bit mode.
4. The apparatus of any of examples 1-3, wherein bit positions 6 and 2 of the second of the two bytes are to provide most significant bits for a register identifier.
5. The apparatus of example 4, wherein bit positions 5 and 1 of the second of the two bytes are to provide most significant bits for a register identifier.
6. The apparatus of any of examples 1-2, wherein the prefix is to indicate an opcode map of the single instruction in bit position 7 of the second of the two bytes of the prefix.
7. The apparatus of any of examples 1-6, wherein the prefix is further to indicate usage of a new data destination by the single instruction.
8. The apparatus of any of examples 1-2, wherein the prefix comprises four bytes and is to indicate a new data destination.
9. The apparatus of example 8, wherein bits 3-6 of a second payload byte of the prefix is to identify a new data destination.
10. The apparatus of example 1, wherein the prefix comprises four bytes and is to indicate a suppression of flag updates.
11. The apparatus of example 10, wherein the flags are overflow, carry, parity, adjust, sign, and zero.
12. A method comprising:
   translating an instance of a single instruction of a first instruction set architecture to one or more instructions of a second instruction set architecture, the single instruction to at least include a prefix and an opcode to indicate execution circuitry is to do perform a particular operation, wherein the prefix comprises at least two bytes and a second of the two bytes of the prefix is to provide most significant bits for at least register identifier;
   decoding the one or more instructions of the second instruction set architecture; and
   executing the decoded one or more instructions of the second instruction set architecture according to the opcode of the instance of single instruction of a first instruction set architecture.
13. The method of example 12, wherein the prefix is to be used in a 64-bit mode.
14. The method of any of examples 12-13, wherein bit positions 6 and 2 of the second of the two bytes are to provide most significant bits for a register identifier.
15. The method of example 14, wherein bit positions 5 and 1 of the second of the two bytes are to provide most significant bits for a register identifier.
16. The method of any of examples 12-15, wherein the prefix is to indicate an opcode map of the single instruction in bit position 7 of the second of the two bytes of the prefix.
17. The method of any of examples 12-16, wherein the prefix is further to indicate usage of a new data destination by the single instruction.
18. The method of any of examples 12-13, wherein the prefix comprises four bytes and is to indicate a new data destination.
19. The method of example 18, wherein bits 3-6 of a second payload byte of the prefix is to identify a new data destination.
20. The method of example 19, wherein the prefix comprises four bytes and is to indicate a suppression of flag updates for overflow, carry, parity, adjust, sign, and zero flags.
21. A system comprising:
   memory to store at least an instance of single instruction;
   decoder circuitry to decode the instance of a single instruction, the single instruction to at least include a prefix and an opcode to indicate execution circuitry is to do perform a particular operation, wherein the prefix comprises at least two bytes and a second of the two bytes of the prefix is to provide most significant bits for at least register identifier; and
   execution circuitry to execute the decoded instance of the single instruction according to the opcode to perform the particular operation.
22. The system of example 21, wherein a first byte of the prefix is 0xD5.
23. The system of any of examples 21-22, wherein bit positions 6 and 2 of the second of the two bytes are to provide most significant bits for a register identifier.
24. The system of any of examples 21-23, wherein the prefix is further to indicate usage of a new data destination by the single instruction.
25. The system of example 21, wherein the prefix comprises four bytes and is to indicate a suppression of flag updates for overflow, carry, parity, adjust, sign, and zero flags.
26. An apparatus comprising:
   decoder circuitry to decode an instance of a single instruction, the instance of the single instruction to at least include a prefix, one or more fields to identify a first source operand location, one or more fields to identify a second source operand location, and an opcode to indicate execution circuitry is to do push data from the identified first source operand and the identified second source operand onto a stack, wherein a payload of the prefix to provide most significant bits to identify at least one of the first and second source operand locations; and
   execution circuitry to execute the decoded instance of the single instruction according to the opcode to push data from the identified first source operand and the identified second source operand onto the stack.
27. The apparatus of example 26, wherein the first and second source operands are registers.
28. The apparatus of example 27, wherein the registers are 64-bit registers.
29. The apparatus of any of examples 26-28, wherein the prefix is to include two bits for each of the first and second source operands to be used as most significant bits of a register identifier.
30. The apparatus of any of examples 26-28, wherein the prefix comprises four bytes.
31. The apparatus of example 30, wherein bit position 18 of a payload of the prefix indicates support for a push pop acceleration.
32. The apparatus of example 31, wherein push pop acceleration is to be supported by a memory renaming circuitry to maintain load/store pair operations.
33. The apparatus of example 30, wherein bit position 20 of a payload of the prefix is to be set to 1.
34. The apparatus of any of examples 26-33, wherein the opcode is 0xFF.
35. The apparatus of any of examples 26-34, wherein the decoder circuitry is further to decode an instance of single instruction, the instance of the single instruction to at least include a prefix, one or more fields to identify a first destination operand location, one or more fields to identify a second destination operand location, and an opcode to indicate execution circuitry is to do pop data to the identified first destination operand and the identified destination source operand from the stack, wherein the prefix comprises at least two bytes and a second of the two bytes of the prefix is to provide most significant bits to identify at least one of the first and second destination operand locations; and
   the execution circuitry is to execute the decoded instruction according to the opcode to push data from the identified first source operand and the identified second source operand onto the stack.
36. An apparatus comprising:
   memory to store at least an instance of a single instruction;
   decoder circuitry to decode the instance of a single instruction, the instance of the single instruction to at least include a prefix, one or more fields to identify a first source operand location, one or more fields to identify a second source operand location, and an opcode to indicate execution circuitry is to do push data from the identified first source operand and the identified second source operand onto a stack, wherein a payload of the prefix to provide most significant bits to identify at least one of the first and second source operand locations; and
   execution circuitry to execute the decoded instance of the single instruction according to the opcode to push data from the identified first source operand and the identified second source operand onto the stack.
37. The system of example 36, wherein the first and second source operands are registers.
38. The system of example 37, wherein the registers are 64-bit registers.
39. The system of any of examples 36-38, wherein the prefix is to include two bits for each of the first and second source operands to be used as most significant bits of a register identifier.
40. The system of any of examples 31-38, wherein the prefix comprises four bytes.
41. The system of example 36, wherein bit position 18 of a payload of the prefix indicates support for a push pop acceleration.
42. The system of example 41, wherein push pop acceleration is to be supported by a memory renaming circuitry to maintain load/store pair operations.
43. The system of example 42, wherein bit position 20 of a payload of the prefix is to be set to 1.
44. The system of any of examples 36-43, wherein the opcode is 0xFF.
45. The system of any of examples 36-44, wherein the decoder circuitry is further to decode an instance of single instruction, the instance of the single instruction to at least include a prefix, one or more fields to identify a first destination operand location, one or more fields to identify a second destination operand location, and an opcode to indicate execution circuitry is to do pop data to the identified first destination operand and the identified destination source operand from the stack, wherein the prefix comprises at least two bytes and a second of the two bytes of the prefix is to provide most significant bits to identify at least one of the first and second destination operand locations; and
   the execution circuitry is to execute the decoded instruction according to the opcode to push data from the identified first source operand and the identified second source operand onto the stack.
46. A method comprising:
   translating an instance of single instruction of a first instruction set architecture to one or more instructions of a second instruction set architecture,, the instance of the single instruction to at least include a prefix, one or more fields to identify a first source operand location, one or more fields to identify a second source operand location, and an opcode to indicate execution circuitry is to do push data from the identified first source operand and the identified second source operand onto a stack, wherein a payload of the prefix to provide most significant bits to identify at least one of the first and second source operand locations; and
   decoding the one or more instructions of the second instruction set architecture; and
   executing the decoded one or more instructions of the second instruction set architecture according to the opcode of the instance of single instruction of a first instruction set architecture.
47. The method of example 46, wherein the first and second source operands are registers.
48. The method of example 47, wherein the registers are 64-bit registers.
49. The method of any of examples 46-48, wherein the prefix is to include two bits for each of the first and second source operands to be used as most significant bits of a register identifier.
50. The method of any of examples 46-49, wherein the decoder circuitry is further to decode an instance of single instruction, the instance of the single instruction to at least include a prefix, one or more fields to identify a first destination operand location, one or more fields to identify a second destination operand location, and an opcode to indicate execution circuitry is to do pop data to the identified first destination operand and the identified destination source operand from the stack, wherein the prefix comprises at least two bytes and a second of the two bytes of the prefix is to provide most significant bits to identify at least one of the first and second destination operand locations; and
   the execution circuitry is to execute the decoded instruction according to the opcode to push data from the identified first source operand and the identified second source operand onto the stack.
51. An apparatus comprising:
   decoder circuitry to decode an instance of single instruction, the instance of the single instruction to at least include a prefix, one or more fields to identify a first source operand location, one or more fields to identify a first source operand location, and an opcode to indicate execution circuitry is to conditionally perform a comparison of data from the identified first source operand to the identified second source operand based at least in part on an evaluation of a source condition code and update a flags register, wherein a payload of the prefix is to provide most significant bits to identify at least one of the first and second source operand locations; and
   execution circuitry to execute the decoded instance of the single according to the opcode to push data from the identified first source operand and the identified second source operand onto the stack.
52. The apparatus of example 51, wherein the first source operand is a register and the destination operand is a memory location.
53. The apparatus of example 51, wherein the first source operand and the second source operand are registers.
54. The apparatus of example 53, wherein the prefix is to include two bits for each of the first and second source operands to be used as most significant bits of a register identifier.
55. The apparatus of any of examples 51-54, wherein the source condition code is to be provided by the prefix.
56. The apparatus of any of examples 51-55, wherein when the comparison is to not be performed, a proper subset of flags of a flags register are to be inverted.
57. The apparatus of example 56, wherein the proper subset of flags includes an overflow flag, a sign flag, a zero flag, and a carry flag.
58. The apparatus of any of examples 51-57, wherein bit position 20 of a payload of the prefix is to be set to 1.
59. The apparatus of any of examples 51-58, wherein when the comparison is to be performed, data from the second source operand is subtracted from the first source operand and condition codes generated from the subtraction are to be stored in the flags register.
60. The apparatus of any of examples 51-59, wherein the source condition code encodes a condition to test for.
61. A system comprising:
   memory to store at least an instance of a single instruction;
   decoder circuitry to decode the instance of the single instruction, the instance of the single instruction to at least include a prefix, one or more fields to identify a first source operand location, one or more fields to identify a first source operand location, and an opcode to indicate execution circuitry is to conditionally perform a comparison of data from the identified first source operand to the identified second source operand based at least in part on an evaluation of a source condition code and update a flags register, wherein a payload of the prefix is to provide most significant bits to identify at least one of the first and second source operand locations; and
   execution circuitry to execute the decoded instance of the single according to the opcode to push data from the identified first source operand and the identified second source operand onto the stack.
62. The system of example 61, wherein the first source operand is a register and the destination operand is a memory location.
63. The system of example 61, wherein the first source operand and the second source operand are registers.
64. The system of example 63, wherein the prefix is to include two bits for each of the first and second source operands to be used as most significant bits of a register identifier.
65. The system of any of examples 61-64, wherein the source condition code is to be provided by the prefix.
66. The system of any of examples 61-65, wherein when the comparison is to not be performed, a proper subset of flags of a flags register are to be inverted.
67. The system of example 66, wherein the proper subset of flags includes an overflow flag, a sign flag, a zero flag, and a carry flag.
68. The system of any of examples 61-64, wherein bit position 20 of a payload of the prefix is to be set to 1.
69. The system of any of examples 61-68, wherein when the comparison is to be performed, data from the second source operand is subtracted from the first source operand and condition codes generated from the subtraction are to be stored in the flags register.
70. The system of any of examples 61-69, wherein the source condition code encodes a condition to test for.
71. A method comprising:
   translating an instance of single instruction of a first instruction set architecture to one or more instructions of a second instruction set architecture, the instance of the single instruction to at least include a prefix, one or more fields to identify a first source operand location, one or more fields to identify a first source operand location, and an opcode to indicate execution circuitry is to conditionally perform a comparison of data from the identified first source operand to the identified second source operand based at least in part on an evaluation of a source condition code and update a flags register, wherein a payload of the prefix is to provide most significant bits to identify at least one of the first and second source operand locations;
   decoding the one or more instructions of the second instruction set architecture; and
   executing the decoded one or more instructions of the second instruction set architecture according to the opcode of the instance of single instruction of a first instruction set architecture.
72. The method of example 71, wherein the first source operand is a register and the destination operand is a memory location.
73. The method of example 71, wherein the first source operand and the second source operand are registers.
74. The method of example 73, wherein the prefix is to include two bits for each of the first and second source operands to be used as most significant bits of a register identifier.
75. The method of any of examples 71-74, wherein when the comparison is to not be performed, a proper subset of flags of a flags register are to be inverted.
76. An apparatus comprising:
   decoder circuitry to decode an instance of single instruction, the instance of the single instruction to at least include a prefix, one or more fields to identify a first source operand location, one or more fields to identify a destination operand location, and an opcode to indicate execution circuitry is to conditionally move data from the identified first source operand to the identified destination operand based at least in part on evaluation of a condition code, wherein a payload of the prefix is to provide most significant bits to identify at least one of the first and second source operand locations; and
   execution circuitry to execute the decoded instance of the single according to the opcode.
77. The apparatus of example 76, wherein the first source operand is a memory location and the destination operand is a register.
78. The apparatus of example 76, wherein the first source operand is a register and the destination operand is a memory location.
79. The apparatus of any of examples 76-78, wherein the prefix is to include two bits for each of the first and second source operands to be used as most significant bits of a register identifier.
80. The apparatus of any of examples 76-79, wherein the condition code is to be provided by the opcode.
81. The apparatus of any of examples 76-80, wherein memory faults are to be suppressed when the evaluation of the condition code is false.
82. The apparatus of any of examples 76-81, wherein the instance of the single instruction is to identify a second source and the destination operand is a new data destination.
83. The apparatus of example 82, wherein bit position 20 of a payload of the prefix is to be set to 1.
84. A system comprising:
   memory to store at least an instance of single instruction;
   decoder circuitry to decode the instance of the single instruction, the instance of the single instruction to at least include a prefix, one or more fields to identify a first source operand location, one or more fields to identify a destination operand location, and an opcode to indicate execution circuitry is to conditionally move data from the identified first source operand to the identified destination operand based at least in part on evaluation of a condition code, wherein a payload of the prefix is to provide most significant bits to identify at least one of the first and second source operand locations; and
   execution circuitry to execute the decoded instance of the single according to the opcode.
85. The system of example 84, wherein the first source operand is a memory location and the destination operand is a register.
86. The system of example 84, wherein the first source operand is a register and the destination operand is a memory location.
87. The system of any of examples 84-86, wherein the prefix is to include two bits for each of the first and second source operands to be used as most significant bits of a register identifier.
88. The system of example 84, wherein the condition code is to be provided by the opcode.
89. The system of any of examples 84-88, wherein memory faults are to be suppressed when the evaluation of the condition code is false.
90. The system of any of examples 84-89, wherein the instance of the single instruction is to identify a second source and the destination operand is a new data destination.
91. The system of example 900, wherein bit position 20 of a payload of the prefix is to be set to 1.
92. An apparatus comprising:
   translating an instance of single instruction of a first instruction set architecture to one or more instructions of a second instruction set architecture,, the instance of the single instruction to at least include a prefix, one or more fields to identify a first source operand location, one or more fields to identify a destination operand location, and an opcode to indicate execution circuitry is to conditionally move data from the identified first source operand to the identified destination operand based at least in part on evaluation of a condition code, wherein a payload of the prefix is to provide most significant bits to identify at least one of the first and second source operand locations;
   decoding the one or more instructions of the second instruction set architecture; and
   executing the decoded one or more instructions of the second instruction set architecture according to the opcode of the instance of single instruction of a first instruction set architecture.
93. The method of example 92, wherein the first source operand is a memory location and the destination operand is a register.
94. The method of example 92, wherein the first source operand is a register and the destination operand is a memory location.
95. The method of any of examples 92-94, wherein the prefix is to include two bits for each of the first and second source operands to be used as most significant bits of a register identifier.
96. The method of any of examples 92-95, wherein the condition code is to be provided by the opcode.
97. The method of any of examples 92-96, wherein memory faults are to be suppressed when the evaluation of the condition code is false.
98. The method of any of examples 92-97, wherein the instance of the single instruction is to identify a second source and the destination operand is a new data destination.
99. The method of example 98, wherein bit position 20 of a payload of the prefix is to be set to 1.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder means for decoding an instance of single instruction, the instance of the single instruction to at least include a prefix, one or more fields to identify a first source operand location, one or more fields to identify a first source operand location, and an opcode to indicate execution circuitry is to conditionally perform a comparison of data from the identified first source operand to the identified second source operand based at least in part on an evaluation of a source condition code and update a flags register, wherein a payload of the prefix is to provide most significant bits to identify at least one of the first and second source operand locations; and
execution means for executing the decoded instance of the single according to the opcode to push data from the identified first source operand and the identified second source operand onto the stack.

2. The apparatus of claim 1, wherein the first source operand is a register and the destination operand is a memory location.

3. The apparatus of claim 1, wherein the first source operand and the second source operand are registers.

4. The apparatus of claim 3, wherein the prefix is to include two bits for each of the first and second source operands to be used as most significant bits of a register identifier.

5. The apparatus of any of claims 1-4, wherein the source condition code is to be provided by the prefix.

6. The apparatus of any of claims 1-5, wherein when the comparison is to not be performed, a proper subset of flags of a flags register are to be inverted.

7. The apparatus of claim 6, wherein the proper subset of flags includes an overflow flag, a sign flag, a zero flag, and a carry flag.

8. The apparatus of any of claims 1-7, wherein bit position 20 of a payload of the prefix is to be set to 1.

9. The apparatus of any of claims 1-8, wherein when the comparison is to be performed, data from the second source operand is subtracted from the first source operand and condition codes generated from the subtraction are to be stored in the flags register.

10. The apparatus of any of claims 1-9, wherein the source condition code encodes a condition to test for.

11. A method comprising:
translating an instance of single instruction of a first instruction set architecture to one or more instructions of a second instruction set architecture, the instance of the single instruction to at least include a prefix, one or more fields to identify a first source operand location, one or more fields to identify a first source operand location, and an opcode to indicate execution circuitry is to conditionally perform a comparison of data from the identified first source operand to the identified second source operand based at least in part on an evaluation of a source condition code and update a flags register, wherein a payload of the prefix is to provide most significant bits to identify at least one of the first and second source operand locations;
decoding the one or more instructions of the second instruction set architecture; and
executing the decoded one or more instructions of the second instruction set architecture according to the opcode of the instance of single instruction of a first instruction set architecture.

12. The method of claim 11, wherein the first source operand is a register and the destination operand is a memory location.

13. The method of claim 11, wherein the first source operand and the second source operand are registers.

14. The method of claim 13, wherein the prefix is to include two bits for each of the first and second source operands to be used as most significant bits of a register identifier.

15. Machine-readable storage including machine-readable instructions, when executed, to implement a method or realize an apparatus as claimed in any preceding claim.
